(19) **Europäisches Patentamt**
**European Patent Office**
**Office européen des brevets**

(11) **EP 3 774 998 B1**

(12) **EUROPÄISCHE PATENTSCHRIFT**

(45) Veröffentlichungstag und Bekanntmachung des Hinweises auf die Patenterteilung:
**10.01.2024 Patentblatt 2024/02**

(21) Anmeldenummer: **19713416.6**

(22) Anmeldetag: **21.03.2019**

(51) Internationale Patentklassifikation (IPC):
**C08G 83/00** (2006.01)   **C08B 37/16** (2006.01)
**C08G 65/329** (2006.01)   **C08G 65/333** (2006.01)
**C08K 9/04** (2006.01)   **C08K 9/06** (2006.01)
**C08J 3/24** (2006.01)   **C08F 8/00** (2006.01)

(52) Gemeinsame Patentklassifikation (CPC):
**C08G 83/007; C08B 37/0015; C08K 9/06; C08L 5/16**

(86) Internationale Anmeldenummer:
**PCT/EP2019/057062**

(87) Internationale Veröffentlichungsnummer:
**WO 2019/185441 (03.10.2019 Gazette 2019/40)**

(54) **NANOSTRUKTURIERTE KOMPOSITMATERIALIEN MIT SELBSTHEILENDEN EIGENSCHAFTEN**

NANOSTRUCTURED COMPOSITE MATERIALS WITH SELF-HEALING PROPERTIES

MATÉRIAUX COMPOSITES NANOSTRUCTURÉS PRÉSENTANT DES PROPRIÉTÉS AUTOCICATRISANTES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.03.2018 DE 102018107702**

(43) Veröffentlichungstag der Anmeldung:
**17.02.2021 Patentblatt 2021/07**

(73) Patentinhaber: **INM - Leibniz-Institut für Neue Materialien
gemeinnützige GmbH
66123 Saarbrücken (DE)**

(72) Erfinder:
• **BECKER-WILLINGER, Carsten
66130 Saarbrücken (DE)**
• **ALI, Budiman
66117 Saarbrücken (DE)**
• **BRUNKE, Jessica
9014 St. Gallen (CH)**
• **WENZ, Gerhard
66123 Saarbrücken (DE)**
• **HERO, Devid
66679 Losheim am See (DE)**

(74) Vertreter: **Patentanwälte Gierlich & Pischitzis Partnerschaft mbB
Gerbermühlstraße 11
60594 Frankfurt am Main (DE)**

(56) Entgegenhaltungen:
**WO-A1-2016/202906**

• **LAN JIANG ET AL: "One-Pot Synthesis and Characterization of Polyrotaxane-Silica Hybrid Aerogel", ACS MACRO LETTERS, Bd. 6, Nr. 3, 6. März 2017 (2017-03-06), Seiten 281-286, XP055599490, ISSN: 2161-1653, DOI: 10.1021/acsmacrolett.7b00014**
• **KAZUAKI KATO ET AL: "Synthesis, structure, and mechanical properties of silica nanocomposite polyrotaxane gels", BEILSTEIN JOURNAL OF ORGANIC CHEMISTRY, Bd. 11, 16. November 2015 (2015-11-16), Seiten 2194-2201, XP055599545, DOI: 10.3762/bjoc.11.238 in der Anmeldung erwähnt**

EP 3 774 998 B1

- **GOTO TAKU ET AL: "Thermally conductive tough flexible elastomers as composite of slide-ring materials and surface modified boron nitride particles via plasma in solution", APPLIED PHYSICS LETTERS, A I P PUBLISHING LLC, US, Bd. 112, Nr. 10, 5. März 2018 (2018-03-05) , XP012226822, ISSN: 0003-6951, DOI: 10.1063/1.5020325 [gefunden am 2018-03-05] & TAKU GOTO ET AL: "Development of High Thermally Conductive Flexible Elastomer as a Composite Material ofSlide-Ring Material and Plasma-Surface-Modifi ed Boron Nitride Particles:Effect of Plasma-Surface Modifi cation of Boron Nitride Particles", NIPPON KINZOKU GAKKAISHI - JOURNAL OF THE JAPAN INSTITUTE OF METALS., Bd. 82, Nr. 10, 1. Oktober 2018 (2018-10-01), Seiten 403-407, XP055599547, JP ISSN: 0021-4876, DOI: 10.2320/jinstmet.JAW201809**
- **KHADIJEH SOLEIMANI ET AL: "Preparation of new GO-based slide ring hydrogel through a convenient one-pot approach as methylene blue absorbent", CARBOHYDRATE POLYMERS., Bd. 187, 31. Januar 2018 (2018-01-31), Seiten 94-101, XP055599896, GB ISSN: 0144-8617, DOI: 10.1016/j.carbpol.2018.01.084**
- **GERGELY KALI ET AL: "One Pot Synthesis of a Polyisoprene Polyrotaxane and Conversion to a Slide-Ring Gel", MACROMOLECULAR RAPID COMMUNICATIONS, Bd. 37, Nr. 1, 1. Januar 2016 (2016-01-01) , Seiten 67-72, XP055462564, DE ISSN: 1022-1336, DOI: 10.1002/marc.201500548 in der Anmeldung erwähnt**

**Beschreibung**

Die Erfindung betrifft eine Zusammensetzung für ein selbstheilendes Kompositmaterial auf der Basis von vernetzten Polyrotaxanen, ein selbstheilendes Kompositmaterial und seine Verwendung .

Stand der Technik

Selbstheilende Materialien besitzen ein breites Anwendungspotential z.B. für Lacke in der Automobilindustrie, für Beschichtungen von Smartphones u.ä.. Dabei ist es von besonderem Interesse Materialien einzusetzen, deren Selbstheilung bei Temperaturen nur wenig oberhalb der obersten Anwendungstemperatur erfolgt. Gleichzeitig müssen die Materialien aber so stabil sein, dass sie den normalen Gebrauch des betreffenden Bauteils oder Gegenstandes ohne Einschränkungen ermöglichen, d.h. sie dürfen beispielsweise im Anwendungstemperaturbereich nicht unbeabsichtigt zu fließen beginnen. Zudem ist eine ausreichende Bewitterungsstabilität der Materialien erforderlich.

Bekannte Ansätze zur Erzeugung von selbstheilenden Materialien beruhen oft auf reversibel formbaren chemischen Bindungen.

[A. Rekondo, R. Martin, A. R. de Luzuriaga, G. Cabañero, H. J. Grande, und I. Odriozola, "Catalyst-free room-temperature self-healing elastomers based on aromatic disulfide metathesis", Mater. Horiz., Bd. 1, Nr. 2, S. 237-240, Feb. 2014.] setzen Elastomere ein, die über aromatische Disulfid-Brücken vernetzt sind. Derartige Verbrückungen können bei Raumtemperatur reversible Metathese-Reaktionen ausführen und ermöglichen die Wiederverbindung von zuvor zerschnittenen Teilstücken durch einfaches Zusammenfügen. Die Schlüsselverbindungen sind allerdings nicht bewitterungsstabil. Nanopartikel sind in den Systemen keine enthalten. Gleiches gilt für die Polyurethansysteme in [R. Martin, A. Rekondo, A. R. de Luzuriaga, G. Cabañero, H. J. Grande, und I. Odriozola, "The processability of a poly(urea-urethane) elastomer reversibly crosslinked with aromatic disulfide bridges", J. Mater. Chem. A, Bd. 2, Nr. 16, S. 5710-5715, März 2014.].

In [A. Susa, R. K. Bose, A. M. Grande, S. van der Zwaag, und S. J. Garcia, "Effect of the Dianhydride/Branched Diamine Ratio on the Architecture and Room Temperature Healing Behavior of Polyetherimides", ACS Appl. Mater. Interfaces, Bd. 8, Nr. 49, S. 34068-34079, Dez. 2016.] werden Polyimidmaterialien beschrieben, bei denen die Diamin-Komponenten Fettsäure-Seitengruppen tragen. Diese Molekülbausteine bewirken beim Zusammenfügen vorher zerschnittener Teilstücke, dass durch Interdiffusion an der Grenzfläche zwischen beiden Stücken eine neue Verbindung entsteht. Dieser Ansatz kommt ohne reversible chemische Bindungen aus und funktioniert bei Raumtemperatur. Die resultierenden Materialien sind vergleichsweise weich, um die Interdiffusion zu ermöglichen, und nicht bewitterungsstabil.

[Y. Amamoto, J. Kamada, H. Otsuka, A. Takahara, und K. Matyjaszewski, "Repeatable Photoinduced Self-Healing of Covalently Cross-Linked Polymers through Reshuffling of Trithiocarbonate Units", Angew. Chem. Int. Ed., Bd. 50, Nr. 7, S. 1660-1663, Feb. 2011.] beschreiben Materialien, die die Verbindungsklasse der Trithiocarbonate enthalten. Diese Verbindungen können unter Einwirkung von UV-Licht zu Umlagerungsreaktionen angeregt werden, und so ein Selbstheilungsverhalten bewirken. Die Materialien sind wegen der UV-Empfindlichkeit der Trithiocarbonatgruppe nicht bewitterungsstabil und weisen keine gute mechanische Stabilität auf.

Der Ansatz von [G. A. Williams, R. Ishige, O. R. Cromwell, J. Chung, A. Takahara, und Z. Guan, "Mechanically Robust and Self-Healable Superlattice Nanocomposites by Self-Assembly of Single-Component "Sticky" Polymer-Grafted Nanoparticles", Adv. Mater., Bd. 27, Nr. 26, S. 3934-3941, Juli 2015.] verwendet sich selbst-anordnende Nanopartikel mit einer Oberflächenfunktionalisierung aus "klebrigen" kurzkettigen Polymeren (z.B. Polyamide). Die Komposite werden durch Wasserstoffbrückenbindungen zwischen benachbarten oberflächen-gebundenen Polyamidmolekülen zusammengehalten. Daher resultiert auch das beobachtete Selbstheilungsverhalten. Die erhaltenen Komposite sind aufgrund der Kurzkettigkeit der Polymere weich und für praktische Anwendungen daher ungeeignet.

Polyrotaxane

Polyrotaxane sind Polymere mit supramolekularer Struktur. Aufgebaut sind sie aus einer Polymerhauptkette bei der unter bestimmten Reaktionsbedingungen ringförmige Moleküle (z.B. Cyclodextrine) aufgefädelt werden. Um ein späteres Abgleiten der Ringe von der Polymerhauptkette zu vermeiden, werden in bestimmten Abständen Stoppermoleküle mit raumerfüllenden Seitengruppen entlang bzw. am Ende der Hauptkette eingefügt. Zwischen den Stoppermolekülen sind die ringförmigen Moleküle auf der Hauptkette prinzipiell frei beweglich. Nachträglich können die vorgebildeten Polymere mit Vernetzermolekülen durch kovalente Brücken zwischen ringförmigen Molekülen benachbarter Polymere querverbunden werden. So entstehen sogenannte "Slide-ring-Gele". Derartige Systeme sind im Nachfolgenden aufgeführt.

Die Hauptketten der Polyrotaxane sind aus ganz bestimmten Polymeren aufgebaut und werden über einen aufwändigeren mehrstufigen Prozess erzeugt. Die zunächst genannten Stellen beschreiben reine Polymersysteme, die keine weiteren Bestandteile, wie z. B. Nanopartikel enthalten.

[K. Kato und K. Ito, "Dynamic transition between rubber and sliding states attributed to slidable cross-links", Soft Matter, Bd. 7, Nr. 19, S. 8737-8740, Sep. 2011.]

[X. Li, H. Kang, J. Shen, L. Zhang, T. Nishi, und K. Ito, "Miscibility, intramolecular specific interactions and mechanical properties of a DGEBA based epoxy resin toughened with a sliding graft copolymer", Chin J Polym Sci, Bd. 33, Nr. 3, S. 433-443, März 2015.]

[K. Kato, T. Yasuda, und K. Ito, "Peculiar elasticity and strain hardening attributable to counteracting entropy of chain and ring in slide-ring gels", Polymer, Bd. 55, Nr. 10, S. 2614-2619, Mai 2014.]

[K. Kato, T. Mizusawa, H. Yokoyama, und K. Ito, "Polyrotaxane Glass: Peculiar Mechanics Attributable to the Isolated Dynamics of Different Components", J. Phys. Chem. Lett., Bd. 6, Nr. 20, S. 4043-4048, Okt. 2015.]

[J. Araki, T. Kataoka, und K. Ito, "Preparation of a "sliding graft copolymer", an organic solvent-soluble polyrotaxane containing mobile side chains, and its application for a cross-linked elastomeric supramolecular film", Soft Matter, Bd. 4, Nr. 2, S. 245-249, Jan. 2008.]

EP 02123681 B1 [Advanced Softmaterials] beansprucht ein Polyrotaxan umfassend ein Polyrotaxan, welches durch einen geeigneten Stimulus (z.B. Wärme im Bereich zwischen 5 °C und 90 °C) einen unvernetzten bzw. einen vernetzten Zustand einnehmen kann. Der Linearteil des Moleküls besteht aus Polyethylenglykol, Polyisopren, Polyisobutylen oder Polybutadien. Stoppermoleküle sind Adamantan oder substituierte Benzolgruppen. Nanopartikel sind in den Materialien nicht enthalten.

Nanopartikel als Verstärkungselemente in Polyrotaxanen sind dagegen in den folgenden Stellen aufgeführt.

[K. Kato, D. Matsui, K. Mayumi, und K. Ito, "Synthesis, structure, and mechanical properties of silica nanocomposite polyrotaxane gels", Beilstein Journal of Organic Chemistry, Bd. 11, Nr. 1, S. 2194-2201, Nov. 2015.]

[L. Jiang, K. Kato, K. Mayumi, H. Yokoyama und K. Ito, "One-Pot Synthesis and Characterization of Polyrotaxane-Silica Hybrid Aerogel", ACS Macro Letters, Bd. 6, Nr. 3, S. 281-286, 6. März 2017.]

[T. Goto, M. Lida, H. Tan, C. Liu, K. Mayumi, R. Maeda, K. Kitahara, K. Hatakeyama, T. Ito, Y. Shimizu, H. Yokoyama, K. Kimura, K. Ito, Y. Hakuta and K. Terashima, " Thermally conductive tough flexible elastomers as composite of slide-ring materials and surface modified boron nitride particles via plasma in solution", APPLIED PHYSICS LETTERS, Bd. 112, Nr. 10, S.1-5, 5. März 2018.1

[K. Soleimani, A. D. Tehrani, M. Adeli, "Preparation of new GO-based slide ring hydrogel through a convenient one-pot approach as methylene blue absorbent", Carbohydrate Polymers, Bd. 187, S. 94-101, 31. Januar 2018.]

EP 2397527 A1 [Nissan Motors und Advanced Softmaterials] beschreibt ein Beschichtungsmaterial aus Polyrotaxan und Mikropartikeln. Das Polyrotaxan besitzt eine Caprolactongruppe. Die Mikropartikel sind kleiner als 380 nm und umfassen Silica sowie Aluminiumoxid. Die Nanopartikel sind nicht weiter oberflächenmodifiziert. Selbstheilungsverhalten ist nicht beschrieben.

EP 2787010 A1 [LG Chem] beschreibt ein Polyrotaxan, eine daraus abgeleitete photohärtbare Beschichtung mit exzellenten mechanischen und selbstheilenden Eigenschaften. Das Polyrotaxan ist Polyester-basiert. Nanopartikel sind nicht enthalten. Ähnliche Verbindungen verwendet EP 2857440 A1 [LG Chem] für eine Hartbeschichtung, welche anorganische Mikropartikel enthält. Dazu gehörig ist auch EP 2949709 A1 [LG Chem] welches eine entsprechend beschichtete Kunststofffolie umfasst, wobei neben dem Polyrotaxan anorganische Nanopartikel aus Silica, Aluminiumoxid, Titandioxid oder Zinkoxid enthalten sind. Die Nanopartikel sind allerdings nicht oberflächenfunktionalisiert.

Daneben wurden auch einstufige und damit weniger aufwändige Reaktionen im Rahmen heterogener Polymerisationsreaktionen mit wasserunlöslichen Monomeren in wässriger Phase zur Herstellung von Polyrotaxanen untersucht. Dabei gibt es Reaktionen unter Verwendung von zwei verschiedenen Monomeren gleichzeitig (z.B. Isopren und Styrol). Man verwendet wasserlösliche Radikalstarter, die die Reaktion analog einer Emulsionspolymerisation starten. Kleine Moleküle wie z.B. Isopren werden zuvor durch die in der Reaktionsmischung befindlichen Cyclodextrine komplexiert. Damit ist der Gehalt der aufgefädelten Cyclodextrine durch die Konzentration an Isopren vorbestimmt. Beispiele für eine derartige Vorgehensweise im Rahmen einer Emulsionspolymerisation sind WO1997009354A1 [BASF AG], WO2001038408A2 [Bayer AG] sowie WO2016202906A1 [Universität des Saarlandes]. Trotz der Verwendung von Monomeren mit vinylischen Gruppen in Kombination mit Cyclodextrinen im Rahmen einer Emulsionspolymerisation ist in den ersten beiden Anmeldungen die Bildung von Polyrotaxanen nicht nachgewiesen worden. Beide Anmeldungen erwähnen auch Nanopartikel nicht. Um die Bewegungsmöglichkeiten der Cyclodextrine entlang der Hauptkette weiter zu erhöhen sind sogenannte Terpolymere entwickelt worden. Dabei werden im Rahmen der heterogenen radikalischen Polymerisation in Wasser neben Isopren und Styrol auch durch Cyclodextrin nicht komplexierbare Monomere wie z.B. Methylacrylat eingesetzt [unveröffentlichte Anmeldung Aktenzeichen EP16205619.6, Universität des Saarlandes]. In beiden Anmeldungen der Universität des Saarlandes ist die Verwendung von Nanopartikeln in den Unteransprüchen zwar erwähnt, aber in den Beispielen nicht ausgeführt.

Aufgabe

Aufgabe der Erfindung ist es, ein Material mit selbstheilenden Eigenschaften bereitzustellen, welches mechanisch robust, sowie intrinsisch bewitterungsstabil ist. Bevorzugt handelt es sich außerdem um ein transparentes Material. Aufgabe ist es außerdem ein Verfahren zur Herstellung des Materials und eine Verwendung anzugeben.

Lösung

Diese Aufgabe wird durch die Erfindungen mit den Merkmalen der unabhängigen Ansprüche gelöst. Vorteilhafte Weiterbildungen der Erfindungen sind in den Unteransprüchen gekennzeichnet. Der Wortlaut sämtlicher Ansprüche wird hiermit durch Bezugnahme zum Inhalt dieser Beschreibung gemacht. Die Erfindungen umfassen auch alle sinnvollen und insbesondere alle erwähnten Kombinationen von unabhängigen und/oder abhängigen Ansprüchen.

Die Aufgabe wird durch eine Zusammensetzung für ein selbstheilendes Kompositmaterial gelöst umfassend:

a) mindestens ein Polyrotaxan umfassend ein Copolymer und darauf aufgefädelte ringförmige Moleküle, wobei mindestens ein ringförmiges Molekül mindestens eine funktionelle Gruppen (A) aufweist, wobei das Polyrotaxan mindestens ein ringförmiges Molekül, welches auf ein Copolymer aufgefädelt ist, wobei das Copolymer ein nicht ionisches Copolymer ist und mindestens (a) strukturelle Einheiten abgeleitet von einem ersten polymerisierbaren Monomer mit einer Stoppergruppe und mindestens (b) strukturelle Einheiten abgeleitet von einem zweiten polymerisierbaren Monomer, aufweist, wobei die strukturellen Einheiten abgeleitet von dem ersten Monomer mit einer Stoppergruppe mindestens teilweise an den Enden der Polymerkette des Copolymers angeordnet sind, und die Stopper gruppen das ringförmige Molekül davon abhalten, sich vom Copo lymer abzulösen;

b) mindestens ein organisch modifiziertes anorganisches Hybridmaterial, welches funktionelle Gruppen (B) umfasst oder mindestens eine Art von oberflächenmodifizierten anorganischen Partikeln, welche an ihrer Oberfläche funktionelle Gruppen (B) aufweisen;

wobei mindestens zwei der aufgefädelten ringförmigen Moleküle durch Verknüpfung der funktionellen Gruppen (A) und (B) vernetzt werden können,
wobei die Zusammensetzung einen Vernetzer umfasst, welcher mindestens zwei funktionelle Gruppen umfasst, welche eine kovalente Bindung zu den ringförmigen Molekülen bilden können.

Die strukturellen Einheiten abgeleitet von dem ersten Monomer mit einer Stoppgruppe liegen bevorzugt in einer Menge von 0.1 mol% bis 20 mol% bezogen auf 100 mol% der Gesamtzahl an strukturellen Einheiten des Copolymers.
Das Copolymer, auf welchem die ringförmigen Moleküle des Polyrotaxans aufgefädelt sind, ist ein nicht-ionisches Copolymer und das erste und zweite Monomer sind nicht-ionische Monomere. Bevorzugt in Bezug auf Polyrotaxane wird als "nicht-ionisches Monomer" ein Monomer bezeichnet, welche keine geladenen funktionellen Gruppen aufweist, wenn es in wässriger Lösung mit einem pH von 2 bis 11 vorliegt, bevorzugt bei einem pH von 3 bis 10. Der Ausdruck "nicht-ionisches Monomer" wie vorliegend verwendet umfasst zum Beispiel Monomere, welche nur strukturelle Einheiten oder funktionelle Gruppen enthalten, welche keine Ionen bilden können, wie beispielsweise Isopren oder Methylmethacrylat. Zusätzlich kann der Ausdruck "nicht-ionisches Monomer" auch Monomere umfassen, welche eine funktionelle Gruppe aufweisen, welche prinzipiell in der Lage ist, Ionen zu bilden, wie beispielsweise eine Karbonsäuregruppe, aber welche mehrheitlich, d.h. >50 mol%, in einem ungeladenen Zustand ist, wenn sie in einer wässrigen Lösung mit einem pH von <4 vorliegt, bevorzugt <3, insbesondere <2. Beispiele für solche nicht-ionischen Monomere, welche in einem solchen pH-Bereich ungeladen vorliegen, sind Acrylsäure und davon abgeleitete Verbindungen mit einer Karbonsäuregruppe wie zum Beispiel Methacrylsäure. Bevorzugt bezeichnet der Ausdruck "nicht-ionisches Copolymer" ein Copolymer, welches im Wesentlichen keine strukturellen Einheiten umfasst, welche geladen vorliegen, wenn sie in einer wässrigen Lösung mit einem pH-Wert von 2 bis 11 vorliegen, bevorzugt von 3 bis 10. Der Ausdruck "nicht-ionisches Copolymer" wie vorliegend verwendet, umfasst beispielsweise Copolymere mit nur strukturellen Einheiten und/oder funktionellen Gruppen, welche nicht in der Lage sind Ionen zu bilden, wie beispielsweise strukturelle Einheiten abgeleitet von Isopren oder Methylmethacrylat. Zusätzlich kann der Ausdruck "nicht-ionisches Copolymer" auch Copolymer mit strukturellen Einheiten und/oder funktionellen Gruppen, welche prinzipiell in der Lage sind Ionen zu bilden, wie beispielsweise eine Karbonsäuregruppe, aber welche mehrheitlich, d.h. >50 mol%, in einem ungeladenen Zustand sind, wenn sie in einer wässrigen Lösung mit einem pH von <4 vorliegt, bevorzugt <3, insbesondere <2, vorliegen. Beispiele für strukturelle Einheiten, welche in diesem pH-Bereich ungeladen vorliegen, sind strukturelle Einheiten, abgeleitet von Acrylsäure und Derivate davon mit einer Karbonsäuregruppe, wie beispielsweise Methacrylsäure. Ein nicht-ionisches Copolymer mit im Wesentlichen keine strukturellen Einheiten mit funktionellen Gruppen, welche geladen sind, wenn sie in wässriger Lösung mit einem pH-Wert von 2 bis 11, bevorzugt 3 bis 10 vorliegen, sowie gegebenenfalls Gruppen welche mehrheitlich geladen vorliegen, wenn sie in einer wässrigen Lösung mit einem pH von <4 vorliegt, bevorzugt <3, insbesondere <2, vorliegen, bedeutet bevorzugt, dass solche strukturellen Einheiten mit solchen funktionellen Gruppen nur in geringer Menge vorhanden sind. Beispielsweise können solche strukturellen Einheiten mit funktionellen Gruppen, welche geladen vorliegen, wenn sie in wässriger Lösung mit einem pH-Wert von 2 bis 11, bevorzugt von 3 bis 10, vorliegen, von Verunreinigungen der zu copolymerisierenden Monomere herrühren oder von Reaktanden, welche in der Copolymerisationsreaktion verwendet werden, beispielsweise Starter, Katalysatoren und/oder Kettenreglern oder auch von ionischen Monomeren, welche absichtlich zur Reaktion zugegeben wurden. Bevorzugt liegt der Anteil an strukturellen Einheiten mit funktionellen Gruppen, welche geladen sind, wenn sie in wässriger Lösung mit einem pH-Wert von 2 bis 11, bevorzugt von 3 bis 10, vorliegen, unter 5 mol%, besonders bevorzugt unter 3 mol%, ganz besonders bevorzugt unter 2 mol%, insbesondere unter 1 mol%, jeweils bezogen auf 100 mol% der strukturellen Einheiten des Copolmyers. Dies gilt entsprechend für die Gruppen, welche in einer wässrigen Lösung mit einem pH von <4 vorliegt, bevorzugt <3, insbesondere <2, mehrheitlich geladen vorliegen.

In einer bevorzugten Ausführungsform der Erfindung ist das Copolymer des Polyrotaxans ein statistisches Copolymer, bei dem die strukturellen Einheiten abgeleitet vom ersten polymerisierbaren Monomer mit der Stoppgruppe zufällig in der Polymerkette angeordnet sind, mindestens teilweise zwischen den Enden der Polymerkette.

In einer Ausführungsform der Erfindung ist der Gehalt an strukturellen Einheiten abgeleitet von dem ersten Monomer mit einer Stoppergruppe im Bereich von 0.5 mol% bis 18 mol%, bevorzugt im Bereich von 1 mol% bis 16 mol%, besonders bevorzugt 2 mol% bis 15 mol%, ganz besonders bevorzugt von 3 mol% bis 12 mol%, jeweils bezogen auf 100 mol% der gesamten Anzahl an strukturellen Einheiten des Copolymers.

In einer anderen Ausführungsform der Erfindung ist das Copolymer ein Blockcopolymer umfassend einen Block A umfassend wiederholende Einheiten abgeleitet vom ersten polymerisierbaren Monomer mit der Stoppergruppe und einem Block B umfassend wiederholende Einheiten abgeleitet vom zweiten polymerisierbaren Monomer und einen Block C umfassend wiederholende Einheiten abgeleitet von einem dritten Monomer mit einer Stoppergruppe, wobei diese wiederholenden Einheiten gleich oder verschieden zu den wiederholenden Einheiten abgeleitet vom ersten Monomer sind, und in dem Blockcopolymer Block B zwischen Block A und Block C angeordnet ist und das ringförmige Molekül auf Block B aufgefädelt ist.

Der Anteil der strukturellen Einheiten abgeleitet von dem ersten und dritten Monomer liegt bevorzugt in einem Bereich von 0.1 mol% bis 20 mol% bezogen auf 100% mol% der strukturellen Einheiten des Copolymers. Falls die wiederholenden Einheiten abgeleitet von dem dritten Monomer in Block C identisch mit den wiederholenden Einheiten in Block A sind, kann Block C auch als Block A bezeichnet werden.

In einer Ausführungsform der Erfindung ist der gemeinsame Gehalt an strukturellen Einheiten abgeleitet von dem ersten Monomer und abgeleitet von dem dritten Monomer im Bereich von 0.3 mol% bis 18 mol%, bevorzugt im Bereich von 0,5 mol% bis 14 mol%, besonders bevorzugt 0,7 mol% bis 10 mol%, ganz besonders bevorzugt von 0,9 mol% bis 5 mol%, insbesondere 1 mol% bis 2,5 mol%, jeweils bezogen auf 100 mol% der gesamten Anzahl an strukturellen Einheiten des Copolymers.

In einer Ausführungsform der Erfindung ist das ringförmige Molekül auf der Hauptkette des Copolymers aufgefädelt. Dies bedeutet, dass das Polyrotaxan bevorzugt ein Hauptkettenrotaxan ist.

Als ringförmige Moleküle der Polyrotaxane können die für Polyrotaxane üblichen ringförmigen Moleküle verwendet werden. Dies können beispielsweise Kronenether, Cucurbiturile, Calixarene, zyklische Amide und/oder ein Übergangsmetallkomplex sein. Besonders bevorzugt ist das ringförmige Molekül ausgewählt aus der Gruppe umfassend Cyclodextrine oder Cyclodextrinderivate, sowie Kombinationen davon. Cyclodextrine und Cyclodextrinderivate können auch in Kombination, beispielsweise am gleichen Polyrotaxan vorliegen.

In einer Ausführungsform der Erfindung ist das Cyclodextrin oder Cyclodextrinderivat ausgewählt aus der Gruppe bestehend aus nativem Cyclodextrin, methyliertem Cyclodextrin, acetyliertem Cyclodextrin, hydroyethyliertem Cyclodextrin, Hydroxypropyliertem Cyclodextrin, einem kationischen Cyclodextrinderivat, einem anionischen Cyclodextrinderivat, glycosyliertem Cyclodextrin, oder eine Kombination dieser Verbindungen, wobei soweit nicht schon vorhanden die Cyclodextrine oder Cyclodextrinderivate mindestens eine funktionelle Gruppe (A) aufweisen.

In einer weiteren Ausführungsform der Erfindung ist das Cyclodextin oder Cyclodextrinderivat ausgewählt aus der Gruppe bestehend aus $\alpha$-Cyclodextrin, zufällig methyliertes $\alpha$-Cyclodextrin, $\beta$-Cyclodextrin, zufällig methyliertes $\beta$-Cyclodextrin (RAMEB), Hydroxypropyl-$\beta$-cyclodextrin, Acetyl-$\beta$-cyclodextrin, Heptakis(2,6-di-O-methyl)-$\beta$-cyclodextrin, Carboxymethyl-$\beta$-cyclodextrin, Succinyl-$\beta$-cyclodextrin, Sulfobutyliertes $\beta$-cyclodextrin, $\beta$-Cyclodextrinsulfat, 6-Monodeoxy-, succinyl-B-cyclodextrin, (2-carboxyethyl)-B-cyclodextrin, $\beta$-cyclodextrin, sulfobutylated $\beta$-cyclodextrin, $\beta$-cyclodextrin sulfate, 6-monodeoxy-6-monoamino-$\beta$-cyclodextrinhydrochlorid, Heptakis-(6-deoxy-6-amino)-$\beta$-cyclodextrin, (2-Hydroxy-3-N,N,N-trimethylamino)propyl-$\beta$-cyclodextrin, Heptakis(2,6-tri-O-methyl)-$\beta$-cyclodextrin, Monoamino-$\beta$-cyclodextrin, Sulfobutyl-$\beta$-cyclodextrin, $\gamma$-Cyclodextrin, zufällig methyliertes $\gamma$-Cyclodextrin, 2-Hydroxy-3-N,N,N-trimethylaminopropyl-$\beta$-Cyclodextrinhalogenid, Salze der genannten Verbindungen und jede Kombination davon, wobei soweit nicht schon vorhanden die Cyclodextrine oder Cyclodextrinderivate mindestens eine funktionelle Gruppe (A) aufweisen.

In einer weiteren Ausführungsform der Erfindung ist das Cyclodextrin oder Cyclodextrinderivat ein ionisches Cyclodextrin oder ionisches Cyclodextrinderivat ausgewählt aus der Gruppe bestehend aus Carboxylmethyl-$\alpha$-cyclodextrin Natriumsalz, Carboxylmethyl-$\beta$-cyclodextrin Natriumsalz, Succinyl-$\alpha$-cyclodextrin, Succinyl-$\beta$-cyclodextrin, Succinyl-$\gamma$-cyclodextrin, (2-Carboxyethyl)-$\alpha$-cyclodextrin, (2-Carboxyethyl)-$\beta$-cyclodextrin, $\alpha$-Cyclodextrinphosphat Natrium-

salz, β-Cyclodextrinphosphat Natriumsalz, γ-Cyclodextrinphosphat Natriumsalz, Sulfobutyliertes α-Cyclodextrin Natriumsalz, Sulfobutyliertes β-Cyclodextrin Natriumsalz, Sulfobutyliertes γ-Cyclodextrin Natriumsalz, α-Cyclodextrinsulfat Natriumsalz, β-Cyclodextrinsulfat Natriumsalz, γ-Cyclodextrin Natriumsalz, 6-monodeoxy-6-monoamino-a-cyclodextrinhydrochlorid, Heptakis(6-deoxy-6-amino)-β-cyclodextrinheptahydrochlorid, Octakis(6-deoxy-6-amino)-γ-cyclodextrinoctahydrochlorid, (2-hydroxy-3-N,N,N-trimethylamino)propyl-β-cyclodextrinchlorid und jede Komboniation dieser Verbindungen, wobei soweit nicht schon vorhanden die Cyclodextrine oder Cyclodextrinderivate mindestens eine funktionelle Gruppe (A) aufweisen. In einer besonders bevorzugten Ausführungsform ist das Cyclodextrinderivat zufällig methyliertes β-Cyclodextrin (RAMEB).

RAMEB wird auch als methyl-β-Cyclodextrin bezeichnet (CAS-Nr. 128446-36-6) und wird industriell aus β-Cyclodextrin hergestellt. Die Methylsubstituenten sind zufällig an den Hydroxylgruppen an den Positionen 2, 3 und 6 der Anhydroglukoseeinheiten angeordnet. Der Methylierungsgrad hängt vom Hersteller ab und liegt üblicherweise zwischen 1,3 und 2,3, bevorzugt zwischen 1,6 und 2. Die Löslichkeit von RAMEB in Wasser ist besser als die Löslichkeit von unmodifiziertem β-Cyclodextrin.

Als erstes Monomer sind viele Verbindungen geeignet, so lange sie eine Stoppgruppe aufweisen, welche eine ausreichende sterische Hinderung aufweist, um die Beweglichkeit des ringförmigen Moleküls oder der ringförmigen Moleküle so zu blockieren, dass das ringförmige Molekül oder die ringförmigen Moleküle sich nicht von der Copolymerkette lösen können. Bevorzugt ist das erste Monomer mit einer Stoppgruppe ein Vinylmonomer. Der Ausdruck "Vinylmonomer" wie vorliegend verwendet bezeichnet ein Monomer mit einer Vinylgruppe, dies bedeutet eine -CH=CH$_2$ Gruppe, wobei die Wasserstoffatome auch durch andere Substituenten ersetzt sein können, wie beispielsweise eine Methylgruppe in Polyethylenglycolmethacrylat. Bevorzugt hat das erste Monomer ein Molekulargewicht von 70 g/mol oder mehr, bevorzugt von 70 G/mol bis 1000 g/mol, insbesondere von 100 g/mol bis 500 g/mol.

In einigen Ausführungsformen der Erfindung ist das erste Monomer ausgewählt aus der Gruppe enthaltend, Myrcen, Aromatisches Vinylmonomer, N-Isopropyl(meth)acrylamid), N-Vinylcaprolactam, N-Vinylcaprolacton, N-Vinylimidazol, N-Vinylpyrrolidon, Polyethylenglykol(meth)acrylat, α,ω-Bis(meth)acrylate, Hydroxyethylmethacrylat, N,N-Dimethyl-2-amino-ethylmethacrylat, Tetrahydrofurfurylmethacrylat, Furfurylmethacrylat, 4-acryloylmorpholin, N-[Tris(hydroxymethyl)methyl]acrylamid, Maleimide, N-Alkylmaleimide, sowie jede Kombination davon. Im Falle von Polyethylenglykol(meth)acrylat liegt das Molekulargewicht des Polyethylenglykolteils bei unter 3000 g/mol, bevorzugt bei unter 1000 g/mol. Dies gilt auch für Polyethylenglykolteile von α,ω-Bis(meth)acrylaten. In einer Ausführungsform ist das erste Monomer Polyethylenglykolmethylether(meth)acrylat oder Hydroxyethyl(meth)acrylat.

In einigen Ausführungsformen der Erfindung ist das erste Monomer mit einer Stoppgruppe ein aromatisches Vinylmonomer ausgewählt aus der Gruppe beinhaltend optional substituiertes Styrol, optional substituierte Vinylsulfonsäure, optional substituiertes Vinylpyridin, optional substituertes Divinylbenzol und jede Kombination davon. Der Ausdruck "optional substituiert" bedeutet dabei, dass die Monomere einen oder mehrere Substituenten gleich oder verschieden ausgewählt aus der Gruppe Wasserstoff, C1-C10-Alkyl, C1-C10-Heteroalkyl, C1-C10-Haloalkyl, C1-C10-Alkoxy, CN, Nitro, Halogene (F, Cl, Br, I) oder ähnliche Substitenten aufweisen.

Bevorzugt ist das erste Monomer ausgewählt aus Styrol, N-Isopropylacrylamide, N-Vinylcaprolacton, N-Vinylimidazol, N-Vinylpyrrolidon, 2-Hydroxyethylmethacrylat, N-[tris(hydroxymethyl)methyl]acrylamid, und jede Kombination davon. Besonders bevorzugt ist Styrol und Hydroxyethylmethacrylat.

Im Fall von α,ω-Bis(meth)acrylat sind α,ω-Bis(meth)acrylate von Ethylenglykol, Oligoethylenglykol, Polyethylenglykol, Bisphenol A oder Mischungen davon bevorzugt.

Die Auswahl des zweiten Monomers ist nicht besonders eingeschränkt, so lange es ermöglicht einen Teil des Copolymers mit im Wesentlichen linearer Struktur zu bilden, auf dem das ringförmige Molekül aufgefädelt sein kann. Das zweite Monomer ist bevorzugt ein lineares Monomer. Der Ausdruck "im Wesentlichen lineare Struktur" schließt nicht aus, dass dieser Teil des Polymers nicht verzweigt sein kann, so lange das ringförmige Molekül auf dem Polymer aufgefädelt sein kann, dass es drehbar und entlang der Polymerkette beweglich ist. Das zweite Monomer kann daher verzweigt, bevorzugt nur geringfügig verzweigt sein, so lange diese Verzeigung die Drehbarkeit und Beweglichkeit der ringförmigen Moleküls nicht verhindert.

In einigen Ausführungsformen ist das zweite Monomer ein nicht ionisches Monomer, ein hydrophobes Monomer, insbesondere ein nicht ionisches hydrophobes Monomer. Der Ausdruck "hydrophobes Monomer" bedeutet dabei, dass dieses Monomer eine Löslichkeit in Wasser bei 20 °C von unter 20 g/L, bevorzugt unter 10 g/L, insbesondere unter 5 g/L, ganz besonders unter 2 g/L aufweist.

Bevorzugt ist das zweite Monomer ein Vinylmonomer. Besonders bevorzugt sind das erste Monomer mit der Stoppgruppe und das zweite Monomer Vinylmonomere. Bevorzugt hat das zweite Monomer ein Molekulargewicht von 120 g/mol oder weniger, bevorzugt 110 g/mol oder weniger. Das zweite Monomer ist bevorzugt ausgewählt aus 1,3-Dienen, N-Alkylacrylamiden, Alkenen, 1,3,5-Triene oder jede Kombination davon. Im Fall von 1,3-Dienen ist das 1,3-Dien bevorzugt ausgewählt aus 1,3-Butadien, 2,3,-Dimethyl-1,3-Butadien, Isopren, Chloropren oder Kombinationen davon. So kann beispielweise 1,3-Butadien, Isopren oder 1,3-Butadien und Isopren in Kombination verwendet werden. Im Fall von Alkenen sind Ethen, Propen, Isobuten oder jede Kombination davon bevorzugt. Im Falle von N-Alkylacrylamiden ist N,N-Dimethylacrylamid bevorzugt.

Das zweite Monomer kann auch ein teilweise hydrophiles Monomer sein. Der Ausdruck "teilweise hydrophiles Monomer" bezeichnet ein gering in Wasser lösliches Monomer, bevorzugt ein Monomer mit einer Löslichkeit in Wasser bei 20 °C von 5 bis 40 g/L, bevorzugt von 10 g/L bis 40 g/L, besonders bevorzugt von 15 g/L bis 40 g/L, insbesondere von 20 g/L bis 30 g/L. Zusätzlich oder alternativ dazu sind die zweiten teilweise hydrophilen Monomere ausgewählt aus der Gruppe beinhaltend Methacrylnitril, Vinylester wie Vinylacetat, Vinylether, (Meth)acrylamide. Dabei steht die Schreibweise (Meth)acrylate sowohl für Acrylate und Methacrylate.

Als zweites Monomer kann auch nur ein hydrophobes Monomer verwendet werden, um ein hydrophobes Copolymer zu erhalten. Dabei wird unter einem "hydrophoben Copolymer" ein Copolymer verstanden, welches mindestens 60 mol%, bevorzugt mindestens 70 mol%, besonders bevorzugt mindestens 80 mol%, insbesondere mindestens 90 mol%, 95 mol% oder 100 mol%, strukturelle Einheiten abgeleitet von einem hydrophobem Monomer aufweist bezogen auf 100 mol% der Gesamtzahl der strukturellen Einheiten des Copolymers. Der Ausdruck "hydrophobes Monomer" ist dabei wie vorstehend definiert, als Monomer mit geringer Wasserlöslichkeit, bevorzugt von weniger als 20 g/L, besonders bevorzugt weniger als 10 g/L, insbesondere weniger als 5 g/L, bevorzugt weniger als 2 g/L, jeweils bei 20 °C zu verstehen. Diese Definitionen für ein hydrophobes Monomer können für das erste Monomer, das zweite Monomer, sowie weitere mögliche Monomere gelten. Es ist für diese Ausführungsform bevorzugt, dass das Copolymer des Polyrotaxans mindestens teilweise, insbesondere vollständig, ein hydrophobes Copolymer ist, wenn das ringförmige Molekül oder die ringförmigen Moleküle Cyclodextrine und/oder Cyclodextrinderivate sind. Cyclodextrine und Cyclodextrinderivate haben eine hydrophobe Innenfläche. Daher führt ein Auffädeln auf einen hydrophoben Bereich eines Copolymers nur zu geringen Wechselwirkungen zwischen dem Copolymer und dem ringförmigen Molekül. Dadurch ist die Beweglichkeit und Drehbarkeit des ringförmigen Moleküls entlang dieses Teils der Copolymerkette gegeben.

In einer weiteren Ausführungsform kann das Copolymer strukturelle Einheiten abgeleitet von einem dritten hydrophilen Monomer umfassen. Die Auswahl des dritten Monomers ist nicht besonders eingeschränkt, so lange es - zusammen mit dem zweiten Monomer - ermöglicht, einen Teil des Copolymers mit im Wesentlicher linearer Struktur zu bilden, auf dem das ringförmige Molekül oder die ringförmigen Moleküle aufgefädelt sein kann, bzw. können. Das dritte Monomer ist bevorzugt ein lineares Monomer. Der Ausdruck "im Wesentlichen lineare Struktur" schließt nicht aus, dass dieser Teil des Polymers nicht verzweigt sein kann, so lange das ringförmige Molekül auf dem Polymer aufgefädelt sein kann, dass es drehbar und entlang der Polymerkette beweglich ist. Das dritte Monomer kann daher verzweigt, bevorzugt nur geringfügig verzweigt sein, so lange diese Verzeigung die Drehbarkeit und Beweglichkeit der ringförmigen Moleküls nicht verhindert.

Bevorzugt sind das zweite und das dritte Monomer ein Vinylmonomer. Besonders bevorzugt sind das erste Monomer mit der Stoppgruppe, das zweite Monomer und das dritte Monomer Vinylmonomere. Bevorzugt hat das dritte Monomer ein Molekulargewicht von 120 g/mol oder weniger, bevorzugt 100 g/mol oder weniger.

Das dritte Monomer ist ein hydrophiles Monomer. Der Ausdruck "hydrophiles Monomer" bedeutet dabei, dass dieses Monomer eine Löslichkeit in Wasser bei 20 °C von mehr als 45 g/L, bevorzugt von 45 g/L bis 2500 g/L, insbesondere von 50 g/L bis 2100 g/L aufweist. Das dritte hydrophile Monomer kann dabei zusätzlich oder alternativ dazu ausgewählt werden aus der Gruppe bestehend aus Methacrylate, Acrylamide, Methacrylamide, Acrylsäure, Methacrylsäure, Acrylonitril, Derivate davon und jede Kombination davon. Dabei sind Methylacrylate bevorzugt.

Das molare Verhältnis von zweitem zu drittem Monomer, beziehungsweise der davon abgeleiteten strukturellen Einheiten liegt bevorzugt in dem Bereich von 1:5 bis 5:1, besonders bevorzugt 1:3 bis 3:1, insbesondere 1:2 bis 2:1 und ganz besonders bevorzugt 1:1,5 bis 1,5:1.

Bevorzugt das Copolymer wird entsprechend der vorstehend genannten Monomere durch Copolymerisation (oder Terpolymerisation) der Monomere in Gegenwart des ringförmigen Moleküls durchgeführt, wobei das zweite Monomer durch das ringförmige Molekül komplexiert wird. Dadurch kommt es zur Bildung des Polyrotaxans. Die Copolymerisation kann thermisch und/oder photochemisch ausgelöst werden. Die Copolymerisation wird bevorzugt in Wasser durchgeführt.

Bevorzugt wird das Polyrotaxan entsprechend den in WO2016202906A1 oder EP16205619.6 offenbarten Verfahren, insbesondere den beanspruchten Verfahren, hergestellt, auf welche hiermit explizit Bezug genommen wird, bevorzugt in den Verfahren zur Herstellung des Polyrotaxans ohne die Vernetzung, d.h. die Copolymerisation in Gegenwart des ringförmigen Moleküls.

Das Molekulargewicht des Copolymers kann durch die Polymerisationsbedingungen, beispielsweise durch Kettenregler gesteuert werden. Bevorzugt ist ein Molekulargewicht von unter 500000 g/mol (gemessen mit Gelpermeationschromatographie gegen Polystyrolstandards), bevorzugt unter 400000 g/mol, insbesondere unter 200000 g/mol. Es liegt dabei bevorzugt davon unabhängig bei über 2000 g/mol, bevorzugt bei über 5000 g/mol, insbesondere bei über 10000 g/mol.

In einer Ausführungsform der Erfindung umfasst das Copolymer einen Bereich oder Bereiche, deren strukturelle Einheiten abgeleitet sind von einem oder mehreren zweiten hydrophoben Monomer und einem oder mehreren der dritten hydrophilen Monomeren oder einen Bereich oder Bereiche, deren strukturelle Einheiten abgeleitet sind von teilweise hydrophilen Monomeren. Dies erlaubt die Anzahl der an die Polymerkette aufgefädelten ringförmigen Moleküle zu steuern. So ist es möglich Polyrotaxane mit einem geringen Anteil von 1 bis 50 Gew.-%, bevorzugt 10 bis 25 Gew.-% an ringförmigen Molekülen bezogen auf das Gesamtgesicht an Polyrotaxan herzustellen. Bei einem hohen Anteil an hydrophoben Monomeren steigt der Anteil an aufgefädelten ringförmigen Molekülen beispielsweise für Cyclodextrine auf über 70 Gew.-% an. Bei einem zu hohen Anteil an hydrophilem Monomer werden zu wenig ringförmige Moleküle aufgefädelt. Ein Polyrotaxan mit den vorstehend geringen Anteilen ist bevorzugt, da höhere Anteile an ringförmigen Molekülen die Selbstheilungsfähigkeit des Polymers verschlechtert.

Der Anteil an aufgefädeltem ringförmigen Molekül kann aus der Gesamtmasse an Polyrotaxan, der Gesamtmasse an aufgefädeltem ringförmigen Molekül und nicht aufgefädeltem ringförmigen Molekül erhalten werden, z. B. der Summe der Massen an aufgefädeltem und freiem ringförmigen Molekül und der Masse an freiem ringförmigen Molekül. Ein Verfahren zur Bestimmung der Menge an aufgefädeltem ringförmigem Molekül wird in G. Kali, H. Eisenbarth, G. Wenz, "One Pot Synthesis of a Polyisoprene Polyrotaxane and Conversion to a Slide-Ring Gel", Macromol. Rapid. Commun. 2016, 37, 67-72 und dem dazu veröffentlichten Supporting Information beschrieben.

Die Masse an Polyrotaxan kann durch Wiegen bestimmt werden.

Die Gesamtmasse an aufgefädelten und freien ringförmigen Molekülen kann durch Polarimetrie, d.h. durch Messung der optischen Drehung $\alpha$ einer Probe des Polyrotaxans in einem geeigneten Lösungsmittel, wobei die Masse der Probe vor dem Lösen bestimmt wurde. Die Gesamtkonzentration c des ringförmigen Moleküls kann dann mit Hilfe der spezifischen optischen Drehung [a] des ringförmigen Moleküls, welcher entweder bekannt ist oder mit dem Fachmann bekannten Methoden bestimmt werden kann, gemäß folgender Formel erhalten werden:

$$c = \alpha / ([\alpha] * l)$$

wobei c die Gesamtkonzentration der aufgefädelten und freien ringförmigen Moleküle ist; $\alpha$ ist die gemessene optische Drehung der Probe; [$\alpha$] ist die spezifische optische Drehung des ringförmigen Moleküls und 1 ist die Länge der Küvette.

Aus der erhaltenen Gesamtkonzentration kann gemäß m = c*V die Gesamtmasse m an aufgefädelten und freien ringförmigen Molekülen bestimmt werden, wobei V für das Volumen der Probe bei der Messung der optischen Drehung steht.

Die Molmasse des Polyrotaxans, die Polydispersität (PD) und der Anteil an freiem ringförmigen Molekül kann mit Gel-Permeations-Chromatographie (GPC) ermittelt werden. Die Menge an aufgefädeltem ringförmigem Molekül wird über die Differenz der Gesamtmenge an ringförmigem Molekül (bestimmt über Polarimetrie) und der Restmenge an freiem Cyclodextrin (über GPC bestimmt) berechnet.

Die funktionellen Gruppen (A) sind bevorzugt Hydroxylgruppen, Thiolgruppen, Carbonsäuregruppen, Anhydridgruppen, Isocyanatgruppen, Aminogruppen, Monoalkylaminogruppen, Isocyanogruppen, Acrylatgruppen, Methacrylatgruppen, Aldehydgruppen oder Vorstufen davon. Unter Vorstufe einer funktionellen Gruppe wird eine Gruppe verstanden, welche in die funktionelle Gruppe überführt werden kann. So sind beispielsweise eine Epoxygruppe eine Vorstufe für eine Hydroxylgruppe, ein Ester eine Vorstufe für eine Karbonsäuregruppe, eine blockierte Isocyanatgruppe eine Vorstufe für eine Isocyanatgruppe. Bevorzugt sind Epoxidgruppen oder Hydroxylgruppen.

Pro ringförmigem Molekül können eine funktionelle Gruppe, zwei funktionelle Gruppen oder mehr als zwei funktionelle Gruppe vorliegen.

Die Polyrotaxane sind bevorzugt löslich oder dispergierbar in Wasser oder organischen Lösungsmitteln, wie Tetrahydrofuran, Dichlormethan, Chloroform, Ethylacetat oder Aceton.

Die funktionellen Gruppen (B) sind bevorzugt Hydroxylgruppen, Thiolgruppen, Carbonsäuregruppen, Anhydridgruppen, Isocyanatgruppen, Aminogruppen, Monoalkylaminogruppen, Isocyanogruppen, Acrylatgruppen, Methacrylatgruppen, Aldehydgruppen oder Vorstufen davon. Unter Vorstufe einer funktionellen Gruppe wird eine Gruppe verstanden, welche in die funktionelle Gruppe überführt werden kann. So sind beispielsweise eine Epoxygruppe eine Vorstufe für eine Hydroxylgruppe, ein Ester eine Vorstufe für eine Karbonsäuregruppe, eine blockierte Isocyanatgruppe eine Vorstufe für eine Isocyanatgruppe. Bevorzugt sind Epoxidgruppen oder Hydroxylgruppen.

Mindestens zwei der aufgefädelten ringförmigen Moleküle können durch Verknüpfung der funktionellen Gruppen (A) und (B) vernetzt werden. Dies bedeutet, dass sich beim spätestens Härten der Zusammensetzung entsprechende kovalente Bindungen zur Verknüpfung ausbilden. Dadurch bildet sich ein vernetztes Polyrotaxan. Dabei wird unter einer Vernetzung in einem Polyrotaxan eine Vernetzung der ringförmigen Moleküle von mindestens einem, bevorzugt von zwei Polyrotaxanen, verstanden. Die Zusammensetzung umfasst einen Vernetzer, welcher mindestens zwei funktionelle Gruppen umfasst, welche eine Bindung zu den ringförmigen Molekülen bilden können, durch eine kovalente Bindung. Bevorzugt umfasst die Vernetzung daher die Bildung eine kovalenten Verbindung zwischen einem ersten ringförmigen Molekül, aufgefädelt auf einem ersten Copolymer, und einem zweiten ringförmigen Molekül, aufgefädelt auf einem zweiten Copolymer. Bevorzugt erfolgt die Vernetzung über die funktionellen Gruppen (A) der ringförmigen Moleküle.

Besonders bevorzugt ist der Vernetzer geeignet sowohl mit den funktionellen Gruppen (A) als auch mit den funktionellen Gruppen (B) eine Bindung einzugehen und diese so untereinander und miteinander zu vernetzen.

Entsprechend der an der Vernetzung beteiligten Gruppen, kann die Vernetzung beispielsweise durch Erwärmen oder Strahlung, bevorzugt durch Erwärmen, herbeigeführt werden. Im Falle von Cyclodextrinen oder Cyclodextrinderivaten weist der Vernetzer mindestens zwei Gruppen auf, welche eine Bindung mit den funktionellen Gruppen (A) der Cyclodextrine oder Cyclodextrinderivate bilden können.

Bevorzugt sind abhängig von den Gruppen (A), sowie gegebenenfalls von den Gruppen (B), Vernetzer mit funktionellen Gruppen ausgewählt aus Epoxygruppen, Isocyanatgruppen, blockierten Isocyanatgruppen und (Meth)acrylatgruppen.

Die Gruppen (A) und (B), sowie gegebenenfalls die funktionalen Gruppen des Vernetzers, können entsprechend ihrer Reaktionsfähigkeit miteinander ausgewählt werden.

In einer bevorzugten Ausführungsform können die Gruppen (A) und (B) nur über den Vernetzer miteinander verknüpft werden. Dies ist beispielsweise der Fall, wenn die Gruppen (A) und (B), Hydroxylgruppen, Aminogruppen oder Monoalkylaminogruppen, oder vorstufen davon sind. Diese können unter den Bedingungen des Härtens keine kovalente Bindung miteinander eingehen, sondern nur durch Reaktion mit einer funktionellen Gruppe des Vernetzers. In diesem Fall liegt das molare Verhältnis der Summe der Gruppen (A) und (B), und der funktionellen Gruppen des Vernetzers bevorzugt bei 4:1 bis 1:2, bevorzugt bei 3:1 bis 2:1. Im Falle von Cyclodextrin und einem Vernetzer Isocyanatgruppen wäre dies das Verhältnis von OH-Gruppen zu NCO-Gruppen.

In einer bevorzugten Ausführungsform sind die funktionellen Gruppen (A) im Falle der Cyclodextrine oder Cyclodextrinderivaten Hydroxylgruppen, insbesondere unmodifizierte Hydroxylgruppen der Cyclodextrine oder Cyclodextrinderivate. Der Vernetzer ist in diesem Falle ausgewählt aus der Gruppe umfassend Moleküle mit mindestens zwei Isocyanatgruppen, Diisocyanate, Triisocyanate, blockierte Diisocyanate, diisothiocyanate, bisexpoxide, Cyanurchlorid, Divinylsulfone und Kombinationen davon. Ein blockiertes Diisocyanat kann als Reaktionsprodukt eines Diisocyanats gesehen werden, welches bei Raumtemperatur stabil ist, aber sich unter dem Einfluss von Wärme spaltet und ein Diisocyanat bildet. Beispiele für blockierte Diisocyanate sind beschrieben in DA. Wicks, Z.W. Wicks Jr, Prog. Org. Coatings 1999, 36, 148-172. Im Falle eines Bisepoxids kann der Vernetzer Bisphenol-A Diglycidylether sein. Der Vernetzer ist nicht besonders beschränkt, so lange er unter den Bedingungen zur Bildung eines vernetzten Polyrotaxans führt. Andere Vernetzer können vom Fachmann entsprechend gewählt werden.

Das vernetzte Polyrotaxan ist bevorzugt ein Gel, besonders bevorzugt ein Slide-ring-Gel.

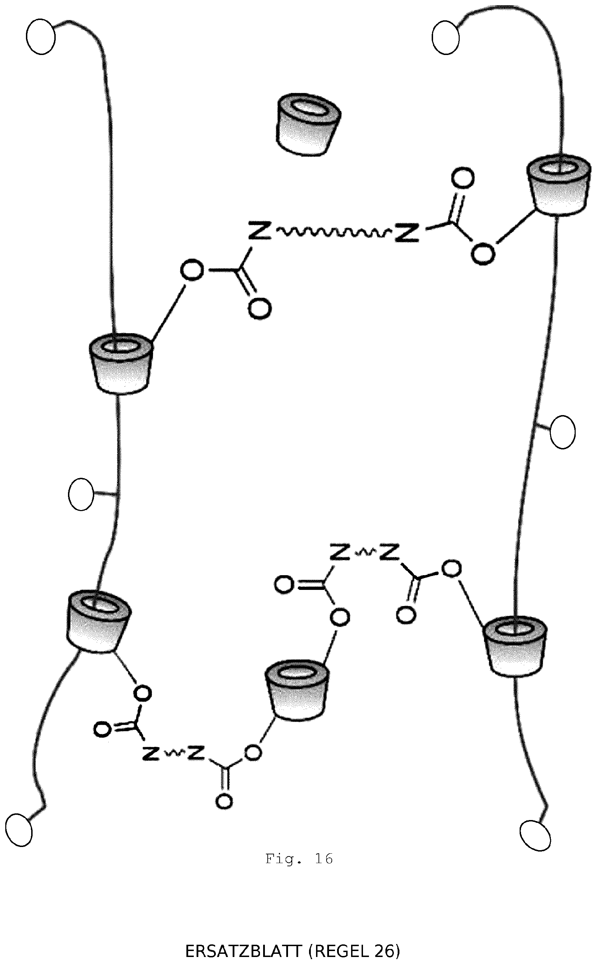

Ein Slide-ring-Gel unterscheidet sich von einem Gel basierend auf physikalischen Bindungen oder chemischen Bindungen. Bei einem Slide-ring-Gel sind die Polymerketten topologisch verbunden. In einem Slide-ring-Gel sind fast nur die ringförmigen Moleküle miteinander vernetzt, währen die Copolymerketten nicht oder nur zu einem kleinen Teil miteinander vernetzt sind. Dies ist beispielsweise in Figur 16 gezeigt, bei dem die ringförmigen Moleküle zweier Polyrotaxane über einen Vernetzer verbunden sind. Da nur die ringförmigen Moleküle miteinander vernetzt sind, können sie sich entlang der Polymerketten frei im Polymer bewegen. Dadurch können Spannungen der Copolymerketten besser ausgeglichen werden. Auch werden Zugspannungen zwischen den Copolymerketten verteilt. Dadurch sind Oberflächen oder Formkörper aus Slide-ring-Gelen weich und brechen nur schwer. Allerdings führt diese Eigenschaft dazu, dass die herkömmlichen vernetzten Polyrotaxane nicht für Anwendungen beispielsweise im Außenbereich geeignet sind.

Bei der Verwendung von unmodifizierten Hydrolysaten oder Partikeln, welche beispielsweise Hydroxylgruppen tragen, wäre zwar auch eine Reaktion mit den Isocyanatgruppen möglich, aber diese Bindungen sind hydrolytisch und thermisch nicht stabil. Unfunktionalisierte Silan-Kondensate würden wie eine Art Silikonöl in der Polyrotaxanmatrix wirken und phasenseparieren. Eine mechanische Übertragung der Kräfte auf die beweglichen Cyclodextrine auf der Polyrotaxanhauptkette wäre im Falle eines Kratzers nicht möglich. Das System wäre einfach nur instabil.

Im erfindungsgemäßen Polyrotaxan sind mindestens zwei der aufgefädelten ringförmigen Moleküle durch Verknüpfung der funktionellen Gruppen (A) und (B) vernetzt. Dies bedeutet, dass die Vernetzung über das organische modifizierte anorganische Hybridmaterial (Figur 17) oder die oberflächenmodifizierten Partikel (Figur 18) erfolgt. Die Oberflächenmodifizierung der Partikel kann auch selbst ein organisch modifiziertes anorganisches Hybridmaterial sein (Figur 19).

Bevorzugt ist dabei, dass die funktionellen Gruppen (A) und funktionellen Gruppen (B) miteinander mit einem Vernetzer verbunden werden. Dadurch kann erreicht werden, dass sowohl die Vernetzung der ringförmigen Moleküle über den Vernetzer, als auch die Vernetzung der ringförmigen Moleküle mit dem organisch modifiziertem anorganischen Hybridmaterial oder den oberflächenmodifizierten anorganischen Partikeln erfolgt.

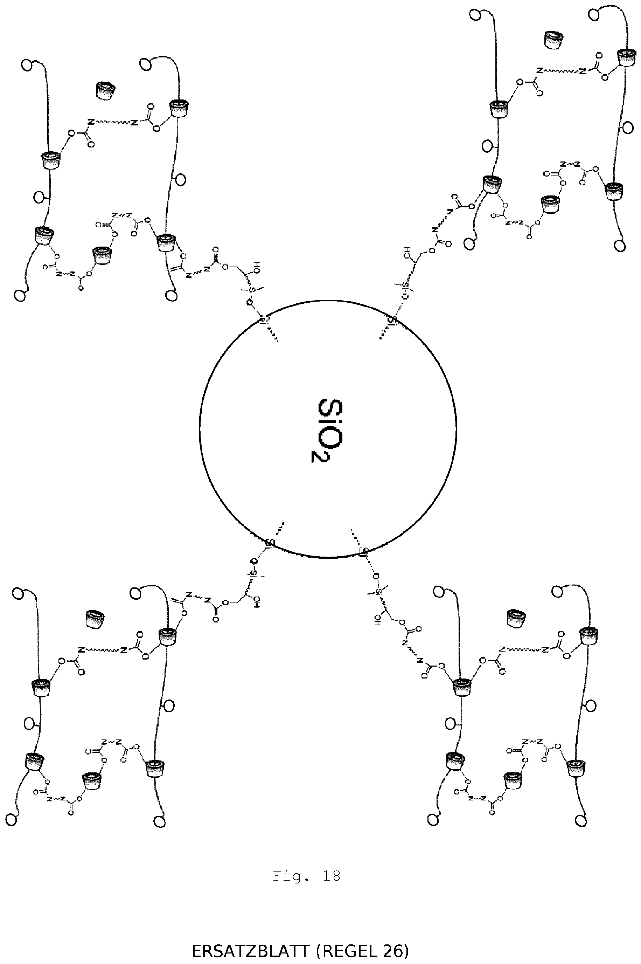

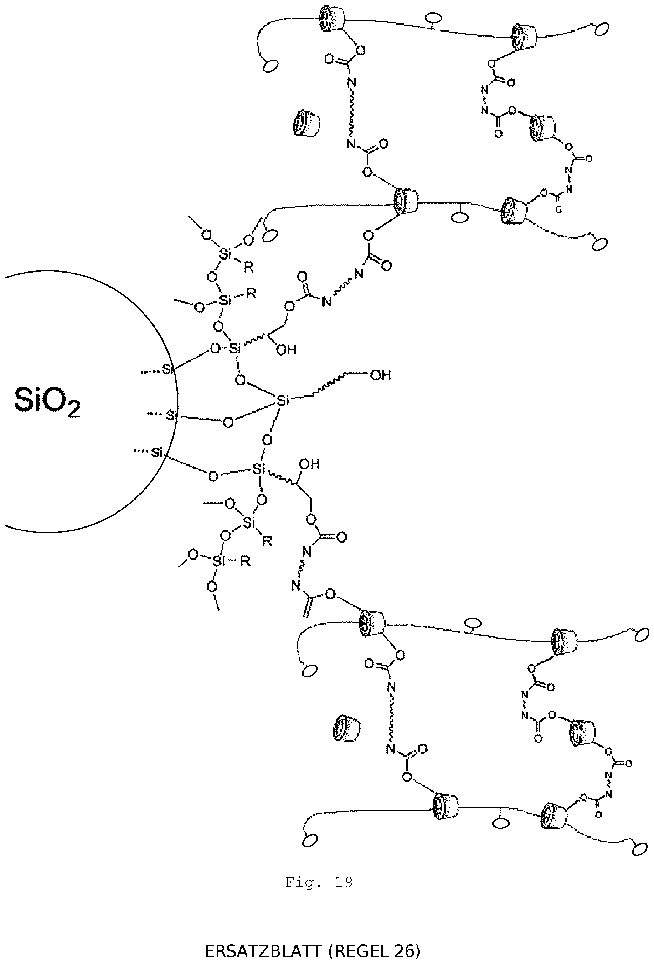

Das Selbstheilungsverhalten der rein Polyrotaxan-basierten Slide-ring-Gele wird im Wesentlichen durch die Packungsmöglichkeit der aufgefädelten Cyclodextrine zu Phasenbereichen mit geordneten Strukturen bestimmt. Die Selbstheilungstemperatur wird dabei durch die Länge organischer Seitengruppen an den Cyclodextrinen beeinflusst, die darunter liegende Polymerhauptkette muss dagegen nur ausreichend flexibel sein. Durch die besondere Struktur des organisch modifizierten anorganischen Hybridmaterial oder die Größe der anorganischen Partikel, kann die Ausbildung geordneter Packungsstrukturen der ringförmigen Moleküle auch schon bei geringen Gehalten an den vorgenannten Komponenten unterbinden. Werden zusätzlich noch anorganische Teilchen eingebracht, die an ihrer Oberfläche funktionelle Gruppen tragen, welche in die Vernetzungsreaktion eingreifen können (Figuren 18 und 19), so besteht über die Möglichkeit der Einbringung keramischer Eigenschaften wie z.B. Härte und UV-Absorptionsverhalten hinaus die zusätzliche Möglichkeit insbesondere ebenfalls weiteren Einfluss auf das Relaxationsverhalten und damit das Selbstheilungsverhalten der Materialien zu nehmen. Dies trifft im Besonderen auf den Fall zu, dass die oberflächenmodifizierten Partikel mit einem organisch modifiziertem anorganischen Hybridmaterial modifiziert sind (Figur 19), da die Oberflächenmodifizierung, welche die Partikel umhüllt, eine ausgedehntere eigene Phase mit eigenen mechanischen und Relaxationseigenschaften darstellt. Darüber hinaus werden durch die relative Größe der Partikel im Vergleich zu den ringförmigen Molekülen und der damit verbundenen Raumerfüllung der Partikel offensichtlich dichte Packungsstrukturen zwischen den ringförmigen Molekülen ebenfalls weiter erschwert. Dies zeigt sich beispielsweise im Verlauf des Speichermoduls der erhaltenen Formkörper. Insofern ermöglicht die intrinsische Flexibilität und Deformierbarkeit dieser Grenzflächenphase den Erhalt der besonderen Relaxationseigenschaften der Slide-ring-Gele und die erhaltenen nanostrukturierten Kompositmaterialien zeigen weiterhin ein für technische Anwendungen relevantes Selbstheilungsverhalten.

Die Zusammensetzung umfasst mindestens ein organisch modifiziertes anorganisches Hybridmaterial, welches funktionelle Gruppen (B) umfasst oder mindestens eine Art von oberflächenmodifizierten anorganischen Partikeln, welche an ihrer Oberfläche funktionelle Gruppen (B) aufweisen.

Ein organisch modifiziertes anorganisches Hybridmaterial, umfassend funktionelle Gruppen (B), umfasst ein (Poly)Kondensat von mindestens einem glas- oder keramikbildenden Element M, insbesondere einem Element M aus den Gruppen 3 bis 5 und/oder 12 bis 15 des Periodensystems der Elemente, bevorzugt von Si, Al, B, Ge, Pb, Sn, Ti, Zr, V und Zn, insbesondere solche von Si und Al, am meisten bevorzugt Si, oder Mischungen davon. Es können auch anteilig Elemente der Gruppen 1 und 2 des Periodensystems (z.B. Na, K, Ca und Mg) und der Gruppen 5 bis 10 des Periodensystems (z.B. Mn, Cr, Fe und Ni) oder Lanthanoiden (z.B. Ce) im (Poly)Kondensat vorhanden sein. Ein bevorzugtes organisch modifiziertes anorganisches Hybridmaterial sind Polyorganosiloxane. Besonders bevorzugt werden hierfür Hydrolysate von glas- oder keramikbildenden Elementen, insbesondere von Silizium verwendet.

Vorzugsweise werden die organisch-modifizierten Hybridmaterialien nach dem Sol-Gel-Verfahren erhalten. Beim Sol-Gel-Verfahren werden gewöhnlich hydrolysierbare Verbindungen mit Wasser, gegebenenfalls unter saurer oder basischer Katalyse, hydrolysiert und gegebenenfalls zumindest teilweise kondensiert. Die Hydrolyse- und/oder Kondensationsreaktionen führen zur Bildung von Verbindungen oder Kondensaten mit Hydroxy-, Oxogruppen und/oder Oxobrücken, die als Vorstufen dienen. Es können stöchiometrische Wassermengen, aber auch geringere oder größere Mengen verwendet werden. Das sich bildende Sol kann durch geeignete Parameter, z.B. Kondensationsgrad, Lösungsmittel oder pH-Wert, auf die gewünschte Viskosität oder die gewünschte Größe der Kondensate eingestellt werden. Weitere Einzelheiten des Sol-Gel-Verfahrens sind z.B. bei C.J. Brinker, G.W. Scherer: "Sol-Gel Science - The Physics and Chemistry of Sol-Gel-Processing", Academic Press, Boston, San Diego, New York, Sydney (1990) beschrieben.

Nach dem bevorzugten Sol-Gel-Verfahren werden, die Hydrolysate oder (Poly)Kondensate durch Hydrolyse und/oder Kondensation aus hydrolysierbaren Verbindungen der oben genannten glas- oder keramikbildenden Elemente erhalten, die zur Herstellung des organisch-modifizierten anorganischen Hybridmaterials zusätzlich nicht hydrolysierbare organische Substituenten umfassend mindestens teilweise eine funktionelle Gruppen (B) oder Vorstufen davon tragen. Anorganische Sole werden dabei nach dem Sol-Gel-Verfahren insbesondere aus hydrolysierbaren Verbindungen der allgemeine Formeln $MX_n$ gebildet, worin M das vorstehend definierte glas- oder keramikbildende Element ist, X wie in nachstehender Formel (I) definiert ist, wobei zwei Gruppen X durch eine Oxogruppe ersetzt sein können, und n der Wertigkeit des Elements entspricht und meist 3 oder 4 ist. Bevorzugt handelt es sich um hydrolysierbare Si-Verbindungen, insbesondere der nachstehenden Formel (I).

Beispiele für einsetzbare hydrolysierbare Verbindungen von Elementen M, die von Si verschieden sind, sind $Al(OCH_3)_3$, $Al(OC_2H_5)_3$, $Al(O\text{-}n\text{-}C_3H_7)_3$, $Al(O\text{-}i\text{-}C_3H_7)_3$, $Al(O\text{-}n\text{-}C_4H_9)_3$, $Al(O\text{-sek.-}C_4H_9)_3$, $AlCl_3$, $AlCl\,(OH)_2$, $Al(OC_2H_4OC_4H_9)_3$, $TiCl_4$, $Ti(OC_2H_5)_4$, $Ti(O\text{-}n\text{-}C_3H_7)_4$, $Ti(O\text{-}i\text{-}C_3H_7)_4$, $Ti(OC_4H_9)4$, $Ti(2\text{-ethylhexoxy})_4$, $ZrCl_4$, $Zr(OC_2H_5)_4$, $Zr(O\text{-}n\text{-}C_3H_7)_4$, $Zr(O\text{-}i\text{-}C_3H_7)_4$, $Zr(OC_4H_9)_4$, $ZrOCl_2$, $Zr(2\text{-ethylhexoxy})_4$, sowie Zr-Verbindungen, die komplexierende Reste aufweisen, wie z.B. •-Diketon- und (Meth)acrylreste, Natriummethylat, Kaliumacetat, Borsäure, $BCl_3$, $B(OCH_3)_3$, $B(OC_2H_5)_3$, $SnCl_4$, $Sn(OCH_3)_4$, $Sn(OC_2H_5)_4$, $VOCl_3$ und $VO(OCH_3)_3$.

Die nachstehenden Ausführungen zum bevorzugten Silizium gelten auch sinngemäß für die anderen Elemente M. Besonders bevorzugt wird das Sol oder das organisch-modifizierte anorganische Hybridmaterial aus einem oder mehreren hydrolysierbaren und kondensierbaren Silanen erhalten, wobei mindestens ein Silan einen nicht hydrolysierbaren organischen Rest umfassend eine funktionelle Gruppe (B) oder Vorstufen davon aufweist. Besonders bevorzugt werden ein oder mehrere Silane mit den folgenden allgemeinen Formeln (I) und/oder (II) verwendet:

$$R_aSiX_{(4-a)} \qquad (I)$$

worin R gleich oder verschieden ist und einen nicht hydrolysierbaren Rest darstellt, der gegebenenfalls eine funktionelle Gruppe aufweist, X gleich oder verschieden sind und hydrolysierbare Gruppen oder Hydroxygruppen bedeuten und a den Wert 1, 2 oder 3, vorzugsweise 2 oder 3, insbesondere 3 hat.

Optional kann auch noch ein Silan der Formel (II) verwendet werden:

$$SiX_4 \qquad (II)$$

wobei X die vorstehende Bedeutung hat.

In den obigen Formeln sind die hydrolysierbaren Gruppen X beispielsweise Wasserstoff oder Halogen (F, Cl, Br oder I), Alkoxy (vorzugsweise $C_{1-6}$-Alkoxy, wie z.B. Methoxy, Ethoxy, n-Propoxy, i-Propoxy und Butoxy), Aryloxy (vorzugsweise $C_{6-10}$-Aryloxy, wie z.B. Phenoxy), Acyloxy (vorzugsweise $C_{1-6}$-Acyloxy, wie z.B. Acetoxy oder Propionyloxy), Alkylcarbonyl (vorzugsweise $C_{2-7}$-Alkylcarbonyl, wie z.B. Acetyl), Amino, Monoalkylamino oder Dialkylamino mit vorzugsweise 1 bis 12, insbesondere 1 bis 6 Kohlenstoffatomen in der bzw. den Alkylgruppe(n). Bevorzugte hydrolysierbare Reste sind $C_{1-4}$-Alkoxygruppen, insbesondere Methoxy und Ethoxy.

Der nicht hydrolysierbare Rest R ist beispielsweise Alkyl (vorzugsweise $C_{1-6}$-Alkyl, wie z.B. Methyl, Ethyl, n-Propyl, Isopropyl, n-Butyl, s-Butyl und t-Butyl, Pentyl, Hexyl oder Cyclohexyl), Alkenyl (vorzugsweise $C_{2-6}$-Alkenyl, wie z. B. Vinyl, 1-Propenyl, 2-Propenyl und Butenyl), Alkinyl (vorzugsweise $C_{2-6}$-Alkinyl, wie z.B. Acetylenyl und Propargyl) und Aryl (vorzugsweise $C_{6-10}$-Aryl, wie z.B. Phenyl und Naphthyl).

Die genannten Reste R und X können gegebenenfalls einen oder mehrere übliche Substituenten, wie z.B. Halogen, Ether-, Phosphorsäure-, Sulfonsäure-, Cyano-, Amid-, Mercapto-, Thioether- oder Alkoxygruppen, als funktionelle Gruppen aufweisen.

Der Rest R kann eine funktionelle Gruppe enthalten, über die eine Vernetzung möglich ist. Konkrete Beispiele für die funktionellen Gruppen des Restes R sind Epoxy-, Hydroxy-, Amino-, Monoalkylamino-, Dialkylamino-, Carboxy-, Allyl-, Vinyl-, Acryl-, Acryloxy-, Methacryl-, Methacryloxy-, Cyano-, Isocyano-, Thiol-, Aldehyd- und Alkylcarbonylgruppen oder Vorstufen davon. Diese Gruppen sind vorzugsweise über Alkylen-, Alkenylen- oder Arylen-Brückengruppen, die durch Sauerstoff- oder Schwefelatome oder -NH-Gruppen unterbrochen sein können, an das Siliziumatom gebunden. Die genannten Brückengruppen leiten sich zum Beispiel von den oben genannten Alkyl-, Alkenyl- oder Arylresten ab. Die Brückengruppen der Reste R enthalten vorzugsweise 1 bis 18, insbesondere 1 bis 8 Kohlenstoffatome.

Mindestens ein Rest R mindestens eines der verwendeten Silane umfasst dabei mindestens eine funktionelle Gruppe (B). Bevorzugt ist dies eine Gruppe, über die eine Vernetzung möglich ist, bevorzugt sind dies Hydroxylgruppen, Thiolgruppen, Carbonsäuregruppen, Anhydridgruppen, Isocyanatgruppen, Aminogruppen, Monoalkylaminogruppen, Isocyanogruppen, Acrylatgruppen, Methacrylatgruppen, Aldehydgruppen oder Vorstufen davon.

In einer Ausführungsform der Erfindung umfasst die Zusammensetzung mindestens eine Art von oberflächenmodifizierten anorganischen Partikeln, welche an ihrer Oberfläche funktionelle Gruppen (B) aufweisen.

Für die Partikel eignen sich praktisch alle keramischen und Glassysteme, aber auch gegebenenfalls Metalle, Halbleiter und übliche Füller. Es handelt sich bevorzugt um keramische Partikel. Häufig werden Oxide, Nitride, Carbide, Carbonitride, Silicide oder Boride verwendet. Es können auch Mischungen verschiedener Partikel verwendet werden. Die Partikel sind an der Oberfläche modifiziert. Bei den Partikeln handelt es sich z.B. um Partikel aus Metall, einschließlich Metalllegierungen, Halbmetall- (z.B. B, Si und Ge) oder Metallverbindungen, insbesondere Metallchalkogeniden, besonders bevorzugt die Oxide und Sulfide, Nitride, Carbide, Silicide und Boride. Es kann eine Art von Partikeln oder eine Mischung eingesetzt werden.

Bevorzugt sind Oxide, Carbide, Nitride, Chalkogenide der Elemente B, Si, Al, Ti, Zr, Y, V, Cr, Cd, Mn, Fe, Cu, Zn, In, Nb, Ce, Ta, Mo oder W.

Beispiele sind (gegebenenfalls hydratisierte) Oxide wie $ZnO$, $CdO$, $SiO_2$, $GeO_2$, $TiO_2$, $ZrO_2$, $CeO_2$, $SnO_2$, $Al_2O_3$ (z.B. Amperit, Böhmit, $AlO(OH)$, auch als Aluminiumhydroxid), $B_2O_3$, $In_2O_3$, $La_2O_3$, $Fe_2O_3$ (z.B. Hämatit), $Fe_3O_4$, $Cu_2O$, $CuO$, $Ta_2O_5$, $Nb_2O_5$, $V_2O_5$, $MoO_3$ oder $WO_3$; weitere Chalkogenide, wie z.B. Sulfide (z.B. $CdS$, $ZnS$, $PbS$ und $Ag_2S$), Selenide (z.B. $GaSe$, $CdSe$ und $ZnSe$) und Telluride (z.B. $ZnTe$ oder $CdTe$); Halogenide, wie $AgCl$, $AgBr$, $AgI$, $CuCl$, $CuBr$, $CdI_2$ und $PbI_2$; Carbide wie $CdC_2$ oder $SiC$; Arsenide, wie $AlAs$, $GaAs$ und $GeAs$; Antimonide wie $InSb$; Nitride, wie $BN$, $AlN$, $Si_3N_4$ und $Ti_3N_4$; Phosphide wie $GaP$, $InP$, $Zn_3P_2$ und $Cd_3P_2$; Phosphate, Silicate, einschließlich komplexerer Silicate, wie z.B. Schichtsilikate, Talk, Zirkonate, Aluminate, Stannate und die entsprechenden Mischoxide (z.B. Indium Zinn-Oxid (ITO), Antimon-Zinn-Oxid (ATO), fluor-datiertes Zinnoxid (FTO), Spinelle, Ferrite oder Mischoxide mit Perowskitstruktur wie $BaTiO_3$ und $PbTiO_3$). Weiter kommen übliche Pigmente und Füllstoffe, wie z.B. Graphit, Sulfate, wie Schwerspat und Gips, Carbonate, wie Calcite, Dolomite und Kreiden, Sulfide, wie Zinksulfid oder Lithopone, Glas sowie Oxide und Silicate, wie Kieselsäuren, Cristobalit, Talk, Kaolin und Glimmer, in Frage, sofern sie entsprechend oberflächenmodifiziert sind.

Die Größe der Partikel ist nicht besonders beschränkt. Zweckmäßigerweise werden Partikel mit einer Primärteilchengröße zwischen 1 nm und 1000 nm verwendet (Bestimmung mit TEM anhand einer Stichprobe von mindestens 100 Partikeln). Bevorzugt ist eine Primärteilchengröße unter 500 nm, bevorzugt unter 300 nm. Besonders bevorzugt ist eine Primärteilchengröße zwischen 1 nm und 150 nm, bevorzugt zwischen 5 nm und 50 nm. Bevorzugt treffen diese Werte für mindestens 80 %, bevorzugt mindestens 90 % der Partikel zu (Bestimmt mit TEM anhand einer Stichprobe von mindestens 100 Partikeln).

Die Verwendeten Partikel sind bevorzugt vollständig redispergierbar, d.h. sie bilden keine Aggregate.

Die Partikel sind oberflächenmodifiziert. Bei der Modifizierung von Partikeloberflächen handelt es sich um ein bekanntes Verfahren, wie es von der Anmelderin z.B. in WO 93/21127 oder WO 96/31572 für nanoskalige Feststoffpartikel beschrieben wurde. Die Herstellung der oberflächenmodifizierten Partikel kann prinzipiell auf zwei verschiedenen Wegen durchgeführt werden, nämlich zum einen durch Modifizierung von bereits hergestellten Partikeln und zum anderen durch Herstellung der Partikel unter Verwendung von einer oder mehreren Verbindungen, die über entsprechende funktionelle Gruppierungen verfügen.

Über das Modifizierungsmittel können funktionelle Gruppen auf der Oberfläche der Partikel angebracht werden. Beispiele sind die vorstehend für die Hybridsysteme genannten funktionellen Gruppen, wie (Meth)acryl, Epoxid-, Thiol-, Carboxy-, Carbonsäureanhydrid- oder Aminogruppen.

Als Modifizierungsmittel eignen sich neben anorganischen oder organischen Säuren auch niedermolekulare organische Verbindungen oder niedermolekulare hydrolysierbare Silane mit mindestens einer nicht hydrolysierbaren Gruppe, die mit an der Oberfläche der Partikel vorhandenen Gruppen reagieren und/oder (zumindest) wechselwirken können. Beispielsweise befinden sich auf Partikeln als Oberflächengruppen reaktionsfähige Gruppen als Restvalenzen, wie Hydroxygruppen und Oxygruppen, z.B. bei Metalloxiden, oder Thiolgruppen und Thiogruppen, z.B. bei Metallsulfiden, oder Amino-, Amid- und Imidgruppen, z.B. bei Nitriden.

Eine Modifizierung der Partikel kann z.B. durch Mischen der Partikel mit nachstehend erläuterten Modifizierungsmitteln gegebenenfalls in einem Lösungsmittel und gegebenenfalls unter Anwesenheit eines Katalysators erfolgen. Natürlich hängen zweckmäßige Bedingungen, wie Temperatur, Mengenverhältnisse, Dauer der Umsetzung usw., von den jeweiligen speziellen Reaktionspartnern und dem gewünschten Belegungsgrad ab.

Die Modifizierungsmittel können z.B. sowohl kovalente als auch ionische (salzartige) oder koordinative Bindungen zur Oberfläche der Partikel ausbilden, während unter den reinen Wechselwirkungen beispielhaft Dipol-Dipol-Wechselwirkungen, Wasserstoffbrückenbindungen und van der Waals-Wechselwirkungen zu nennen sind. Bevorzugt ist die Ausbildung von kovalenten, ionischen und/oder koordinativen Bindungen, bevorzugt von kovalenten Bindungen. Unter einer koordinativen Bindung wird eine Komplexbildung verstanden. Zwischen dem Oberflächenmodifizierungsmittel und den Partikeln kann z.B. eine Säure/Base-Reaktion nach Brönsted oder Lewis, eine Komplexbildung oder eine Veresterung stattfinden.

Beispiele für geeignete funktionelle Gruppen der Oberflächenmodifizierungsmittel zur Anbindung an die Partikel sind Carbonsäuregruppen, Anhydridgruppen, Säureamidgruppen, (primäre, sekundäre, tertiäre und quartäre) Aminogruppen, SiOH Gruppen, hydrolisierbare Reste von Silanen und C-H-acide Gruppierungen, z.B. β-Dicarbonylverbindungen. Es können auch mehrere dieser Gruppen gleichzeitig in einem Molekül vorhanden sein (Betaine, Aminosäuren, EDTA, usw.).

Beispiele für Verbindungen, die zur Oberflächenmodifizierung verwendet werden, sind gegebenenfalls substituierte (z.B. mit Hydroxy), gesättigte oder ungesättigte Mono- und Polycarbonsäuren mit 1 bis 24 Kohlenstoffatomen, die auch Etherbindungen enthalten können (wie Trioxadecansäure), sowie deren Anhydride, Ester (vorzugsweise C1-C4-Alkylester) und Amide, z.B. Methylmethacrylat.

Beispiele für weitere geeignete Oberflächenmodifikatoren sind quaternäre Ammoniumsalze der Formel $NR^1R^2R^3R^{4+}X^-$, worin $R^1$ bis $R^4$ gegebenenfalls voneinander verschiedene aliphatische, aromatische oder cycloaliphatische Gruppen mit vorzugsweise 1 bis 12, insbesondere 1 bis 8 Kohlenstoffatomen darstellen, wie z.B. Alkylgruppen mit 1 bis 12, insbesondere 1 bis 8 und besonders bevorzugt 1 bis 6 Kohlenstoffatomen (z.B. Methyl, Ethyl, n- und 1-Propyl, Butyl oder Hexyl), und X für ein anorganisches oder organisches Anion steht, z.B. Acetat, $OH^-$, $Cl^-$, $Br^-$ oder I ; Mono- und Polyamine, insbesondere solche der allgemeinen Formel $R_{3-n}NH_n$, worin n = 0, 1 oder 2 und die Reste R unabhängig voneinander Alkylgruppen mit 1 bis 12, insbesondere 1 bis 8 und besonders bevorzugt 1 bis 6 Kohlenstoffatomen darstellen (z.B. Methyl, Ethyl, n- und i-Propyl, Butyl oder Hexyl) und Ethylenpolyamine (z.B. Ethylendiamin, Diethylentriamin etc.); Aminosäuren; Imine; β-Dicarbonylverbindungen mit 4 bis 12, insbesondere 5 bis 8 Kohlenstoffatomen, wie z.B. Acetylaceton, 2,4-Hexandion, 3,5-Heptandion, Acetessigsäure und Acetessigsäure-C1-C4-alkylester, wie Acetessigsäureethylester; und Silane.

Zur Modifizierung werden bevorzugt hydrolysierbare Silane eingesetzt, wobei das Silan eine nicht hydrolysierbare Gruppe aufweist. Diese Oberflächenmodifizierung mit hydrolysierbaren Silanen ist insbesondere für oxidische Partikel wie $SiO_2$ oder $CeO_2$ zweckmäßig. Beispiele sind Silane der allgemeinen Formel (I) .

Für die in situ Herstellung von nanoskaligen anorganischen Feststoffpartikel mit polymerisierbaren/polykondensierbaren Oberflächengruppen sei auf WO 98/51747 (DE 19746885) verwiesen.

Es ist auch möglich die vorstehend genannten Partikel mit einem erfindungsgemäßen organisch modifizierten anorganischen Hybridmaterial zu modifizieren.

Der Anteil an Komponente b) liegt bevorzugt bei bis zu 50 Gew.-%, bevorzugt von 1 Gew.-% bis 40 Gew.-%, bevorzugt 2 Gew.-% bis 30 Gew.-%, bezogen auf den Gehalt der Komponenten a), b) und c) jeweils ohne Lösungsmittel, d.h. bezogen auf den Feststoffgehalt der Zusammensetzung. Eventuell weitere vorhandene Additive außer Lösungsmittel, wie Pigmente zählen dabei mit zum Feststoffgehalt.

In einer bevorzugten Ausführungsform liegt der Anteil an organisch modifiziertem anorganischen Hybridmaterial bei 1 bis 20 Gew.-%, besonders bevorzugt bei 3 bis 10 Gew.-%, insbesondere bei 5 Gew.-%, jeweils bezogen auf den Feststoffgehalt der Zusammensetzung.

In einer weiteren bevorzugten Ausführungsform liegt der Anteil an modifizierten Partikeln bei 1 bis 30 Gew.-%, bevorzugt bei 1 bis 20 Gew.-%, besonders bevorzugt bei 5 bis 15 Gew.-% insbesondere bei 10 Gew.-%.

Es können auch beide Anteile miteinander kombiniert werden.

Der Anteil an Polyrotaxan liegt bevorzugt bei über 45 Gew.-%, bevorzugt bei über 50 Gew.-%, insbesondere über 60 Gew.-%, bezogen auf den Feststoffgehalt der Zusammensetzung.

Bevorzugt liegt die Zusammensetzung als Dispersion in einem oder mehrerer Lösungsmittel vor. Der Gesamtfeststoffgehalt liegt dabei bevorzugt bei 5 bis 50 Gew.-%, bevorzugt bei 10 bis 30 Gew.-%.

In einer bevorzugten Ausführungsform liegt der Gehalt an Vernetzer bei 0,001 bis 1 Gew.-%.

Als Lösungsmittel können alle geeigneten Lösungsmittel, bevorzugt organische Lösungsmittel verwendet werden. Beispiele sind Ester, wie Butylacetat Ethylacetat, oder 1- Methoxy-2-propylacetat, Ketone, wie Aceton, Methylisobutylketon oder Methylethylketon, Alkohole, wie Isopropanol, Ether, wie Butylglykol, Methoxypropanol, Tetrahydrofuran, (Alkyl)aromaten, wie beispielsweise Xylol, Mono-, Di- oder Triethylbenzol, Propyl- oder Isopropylbenzol, Ethylmethylbenzol, aliphatische Kohlenwasserstoffe, wie beispielsweise Testbenzin, Terpenkohlenwasserstoffe, wie beispielsweise Dipentene, halogenierte Kohlenwasserstoffe wie Dichlormethan oder Chloroform.

Die Zusammensetzung kann auch noch weitere hydrophobe Verbindungen umfassen, geeignet mit den funktionellen Gruppen (A) und/oder (B) eine Bindung einzugehen. Dadurch ist es möglich, zum einen die hydrophoben Eigenschaften des erhaltenen Materials, wie den Kontaktwinkel zu beeinflussen. Zum anderen kann auch der Vernetzungsgrad gesteuert werden, da diese funktionellen Gruppen (A) und/oder (B) nicht mehr für die Vernetzung zur Verfügung stehen. Bevorzugt sind hydrophile Verbindungen umfassend mindestens eine funktionelle Gruppe, welche mit mindestens einer funktionellen Gruppe (A) und/oder (B) reagieren kann.

Solche Verbindungen sind umfassen bevorzugt eine funktionelle Gruppe ausgewählt aus Hydroxylgruppen, Thiolgruppen, Carbonsäuregruppen, Anhydridgruppen, Isocyanatgruppen, Aminogruppen, Monoalkylaminogruppen, Isocyanogruppen, Acrylatgruppen, Methacrylatgruppen, Aldehydgruppen oder Vorstufen davon, abhängig von den vorhandenen funktionellen Gruppen (A) und/oder (B), sowie einen C1-C10-Alkylrest, welcher auch cyclisch und/oder verzweigt sein kann. Beispiele für solche Verbindungen sind Butylisocyanat, Hexylixocyanat, Acetanhydrid, Acetylchlorid.

Die Erfindung betrifft außerdem ein selbstheilendes Kompositmaterial erhalten durch Härtung der erfindungsgemäßen Zusammensetzung. Die Härtung erfolgt bevorzugt durch Erwärmung und/oder Strahlung, bevorzugt durch Erwärmung.

Die Erfindung betrifft außerdem ein Verfahren zur Herstellung eines selbstheilenden Kompositmaterials, umfassend die Bereitstellung einer erfindungsgemäßen Zusammensetzung und Härtung der erfindungsgemäßen Zusammensetzung.

Bevorzugt ist eine Härtung in Abwesenheit von zusätzlichen Vernetzern, soweit nicht vorstehend angegeben, bei einer Temperatur zwischen 80 °C und 150 °C, bevorzugt 100°C und 130 °C, besonders bevorzugt 120 °C. Die Härtung wird bevorzugt für 5 Minuten bis 24 Stunden, bevorzugt 1 Stunde bis 10 Stunden durchgeführt.

Die Erfindung betrifft außerdem eine mit einem selbstheilenden Kompositmaterial beschichtete Oberfläche. Dazu wird die erfindungsgemäße Zusammensetzung auf eine Oberfläche aufgetragen und gehärtet. Die Oberfläche ist nicht beschränkt und kann beispielsweise Metall, Glas, Keramik, Holz, Lacke, Kunststoff sein. Die Zusammensetzung kann durch Tauchen, Sprühen, Spin coating, Rakeln, Streichen aufgetragen werden. Dazu wird üblicherweise die Zusammensetzung als Dispersion oder Lösung in Wasser oder einem organischen Lösungsmittel verwendet.

Die Zusammensetzung kann auch durch Pulverbeschichtung aufgetragen werden, beispielsweise als Bestandteil von Pulverlacken.

Es ist auch möglich, die Zusammensetzung oder daraus erhaltene Produkte als Bestandteile von Elektrotauchlacken zur Elektrotauchlackierung zu verwenden.

Dazu kann es notwendig sein die Zusammensetzung in Bezug auf Additive und/oder Lösungsmittel anzupassen. Ebenso kann es notwendig sein, dass entsprechende funktionelle Gruppen wie Amino- oder Karbonsäuregruppen an einer oder mehreren der Komponenten vorliegen.

Die Erfindung betrifft außerdem einen Formkörper aus dem erfindungsgemäßen selbstheilenden Kompositmaterial. Dazu kann das erfindungsgemäße Material in einer Form gefüllt und gehärtet werden. Alternativ können auch in einem mehrstufigen Prozess mehrere Lagen der Zusammensetzung aufgebracht und getrocknet werden, und erst später gehärtet werden.

Unter "selbstheilend" wird dabei die Fähigkeit des Materials verstanden, Schäden durch mechanische Einwirkungen ohne menschliche Beeinflussung zu reparieren. Dies ist beispielsweise sehr interessant für Farben und Klebstoffe. Solche Farben und Klebstoffe können beispielsweise im Automobilbereich in Lacken, beispielsweise um kleinere Schäden durch Waschanlagen oder Wetter zu beheben. Es kann erforderlich sein, das Kompositmaterial zur Selbstheilung für eine bestimmte Zeit auf eine bestimmte Temperatur zu erwärmen, bevorzugt auf eine Temperatur unterhalb der Temperatur zur Härtung, bevorzugt ist eine Temperatur von 60 °C bis 100 °C.

Weitere Anwendungen sind Folien, Verklebungen, Formkörper beispielsweise hergestellt mit 3D-Druck, Folienbeschichtungen, Lacke, als Schutzbeschichtung gegen Rost, etc.

Entsprechend der Anwendung kann die Zusammensetzung noch weitere Stoffe enthalten, wie Lösungsmittel, Benetzungshilfen, Pigmente, Effektpigmente, Plättchen, Matrixmaterialien.

Weitere Einzelheiten und Merkmale ergeben sich aus der nachfolgenden Beschreibung von bevorzugten Ausführungsbeispielen in Verbindung mit den Unteransprüchen. Hierbei können die jeweiligen Merkmale für sich alleine oder zu mehreren in Kombination miteinander verwirklicht sein. Die Möglichkeiten, die Aufgabe zu lösen, sind nicht auf die Ausführungsbeispiele beschränkt.

Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente. Im Einzelnen zeigt:

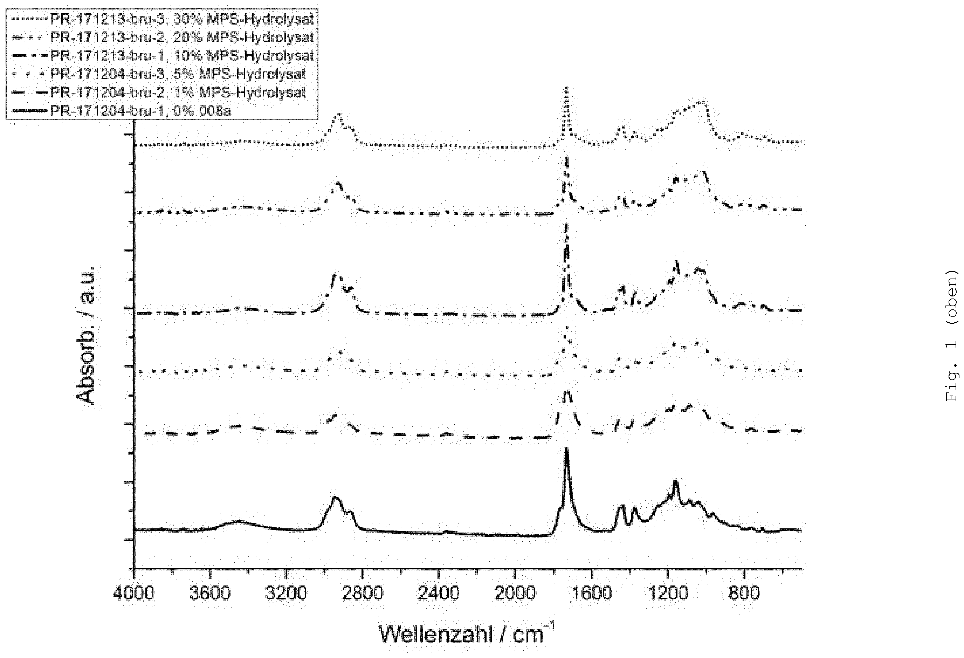

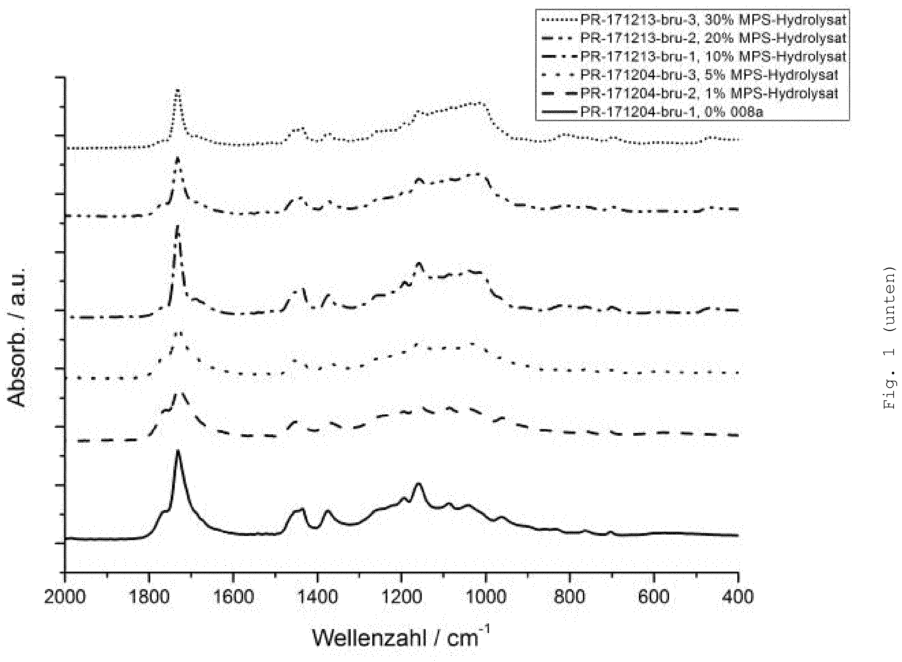

Fig. 1 Infrarotspektren (FT-IR) der Proben mit MPS-Hydrolysat (MPS: Mercaptopropyltrimethoxysilan) (oben 4000 - 600 $cm^{-1}$; unten 2000 - 400 $cm^{-1}$) ;

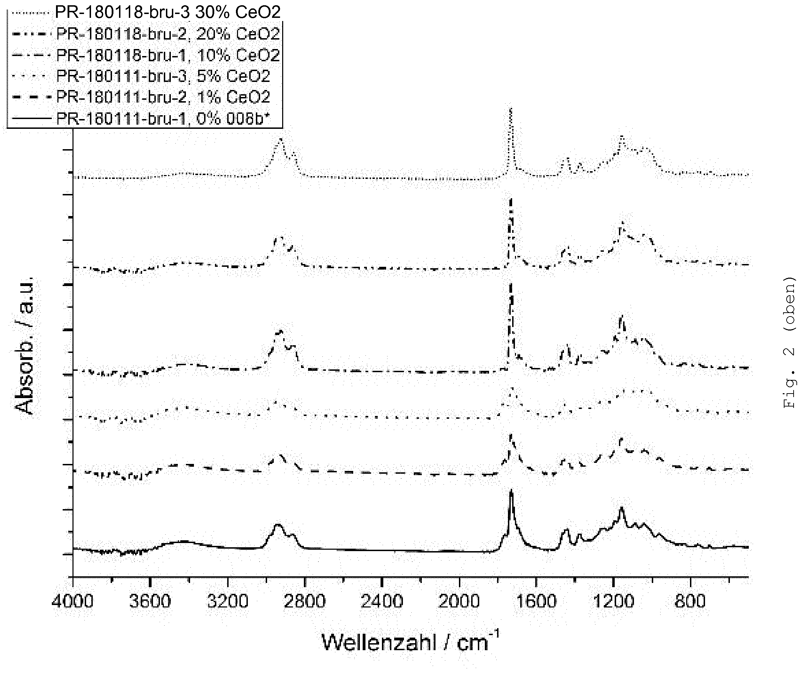

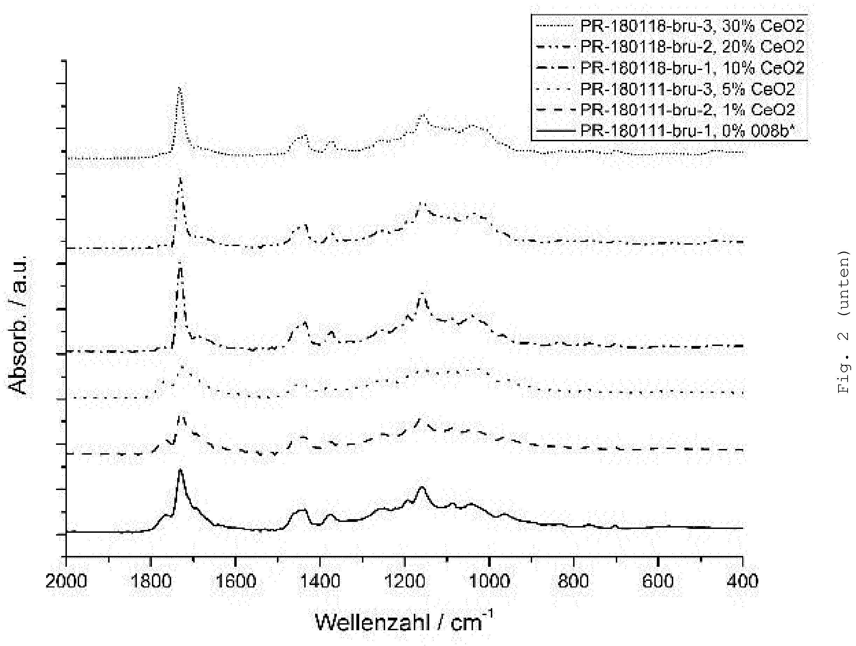

Fig. 2 Infrarotspektren (FT-IR) der Proben mit $CeO_2$/MPS-Modifizierung (oben 4000 - 600 $cm^{-1}$; unten 2000 - 400 $cm^{-1}$);

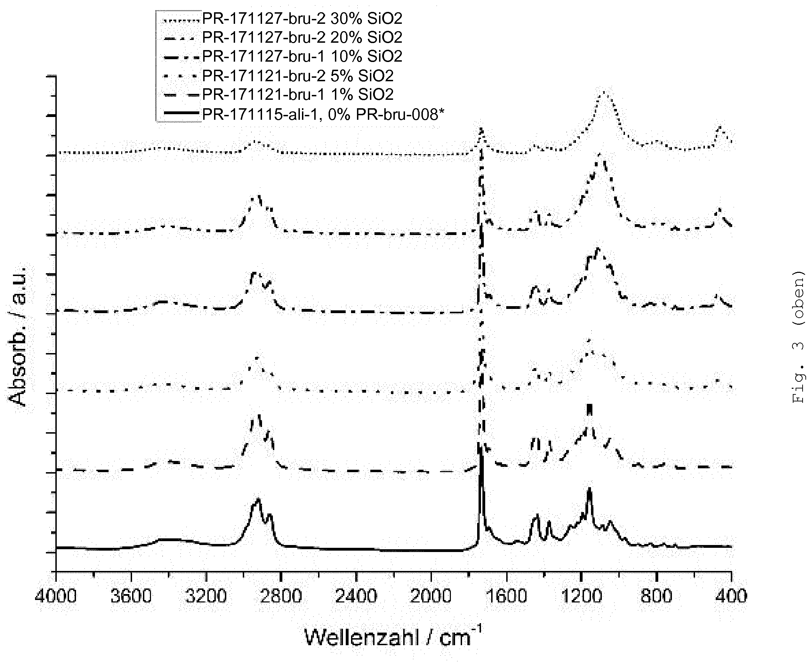

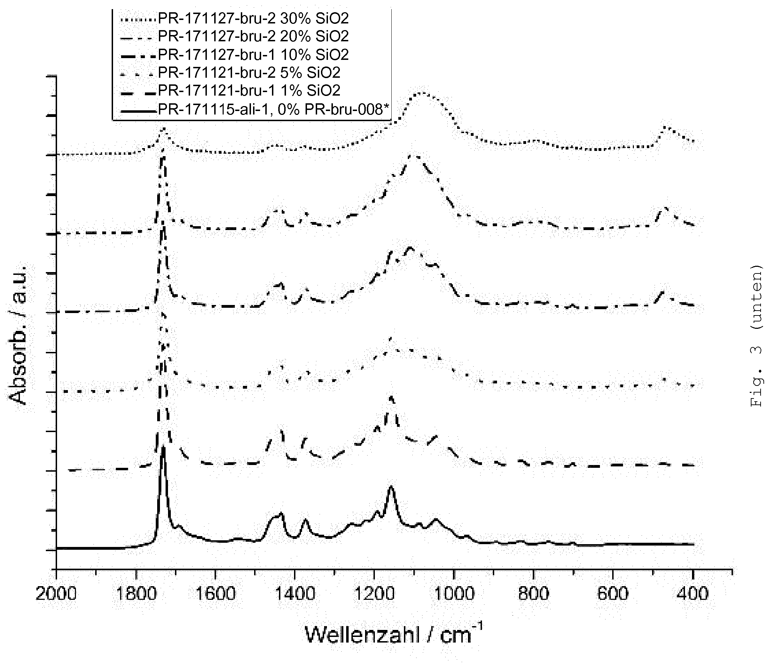

Fig. 3 Infrarotspektren (FT-IR) der Proben mit $SiO_2$/GPTES-Modifizierung (oben 4000 - 400 $cm^{-1}$; unten 2000 - 400 $cm^{-1}$);

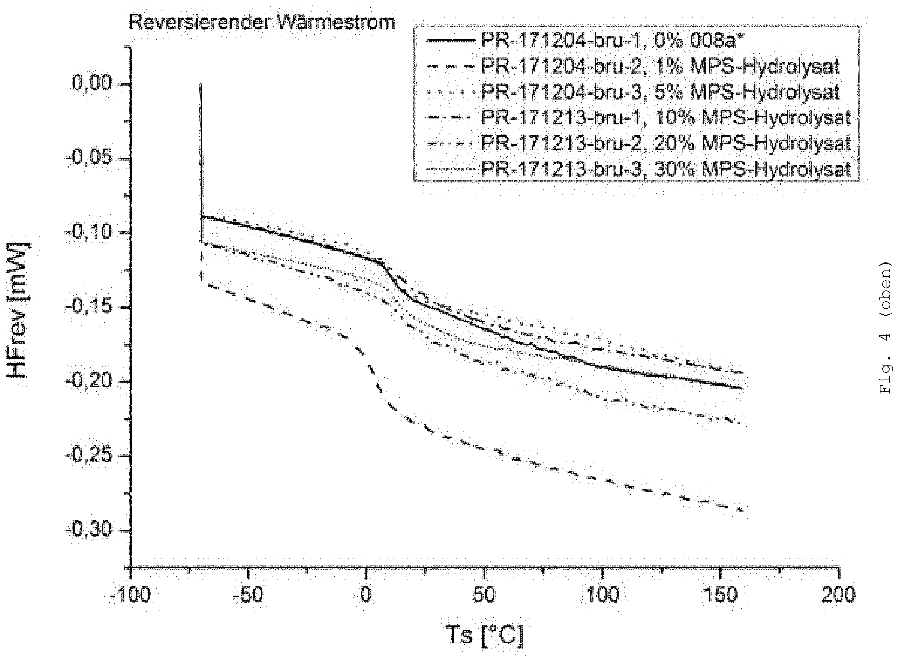

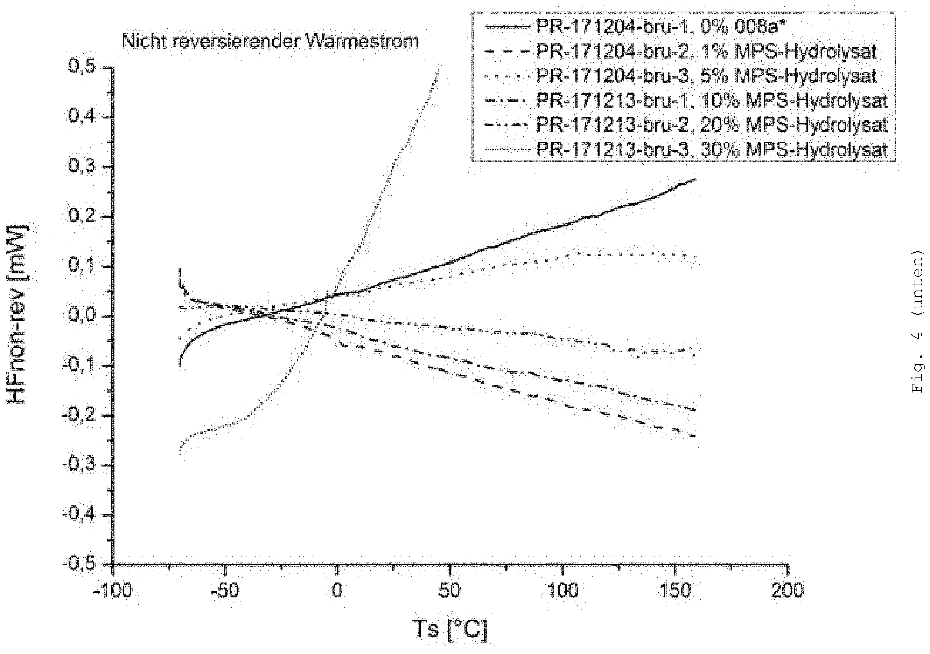

Fig. 4 Differential Scanning Calorimetry (DSC, TOPEM-Modus) der Proben mit MPS-Hydrolysat (oben: reversierender Wärmestrom; unten: nicht reversierender Wärmestrom);

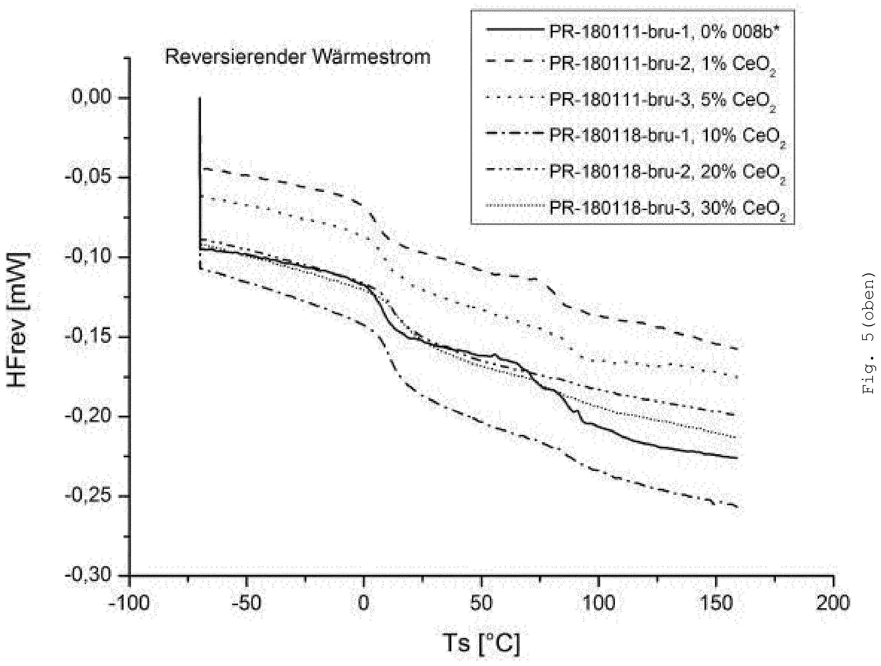

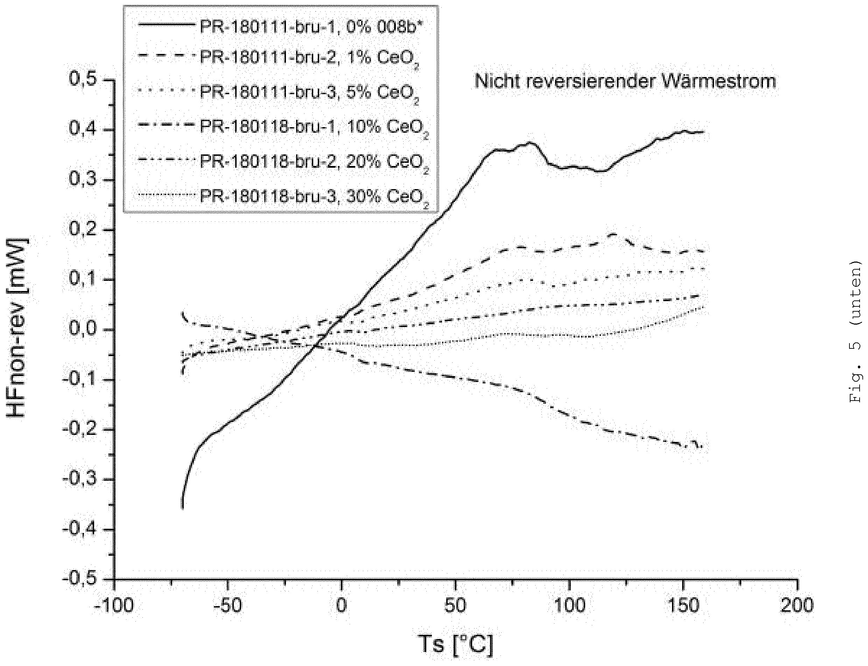

Fig. 5 Differential Scanning Calorimetry (DSC) der Proben mit $CeO_2$/MPS-Modifizierung (oben: reversierender Wärmestrom; unten: nicht reversierender Wärmestrom);

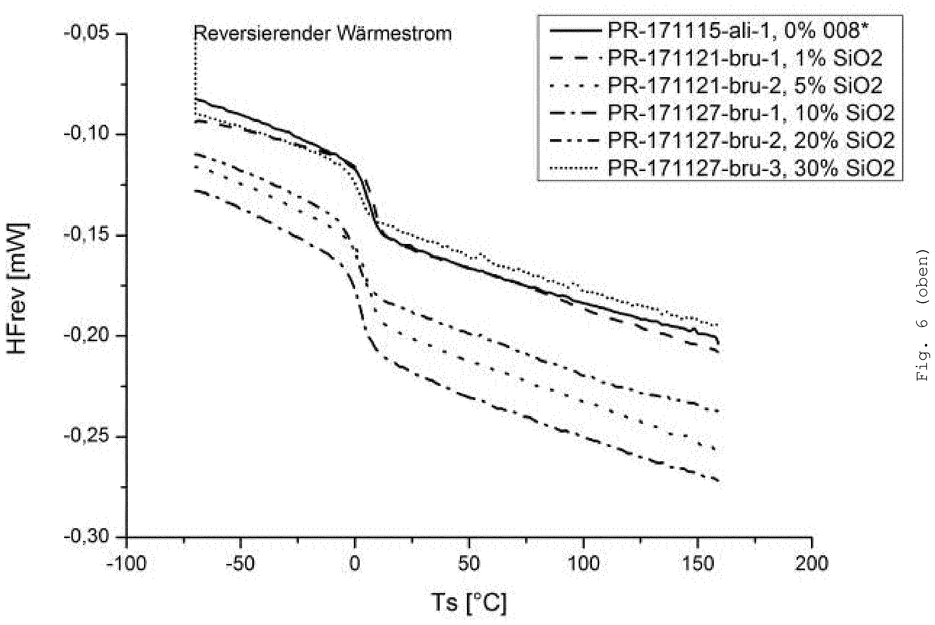

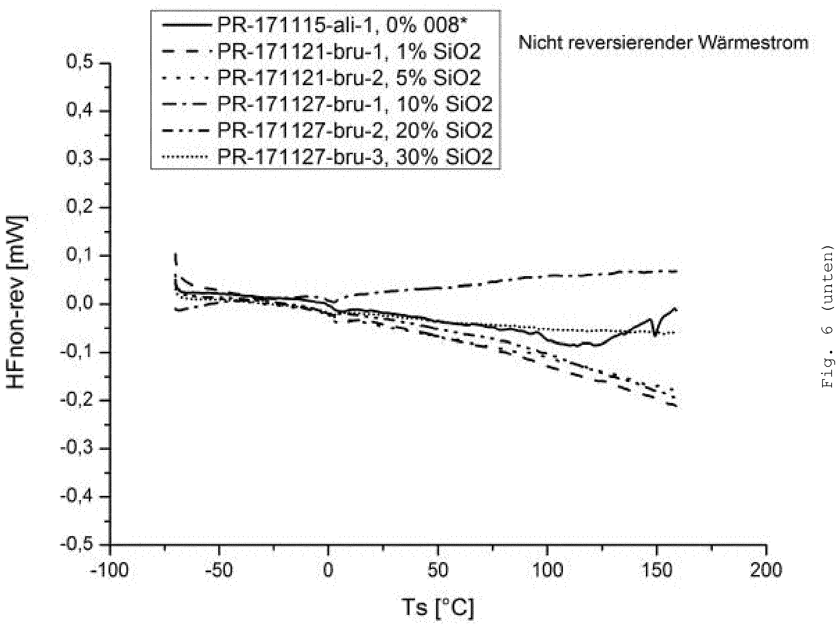

Fig. 6 Differential Scanning Calorimetry (DSC) der Proben mit $SiO_2$/GPTES-Modifizierung (oben: reversierender Wärmestrom; unten: nicht reversierender Wärmestrom);

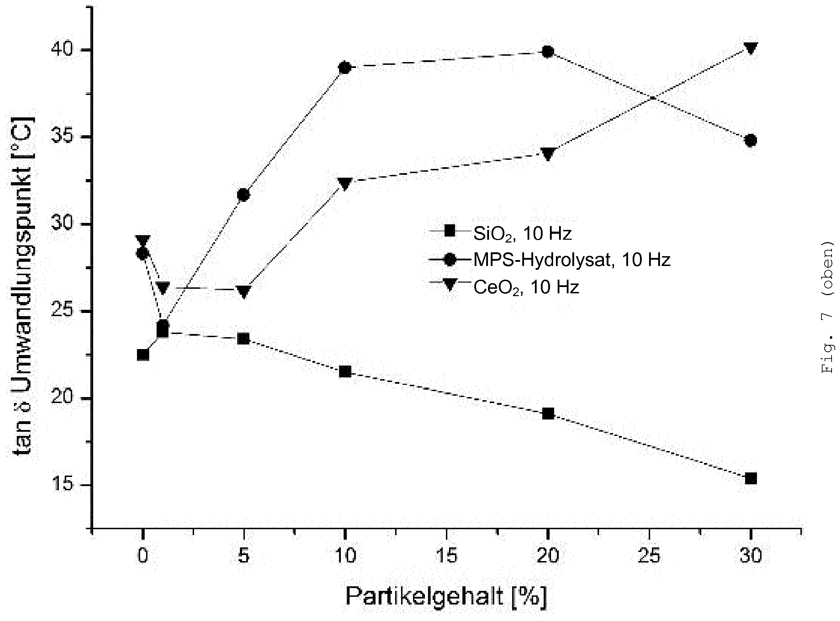

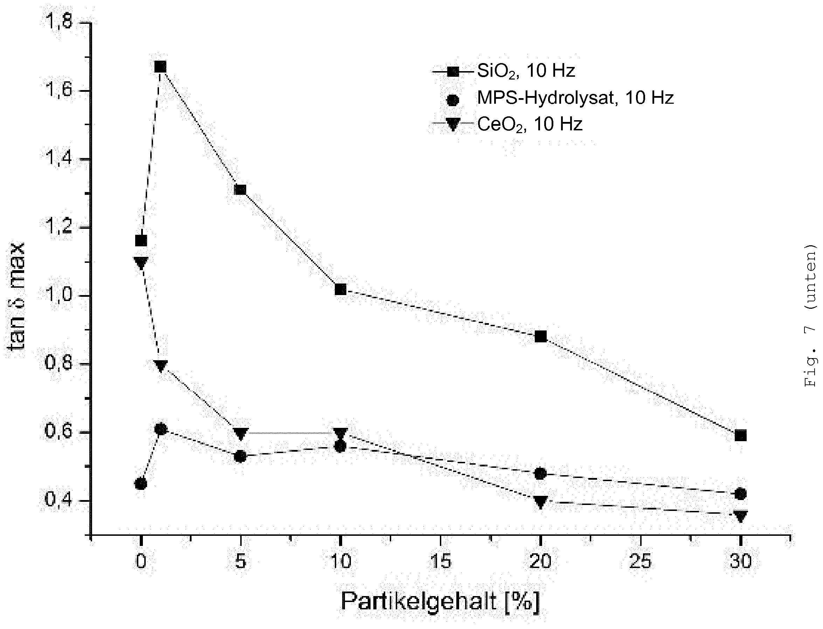

Fig. 7 $T_g$ (Maximum tan $\delta$-Signal, oben) und Maximalwert der Dämpfung bei $T_g$ (tan $\delta$ max, unten) für PR-Beschichtungen mit unterschiedlichen Gehalten $SiO_2$ / GPTES und $CeO_2$ / MPS;

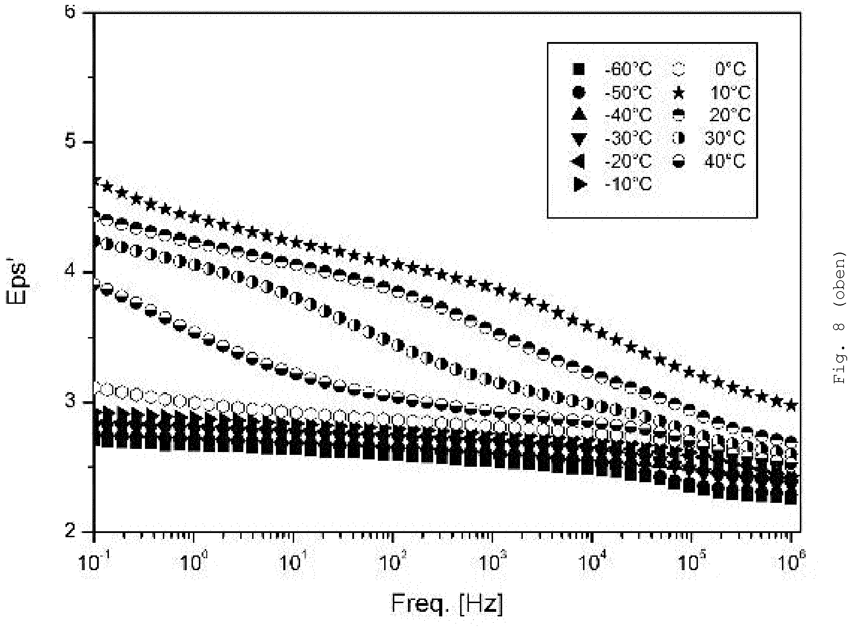

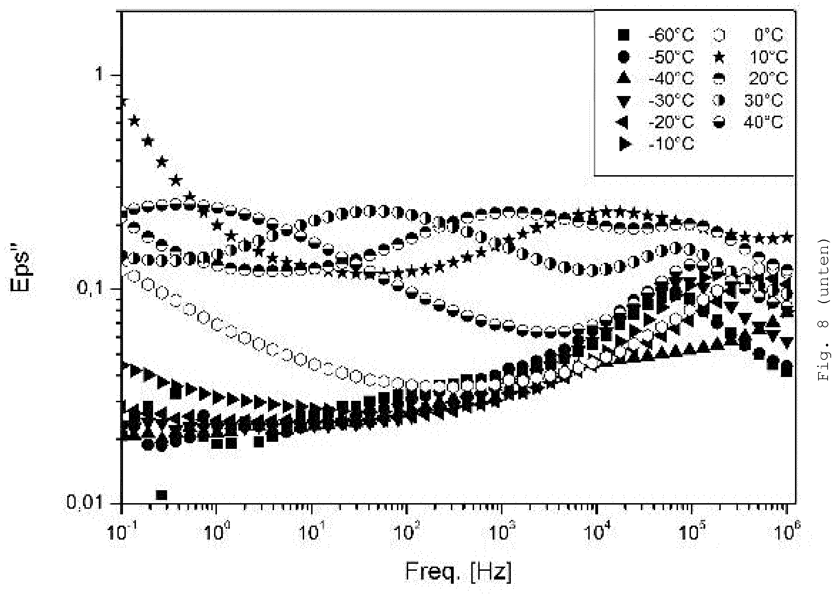

Fig. 8 DE-Spektroskopie für Proben mit 0 % $SiO_2$ (oben: Speichermodul Eps'; unten: Verlustmodul Eps");

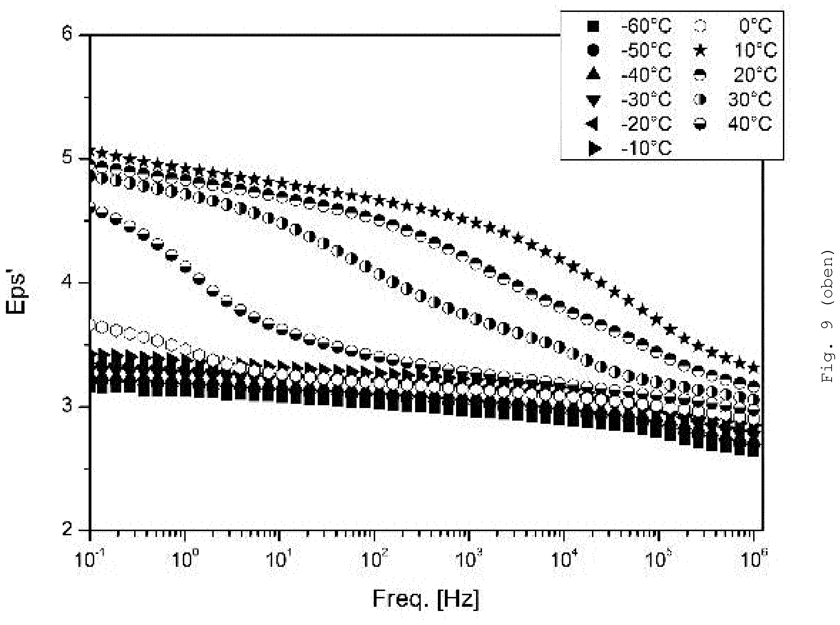

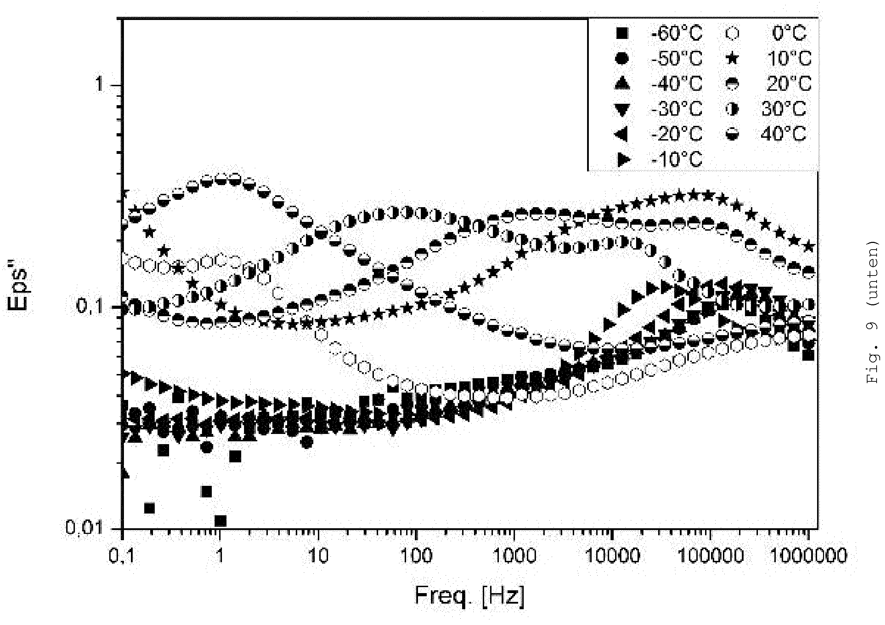

Fig. 9 DE-Spektroskopie für Proben mit 5 % $SiO_2$/GPTES-Modifizierung (oben: Speichermodul Eps'; unten: Verlustmodul Eps");

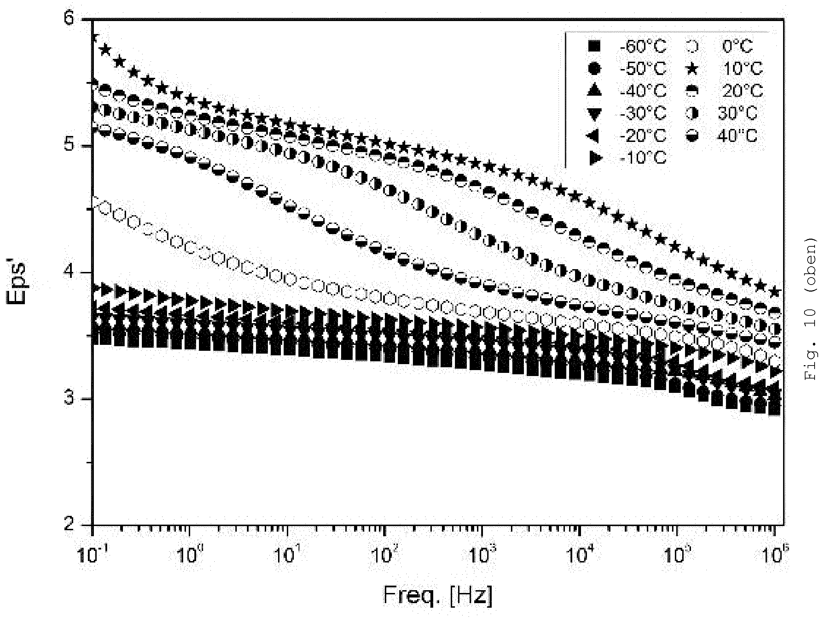

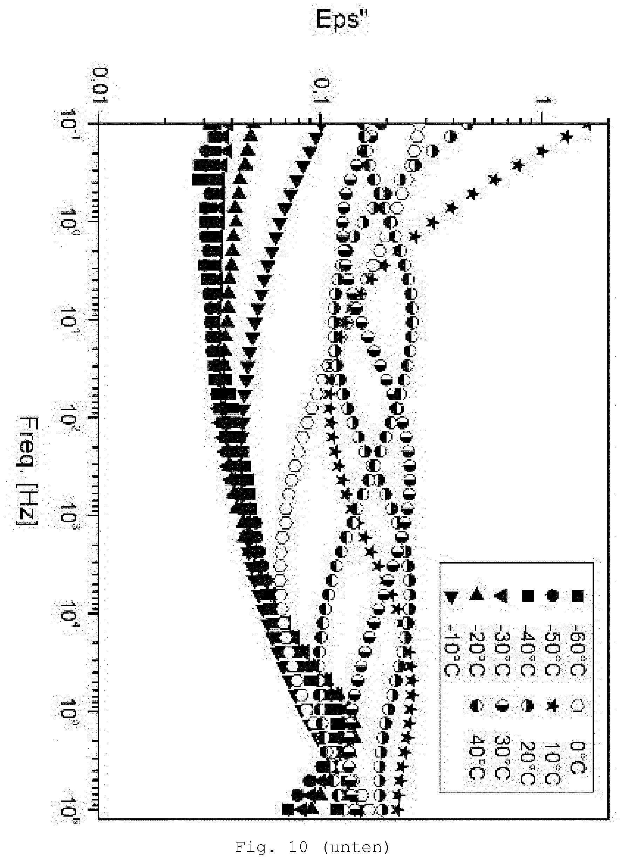

Fig. 10 DE-Spektroskopie für Proben mit 30 % $SiO_2$/GPTES-Modifizierung (oben: Speichermodul Eps'; unten: Verlustmodul Eps");

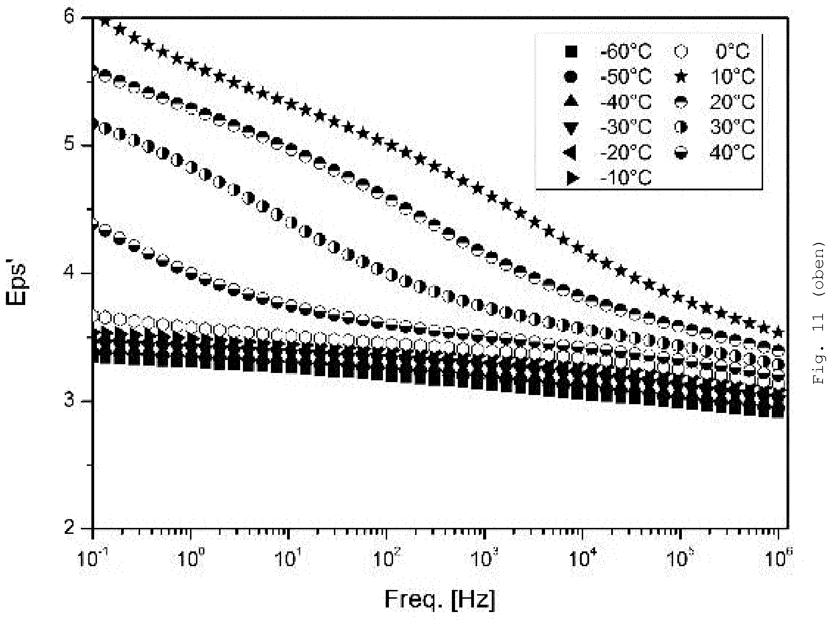

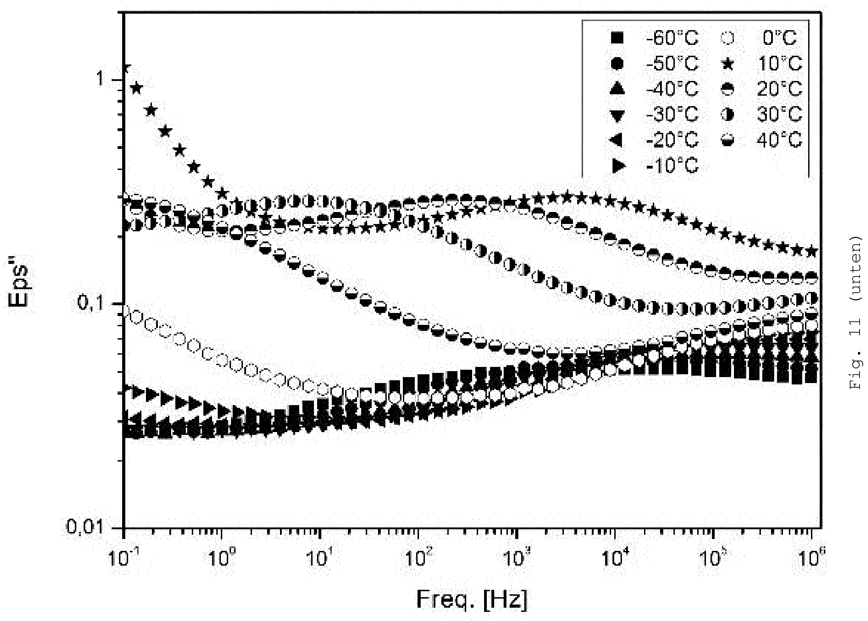

Fig. 11 DE-Spektroskopie für Proben mit 5 % MPS-Hydrolysat (oben: Speichermodul Eps'; unten: Verlustmodul Eps");

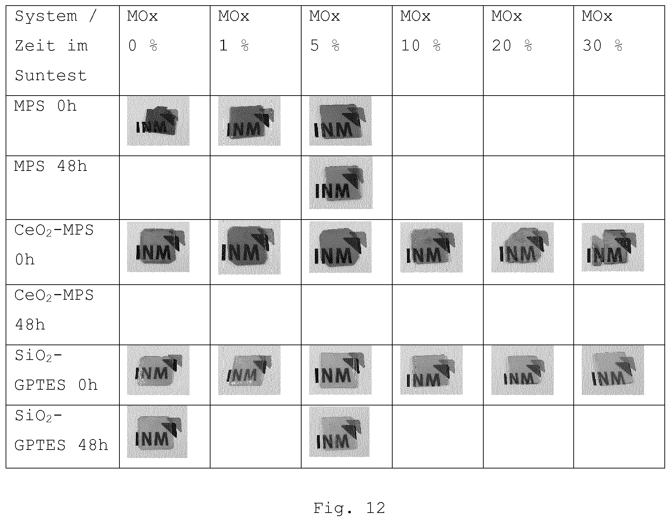

Fig. 12 Ergebnisse des Sun-Tests zur Transparenz und Bewitterungsstabilität (Gehalte in Gew.-%, Foliendicke: 1 mm) ;

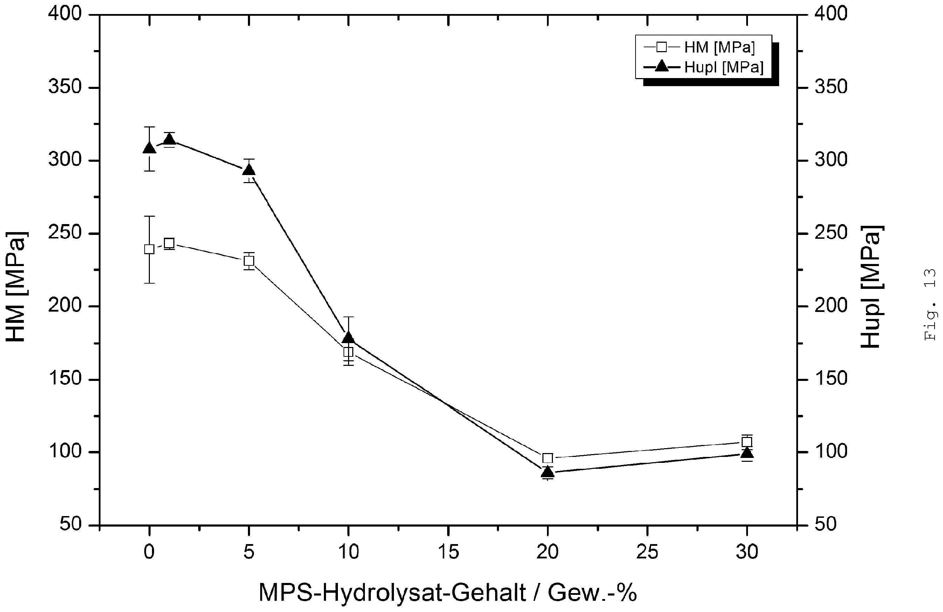

Fig. 13 Ergebnisse der Messung der Mikrohärte für PR modifiziert mit MPS-Hydrolysat (HM: Martenshärte; HUpl: Widerstand gegen plastische Verformung);

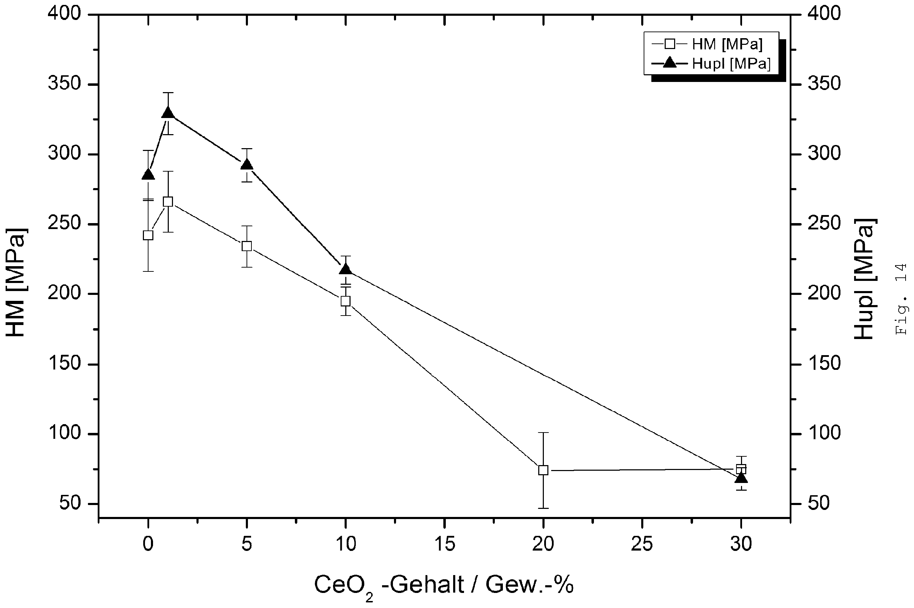

Fig. 14 Ergebnisse der Messung der Mikrohärte für PR modifiziert mit $CeO_2$/MPS-Hydrolysat;

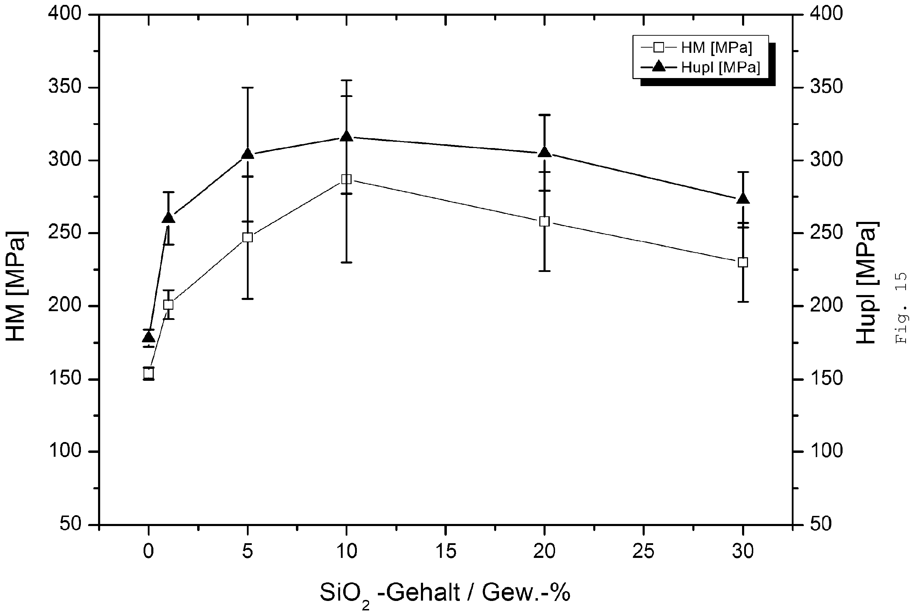

Fig. 15 Ergebnisse der Messung der Mikrohärte für PR modifiziert mit $SiO_2$/GPTES;

Fig. 16 Schematische Darstellung eines Slide-ring-Gels auf rein polymerer Basis;

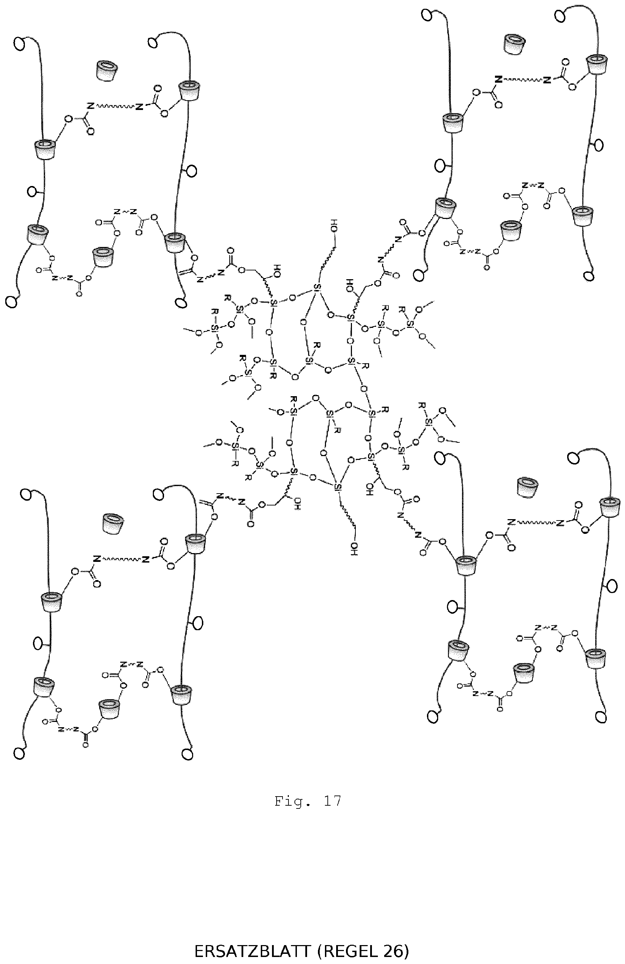

Fig. 17 Schematische Darstellung eines erfindungsgemäßen Slide-ring-Gels als Copolymer aus Polymer und (Hetero)polysiloxan;

Fig. 18 Schematische Darstellung eines erfindungsgemäßen Kompositmaterials erhalten durch Verknüpfung von Slidering-Gelen mit keramischen Partikeln;

Fig. 19 Schematische Darstellung eines erfindungsgemäßen Kompositmaterials erhalten durch Verknüpfung von Slidering-Gelen mit keramischen Partikeln oberflächenmodifiziert mit Polyorganosiloxanen.

## Ausführungsbeispiele

Tabelle 9 gibt den Anteil an Komponente b) als Anteil des Feststoffgehalts der Zusammensetzung an. Diese entspricht dem Gehalt der gehärteten Zusammensetzung. Für die Bezeichnung der Proben und in den Figuren wurde der Soll-Feststoffgehalt an Komponente b) verwendet.

Die Probenbezeichnungen mit "PR-" beziehen sich auf die ohne "S-" auf die zugehörigen Lacke in den Figuren "PR-S-" beziehen sich auf die gehärteten Beschichtungen, die Bezeichnungen "PR-" ohne "S-" auf die zugehörigen Lacke.

**Beispiel 1: Herstellung eines binären Basis-Polyrotaxans**

Zu 94,43 g einer RAMEB-Lösung (RAMEB: teilmethyliertes • - Cyclodextrin, Wacker Chemie) in Wasser (50 Gew.-%, 36 mmol) werden 1,35 ml (1,12 g, 10,8 mmol) Styrol (dest.) und 5 ml Methanol (syn. grad) gegeben. Anschließend wird Stickstoff über 1 h eingeleitet. 0,140 g, 0,43 mmol Radikalstarter VA044 (2,2'-azobis[2-imidazolin-2-yl)propan) werden 1 ml dest. Wasser gelöst und ebenfalls 5 min mit Stickstoff entgast. Nach 1 h wird das System geschlossen. Zur Reaktionsmischung werden 8,2 ml (4,9 g, 72 mmol) 2,3-Dimethyl-1,3-butadien, 0,042 ml Regler Tetrachlorkohlenstoff (0,1 mol % auf die Polymerkette, 5 min entgast) und der Starter VA044 dazugegeben. Anschließend wurde die Temperatur auf 38 °C eingestellt und die Reaktionsmischung für 48 h weitergerührt. Nach Beendigung der Reaktion wird das Polyrotaxan-Wasser Gemisch zu kaltem Wasser mit 10 Vol.-% EtOH gegeben und für 20 min mit Stickstoff gespült. Nach der Filtration wird der Vorgang noch zweimal wiederholt. Das gefällte Polyrotaxan wird im Anschluss für 3 d im Vakuumtrockenschrank bei 80 °C getrocknet, in Chloroform gelöst und nach Einengen des Chloroforms wurde THF hinzugegeben und anschließend im Vakuum getrocknet. Die Analyse mittels Gelpermeationschromatographie ergibt ein mittleres Molekulargewicht von M = 80000 g/mol.

**Beispiel 2: Herstellung eines ternären Basis-Polyrotaxans (PR-bru008a*/PR-bru008b*)**

Zu 94,43 g einer RAMEB-Lösung (RAMEB: teilmethyliertes • - Cyclodextrin, Wacker Chemie) in Wasser (50 Gew.-%, 36 mmol) werden 0,34 ml (0,375 g, 3,6 mmol) Styrol (dest.) und 5 ml Methanol (syn. grad) gegeben. Anschließend wird Stickstoff über 1 h eingeleitet. 0,140 g, 0,43 mmol Radikalstarter VA044 (2,2'-azobis[2-imidazolin-2-yl)propan) werden 1 ml dest. Wasser gelöst und ebenfalls 5 min mit Stickstoff entgast. Nach 1 h wird das System geschlossen. Zur Reaktionsmischung werden 8,2 ml (4,9 g, 72 mmol) 2,3-Dimethyl-1,3-butadien, 6,52 ml (6,20 g, 72 mmol) Methylacrylat, 0,036 ml Regler Dodecanthiol (0,1 mol % auf die Polymerkette, 5 min entgast) und der Starter VA044 dazugegeben. Anschließend wurde die Temperatur auf 38 °C eingestellt und die Reaktionsmischung für 48 h weitergerührt. Nach Beendigung der Reaktion wird das Polyrotaxan-Wasser Gemisch zu kaltem Wasser mit 10 Vol.-% EtOH gegeben und für 20 min mit Stickstoff gespült. Nach der Filtration wird der Vorgang noch zweimal wiederholt. Das gefällte Polyrotaxan wird im Anschluss für 3 d im Vakuumtrockenschrank bei 80 °C getrocknet, in Chloroform gelöst und nach Einengen des Chloroforms wurde THF hinzugegeben und anschließend im Vakuum getrocknet. Die Analyse mittels Gelpermeationschromatographie ergibt ein mittleres Molekulargewicht von M = 26000 g/mol (Molenbruch 0,012 Styrol, 0,004 Cyclodextrin, 0,514 Isopren, 0,469 Methacrylat).

Basis-Polyrotaxan PR-bru008*: analog PR-bru008a*/PR-bru008b* aber mit 0,012 ml Regler Dodecanthiol (0,033 mol % auf die Polymerkette). Die Analyse mittels Gelpermeationschromatographie ergibt ein mittleres Molekulargewicht von M = 57000 g/mol.

Die molare Masse und Dispersitäten der Polymere wurde mittels Gel Permeations Chromatographie (GPC) bei Raumtemperatur gemessen. Die Trennung erfolgte mit zwei Säulen von PSS (Polymer Standards Service, Mainz, Germany (PSS)) SDV $10^3$ Å und $10^5$ Å. Zur Aufzeichnung wurde ein Brechungsindex-Detektor (Shodex RI-101) verwendet. Die mobile Phase war Tetrahydrofuran (THF) und die Flussrate wurde bei 1 ml/min mit einer Viscotek VE1121 GPC Pumpe gehalten. Die GPC Kalibierungskurve wurde mittels mehrerer Polystyrol Standards (von 1090000 bis 682 g/mol) von PSS bestimmt.

Für die erhaltenen Proben wurden folgende Auffädelungsraten bestimmt:

PR_bru008*: 1,57%
PR_bru008a*: 3,42%
PR_bru008b*: 3,73%

**Beispiel 3: Herstellung der Epoxysilan-modifizierten SiO$_2$-Partikel (SiO$_2$ / GPTES)**

Zu 2,5 ml (3,085 g SiO$_2$) MIBK-ST (Nissan, Organosilicasol™) wurden 1.61 ml GPTES gegeben und 4 d bei 40 °C gerührt. Die erhaltene Dispersion wurde ohne weitere Aufarbeitung für die Herstellung der Komposite eingesetzt. Die Dispersion hat einen Feststoffgehalt von 33,5 Gew.-%. Die verwendeten SiO$_2$-Partikel haben eine Größenverteilung von d$_{90}$ < 15 nm. Die meisten Partikel haben einen Durchmesser von 10-15 nm.

**Beispiel 4: Herstellung des Mercaptosilan-Hydrolysates (MPS-Hydrolysat)**

5,8911 g 3-Mercaptopropyltrimethoxysilan (MPS) werden mit 0,3375 g dest. Wasser versetzt. Die zunächst zweiphasige Emulsion wurde nach 23 h Rühren bei 60 °C unter Schutzgas zu einer transparenten Mischung. Der Feststoffgehalt der resultierenden Mischung wurde nach Entfernen des Lösungsmittels bei 100 °C im Vakuumtrockenschrank gravimetrisch auf 25 Gew.-% bestimmt.

**Beispiel 5: Herstellung der Mercaptosilan-modifizierten CeO$_2$-Partikel (CeO$_2$ / MPS)**

0,3398 g einer 20 Gew.-%-ige CeO$_2$ Dispersion in Wasser (Sigma-Aldrich) wurden mit 1,974 g 3 Mercaptopropyltrimethoxysilan (MPS) versetzt. Die zunächst zweiphasige Emulsion wurde nach 17 h rühren bei 60 °C unter Schutzgas zu einer transparenten Dispersion. Der Feststoffgehalt der resultierenden Dispersion wurde nach Entfernen des Lösungsmittels bei 100 °C im Vakuumtrockenschrank gravimetrisch auf 81,3 Gew.-% bestimmt. Die verwendeten CeO$_2$-Partikel haben eine Partikelgröße von 30-50 nm.

**Beschichtungsmaterialien**

**Beispiel 6: ungefülltes, vernetztes Polymer: PR-S-171214-bru-1 (PR-bru008*; Beschichtung) / PR-S-171204-bru-1 (PR-bru008a*) / PR-S-180111-bru-1 (PR-bru008b*) / PR-171115-ali-1 (PR-bru008*; Film)**

1,3 g Polyrotaxan-Stammlack (30 Gew.-% PR-bru008*/PR-bru008a*/PR-bru008b* in MPA) werden mit 0,613 g MPA (1-Methoxy-2-propylacetat) verdünnt. Nach 5 min Rühren werden 0,075 g Vernetzer Desmodur N 3900 Stammlösung (10 Gew.-% Desmodur N 3900 in MPA) hinzugegeben und nochmals 5 min durchmischt. Die resultierende Mischung hat einen Feststoffgehalt von 20 Gew.-% und eine Gesamtmasse von 1,99 g. Im Anschluss wird der Lack mit je 0,8 ml mittels spin coating auf einem schwarz lackierten Edelstahlblech oder einem mit Ethanol gereinigten Edelstahl Substrat aufgebracht und bei 120 °C für 3 h im Ofen ausgehärtet. Es bildet sich eine gut haftende, transparente Beschichtung.

**Beispiel 7: PR-S-171121-bru-1 PR mit 1% SiO$_2$ / GPTES**

5 g Polyrotaxan-Stammlack (30 Gew.-% PR-bru008* in MPA) werden mit 2,382 g MPA verdünnt. Nach 5 min Rühren werden 0,051 g funktionalisierte SiO$_2$-Partikel aus Beispiel 3 hinzugegeben und 30 min gerührt. Nach Zugabe von 0,2871 g Vernetzer Desmodur N 3900 Stammlösung (10 Gew.-% Desmodur N 3900 in MPA) hat die resultierende Mischung einen Feststoffgehalt von 20 Gew.-% und eine Gesamtmasse von 7,72 g. Im Anschluss wird der Lack mit je 0,8 ml mittels spin coating auf einem schwarz lackierten Edelstahlblech oder einem mit Ethanol gereinigten Edelstahl Substrat aufgebracht und bei 120 °C für 3 h im Ofen ausgehärtet. Es bildet sich eine gut haftende, transparente Beschichtung.

**Beispiel 8: PR-S-171121-bru-2 5% SiO$_2$ / GPTES**

5 g Polyrotaxan-Stammlack (30 Gew.-% PR-bru008* in MPA) werden mit 2,484 g MPA verdünnt. Nach 5 min Rühren werden 0,255 g funktionalisierte SiO$_2$-Partikel aus Beispiel 3 hinzugegeben und 30 min gerührt. Nach Zugabe von 0,2871 g Vernetzer Desmodur N 3900 Stammlösung (10 Gew.-% Desmodur N 3900 in MPA) hat die resultierende Mischung einen Feststoffgehalt von 20 Gew.-% und eine Gesamtmasse von 8,03 g. Im Anschluss wird der Lack mit je 0,8 ml mittels spin coating auf einem schwarz lackierten Edelstahlblech oder einem mit Ethanol gereinigten Edelstahl Substrat aufgebracht und bei 120 °C für 3 h im Ofen ausgehärtet. Es bildet sich eine gut haftende, transparente Beschichtung.

**Beispiel 9: PR-S-171127-bru-1 10% SiO$_2$ / GPTES**

5 g Polyrotaxan-Stammlack (30 Gew.-% PR-bru008* in MPA) werden mit 2,611 g MPA verdünnt. Nach 5 min Rühren werden 0,510 g funktionalisierte SiO$_2$-Partikel aus Beispiel 3 hinzugegeben und 30 min gerührt. Nach Zugabe von 0,2871 g Vernetzer Desmodur N 3900 Stammlösung (10 Gew.-% Desmodur N 3900 in MPA) hat die resultierende Mischung einen Feststoffgehalt von 20 Gew.-% und eine Gesamtmasse von 8,41 g. Im Anschluss wird der Lack mit je 0,8 ml mittels spin coating auf einem schwarz lackierten Edelstahlblech oder einem mit Ethanol gereinigten Edelstahl Substrat aufgebracht und bei 120 °C für 3 h im Ofen ausgehärtet. Es bildet sich eine gut haftende, transparente Beschichtung.

**Beispiel 10: PR-S-171127-bru-2 20% SiO$_2$ / GPTES**

5 g Polyrotaxan-Stammlack (30 Gew.-% PR-bru008* in MPA) werden mit 2,866 g MPA verdünnt. Nach 5 min Rühren werden 1,019 g funktionalisierte SiO$_2$-Partikel aus Beispiel 3 hinzugegeben und 30 min gerührt. Nach Zugabe von 0,2871 g Vernetzer Desmodur N 3900 Stammlösung (10 Gew.-% Desmodur N 3900 in MPA) hat die resultierende Mischung einen Feststoffgehalt von 20 Gew.-% und eine Gesamtmasse von 9,17 g. Im Anschluss wird der Lack mit je 0,8 ml mittels spin coating auf einem schwarz lackierten Edelstahlblech oder einem mit Ethanol gereinigten Edelstahl Substrat aufgebracht und bei 120 °C für 3 h im Ofen ausgehärtet. Es bildet sich eine gut haftende, transparente Beschichtung.

**Beispiel 11: PR-S-171127-bru-3 30% SiO$_2$ / GPTES**

5 g Polyrotaxan-Stammlack (30 Gew.-% PR-bru008* in MPA) werden mit 3,121 g MPA verdünnt. Nach 5 min Rühren werden 1,529 g funktionalisierte SiO$_2$-Partikel aus Beispiel 3 hinzugegeben und 30 min gerührt. Nach Zugabe von 0,2871 g Vernetzer Desmodur N 3900 Stammlösung (10 Gew.-% Desmodur N 3900 in MPA) hat die resultierende Mischung einen Feststoffgehalt von 20 Gew.-% und eine Gesamtmasse von 9,94 g. Im Anschluss wird der Lack mit je 0,8 ml mittels spin coating auf einem schwarz lackierten Edelstahlblech oder einem mit Ethanol gereinigten Edelstahl Substrat aufgebracht und bei 120 °C für 3 h im Ofen ausgehärtet. Es bildet sich eine gut haftende, transparente Beschichtung.

In Figur 3 sind die IR-Spektren der Lacke der Beispiele 6, 7, 6, 9, 10 und 11 gezeigt. Bei ca. 1050 cm$^{-1}$ ist die Zunahme der Si-O-Si-Absorption mit steigendem Gehalt an MPS-Hydrolysat zu erkennen.

Figur 6 zeigt die Ergebnisse der DSC-Messungen der Proben der Beispiele 6, 7, 6, 9, 10 und 11.

**Beispiel 12: PR-S-171204-bru-2 1% MPS-Hydrolysat**

5 g Polyrotaxan-Stammlack (30 Gew.-% PR-bru008a* in MPA) werden mit 2,282 g MPA verdünnt. Nach 5 min Rühren werden 0,062 g MPS-Hydrolysat aus Beispiel 4 hinzugegeben und 30 min gerührt. Nach Zugabe von 0,467 g Vernetzer Desmodur N 3900 Stammlösung (10 Gew.-% Desmodur N 3900 in MPA) hat die resultierende Mischung einen Feststoffgehalt von 20 Gew.-% und eine Gesamtmasse von 7,81 g. Im Anschluss wird der Lack mit je 0,8 ml mittels spin coating auf einem schwarz lackierten Edelstahlblech oder einem mit Ethanol gereinigten Edelstahl Substrat aufgebracht und bei 120 °C für 3 h im Ofen ausgehärtet. Es bildet sich eine gut haftende, transparente Beschichtung.

**Beispiel 13: PR-S-171204-bru-3 5% MPS-Hydrolysat**

5 g Polyrotaxan-Stammlack (30 Gew.-% PR-bru008a* in MPA) werden mit 2,344 g MPA verdünnt. Nach 5 min Rühren werden 0,309 g MPS-Hydrolysat aus Beispiel 4 hinzugegeben und 30 min gerührt. Nach Zugabe von 0,467 g Vernetzer Desmodur N 3900 Stammlösung (10 Gew.-% Desmodur N 3900 in MPA) hat die resultierende Mischung einen Feststoffgehalt von 20 Gew.-% und eine Gesamtmasse von 8,12 g. Im Anschluss wird der Lack mit je 0,8 ml mittels spin coating auf einem schwarz lackierten Edelstahlblech oder einem mit Ethanol gereinigten Edelstahl Substrat aufgebracht und bei 120 °C für 3 h im Ofen ausgehärtet. Es bildet sich eine gut haftende, transparente Beschichtung.

**Beispiel 14: PR-S-171213-bru-1 10% MPS-Hydrolysat**

5 g Polyrotaxan-Stammlack (30 Gew.-% PR-bru008a* in MPA) werden mit 2,421 g MPA verdünnt. Nach 5 min Rühren werden 0,619 g MPS-Hydrolysat aus Beispiel 4 hinzugegeben und 30 min gerührt. Nach Zugabe von 0,467 g Vernetzer Desmodur N 3900 Stammlösung (10 Gew.-% Desmodur N 3900 in MPA) hat die resultierende Mischung einen Feststoffgehalt von 20 Gew.-% und eine Gesamtmasse von 8,51 g. Im Anschluss wird der Lack mit je 0,8 ml mittels spin coating auf einem schwarz lackierten Edelstahlblech oder einem mit Ethanol gereinigten Edelstahl Substrat aufgebracht und bei 120 °C für 3 h im Ofen ausgehärtet. Es bildet sich eine gut haftende, transparente Beschichtung.

**Beispiel 15: PR-S-171213-bru-2 20% MPS-Hydrolysat**

5 g Polyrotaxan-Stammlack (30 Gew.-% PR-bru008a* in MPA) werden mit 2,576 g MPA verdünnt. Nach 5 min Rühren werden 1,237 g MPS-Hydrolysat aus Beispiel 4 hinzugegeben und 30 min gerührt. Nach Zugabe von 0,467 g Vernetzer Desmodur N 3900 Stammlösung (10 Gew.-% Desmodur N 3900 in MPA) hat die resultierende Mischung einen Feststoffgehalt von 20 Gew.-% und eine Gesamtmasse von 9,28 g. Im Anschluss wird der Lack mit je 0,8 ml mittels spin coating auf einem schwarz lackierten Edelstahlblech oder einem mit Ethanol gereinigten Edelstahl Substrat aufgebracht und bei 120 °C für 3 h im Ofen ausgehärtet. Es bildet sich eine gut haftende, transparente Beschichtung.

**Beispiel 16: PR-S-171213-bru-3 30% MPS-Hydrolysat**

5 g Polyrotaxan-Stammlack (30 Gew.-% PR-bru008a* in MPA) werden mit 2,731 g MPA verdünnt. Nach 5 min Rühren werden 1,856 g MPS-Hydrolysat aus Beispiel 4 hinzugegeben und 30 min gerührt. Nach Zugabe von 0,467 g Vernetzer Desmodur N 3900 Stammlösung (10 Gew.-% Desmodur N 3900 in MPA) hat die resultierende Mischung einen Feststoffgehalt von 20 Gew.-% und eine Gesamtmasse von 10,05 g. Im Anschluss wird der Lack mit je 0,8 ml mittels spin coating auf einem schwarz lackierten Edelstahlblech oder einem mit Ethanol gereinigten Edelstahl Substrat aufgebracht und bei 120 °C für 3 h im Ofen ausgehärtet. Es bildet sich eine gut haftende, transparente Beschichtung.

In Figur 1 sind die IR-Spektren der Lacke der Beispiele 6, 12, 13, 14, 15 und 16 gezeigt. Bei ca. 1050 cm$^{-1}$ ist die Zunahme der Si-O-Si-Absorption mit steigendem Gehalt an MPS-Hydrolysat zu erkennen.

Figur 4 zeigt die Ergebnisse der DSC-Messungen der Proben der Beispiele 6, 12, 13, 14, 15 und 16.

**Beispiel 17: PR-S-180111-bru-2 1% CeO$_2$ / MPS**

5,003 g Polyrotaxan-Stammlack (30 Gew.-% PR-bru008b* in MPA) werden mit 2,269 g MPA verdünnt. Nach 5 min Rühren werden 0,0196 g funktionalisierte CeO$_2$-Partikel aus Beispiel 5 hinzugegeben und 30 min gerührt. Nach Zugabe von 0,574 g Vernetzer Desmodur N 3900 Stammlösung (10 Gew.-% Desmodur N 3900 in MPA) hat die resultierende Mischung einen Feststoffgehalt von 20 Gew.-% und eine Gesamtmasse von 7,87 g. Im Anschluss wird der Lack mit je 0,8 ml mittels spin coating auf einem schwarz lackierten Edelstahlblech oder einem mit Ethanol gereinigten Edelstahl Substrat aufgebracht und bei 120 °C für 3 h im Ofen ausgehärtet. Es bildet sich eine gut haftende, transparente Beschichtung.

**Beispiel 18: PR-S-180111-bru-3 5% CeO$_2$ / MPS**

5,000 g Polyrotaxan-Stammlack (30 Gew.-% PR-bru008b* in MPA) werden mit 2,504 g MPA verdünnt. Nach 5 min Rühren werden 0,0998 g funktionalisierte CeO$_2$-Partikel aus Beispiel 5 hinzugegeben und 30 min gerührt. Nach Zugabe von 0,575 g Vernetzer Desmodur N 3900 Stammlösung (10 Gew.-% Desmodur N 3900 in MPA) hat die resultierende Mischung einen Feststoffgehalt von 20 Gew.-% und eine Gesamtmasse von 8,18 g. Im Anschluss wird der Lack mit je 0,8 ml mittels spin coating auf einem schwarz lackierten Edelstahlblech oder einem mit Ethanol gereinigten Edelstahl Substrat aufgebracht und bei 120 °C für 3 h im Ofen ausgehärtet. Es bildet sich eine gut haftende, transparente Beschichtung.

**Beispiel 19: PR-S-180118-bru-1 10% CeO$_2$ / MPS**

4,808 g Polyrotaxan-Stammlack (30 Gew.-% PR-bru008b* in MPA) werden mit 2,678 g MPA verdünnt. Nach 5 min Rühren werden 0,182 g funktionalisierte CeO$_2$-Partikel aus Beispiel 5 hinzugegeben und 30 min gerührt. Nach Zugabe von 0,549 g Vernetzer Desmodur N 3900 Stammlösung (10 Gew.-% Desmodur N 3900 in MPA) hat die resultierende Mischung einen Feststoffgehalt von 20 Gew.-% und eine Gesamtmasse von 8,22 g. Im Anschluss wird der Lack mit je 0,8 ml mittels spin coating auf einem schwarz lackierten Edelstahlblech oder einem mit Ethanol gereinigten Edelstahl Substrat aufgebracht und bei 120 °C für 3 h im Ofen ausgehärtet. Es bildet sich eine gut haftende, transparente Beschichtung.

**Beispiel 20: PR-S-180118-bru-2 20% CeO$_2$ / MPS**

4,397 g Polyrotaxan-Stammlack (30 Gew.-% PR-bru008b* in MPA) werden mit 2,982 g MPA verdünnt. Nach 5 min Rühren werden 0,338 g funktionalisierte CeO$_2$-Partikel aus Beispiel 5 hinzugegeben und 30 min gerührt. Nach Zugabe von 0,505 g Vernetzer Desmodur N 3900 Stammlösung (10 Gew.-% Desmodur N 3900 in MPA) hat die resultierende Mischung einen Feststoffgehalt von 20 Gew.-% und eine Gesamtmasse von 8,22 g. Im Anschluss wird der Lack mit je 0,8 ml mittels spin coating auf einem schwarz lackierten Edelstahlblech oder einem mit Ethanol gereinigten Edelstahl Substrat aufgebracht und bei 120 °C für 3 h im Ofen ausgehärtet. Es bildet sich eine gut haftende, transparente Beschichtung.

**Beispiel 21: PR-S-180118-bru-3 30% CeO$_2$ / MPS**

4,004 g Polyrotaxan-Stammlack (30 Gew.-% PR-bru008b* in MPA) werden mit 3,179 g MPA verdünnt. Nach 5 min Rühren werden 0,461 g funktionalisierte CeO$_2$-Partikel aus Beispiel 5 hinzugegeben und 30 min gerührt. Nach Zugabe von 0,458 g Vernetzer Desmodur N 3900 Stammlösung (10 Gew.-% Desmodur N 3900 in MPA) hat die resultierende Mischung einen Feststoffgehalt von 20 Gew.-% und eine Gesamtmasse von 8,10 g. Im Anschluss wird der Lack mit je 0,8 ml mittels spin coating auf einem schwarz lackierten Edelstahlblech oder einem mit Ethanol gereinigten Edelstahl Substrat aufgebracht und bei 120 °C für 3 h im Ofen ausgehärtet. Es bildet sich eine gut haftende, transparente Beschichtung.

In Figur 2 sind die IR-Spektren der Lacke der Beispiele 6, 17, 18, 19, 20 und 21 gezeigt. Bei ca. 1050 cm$^{-1}$ ist die Zunahme der Si-O-Si-Absorption mit steigendem Gehalt an MPS-Hydrolysat zu erkennen.

Figur 5 zeigt die Ergebnisse der DSC-Messungen der Proben der Beispiele 6, 17, 18, 19, 20 und 21.

**Beispiel 22: PR-S-180102-bru-1 mit Hydrophobierung am CD**

1,1 g Polyrotaxan-Stammlack (30 Gew.-% PR_bru008* in MPA) werden mit 0,024 g Hexylisocyanat Stammlösung (10 Gew.-% in MPA) versetzt, für 22 h bei 60 °C unter Stickstoff gerührt und anschließend mit 0,52 g MPA verdünnt. Nach 5 min Rühren werden 0,032 g Vernetzer Desmodur N 3900 Stammlösung (10 Gew.-% Desmodur N 3900 in MPA) hinzugegeben und nochmals 5 min durchmischt. Die resultierende Mischung hat einen Feststoffgehalt von 20 Gew.-% und eine Gesamtmasse von 1,67 g. Im Anschluss wird der Lack mit je 0,7 ml mittels spin coating auf einem schwarz lackierten Edelstahlblech oder einem mit Ethanol gereinigten Edelstahl Substrat aufgebracht und bei 120 °C für 3 h im Ofen ausgehärtet. Es bildet sich eine gut haftende, transparente Beschichtung.

**Beispiel 23: PR-S-180106-bru-1 mit Hydrophobierung am CD + 10% SiO$_2$ / GPTES**

1,01 g Polyrotaxan-Stammlack (30 Gew.-% PR-bru008* in MPA) werden mit 0,0026 g Hexylisocyanat Stammlösung (10 Gew.-% in MPA) versetzt, für 22 h bei 60 °C unter Stickstoff gerührt und anschließend mit 0,52 g MPA verdünnt. Nach 5 min Rühren werden 0,104 g funktionalisierte SiO$_2$-Partikel aus Beispiel 3 hinzugegeben und 30 min gerührt. Nach Zugabe von 0,029 g Vernetzer Desmodur N 3900 Stammlösung (10 Gew.-% Desmodur N 3900 in MPA) hat die resultierende Mischung einen Feststoffgehalt von 20 Gew.-% und eine Gesamtmasse von 1,69 g. Im Anschluss wird der Lack mit je 0,7 ml mittels spin coating auf einem schwarz lackierten Edelstahlblech oder einem mit Ethanol gereinigten Edelstahl Substrat aufgebracht und bei 120 °C für 3 h im Ofen ausgehärtet. Es bildet sich eine gut haftende, transparente Beschichtung.

**Formkörper**

**Beispiel 24: Herstellung Formkörper PR-171127-/PR-171121- x% SiO$_2$ / GPTES**

Formkörper mit der Größe von 25 mm x 25 mm x 1 mm (für DE-Spektroskopie) bzw. 20 mm x 10 mm x 1 mm (für DMTA-Messungen Figuren 8, 9 und 10) werden in Gießformen aus PTFE hergestellt. Die Gießformen werden jeweils mit den Mischungen aus den Beispielen 6-11 vorsichtig luftblasenfrei gefüllt und das Lösungsmittel 1 h bei 300 mbar und 60 °C im Vakuumtrockenschrank entfernt, ohne die Vernetzungsreaktion zu starten. Dieser Vorgang wird insgesamt zehn Mal wiederholt, bis der lösungsmittelfreie Formkörper eine Dicke von ca. 1 mm erreicht hat. Anschließend wird der gesamte Schichtaufbau über 12 h bei 100 mbar und 60°C im Vakuumtrockenschrank getrocknet, um restliches Lösungsmittel zu entfernen. Die Endaushärtung der Mischungen in der Gießform erfolgt anschließend über 30 h bei 120°C. Man erhält einen transparenten leicht gelblichen Formkörper.

**Beispiel 25: Herstellung Formkörper PR-171204-/PR-171213- x% MPS-Hydrolysat**

Formkörper mit der Größe von 25 mm x 25 mm x 1 mm (für DE-Spektroskopie) bzw. 20 mm x 10 mm x 1 mm (für DMTA-Messungen Figur 11) werden in Gießformen aus PTFE hergestellt. Die Gießformen werden jeweils mit den Mischungen aus den Beispielen 12-16 vorsichtig luftblasenfrei gefüllt und das Lösungsmittel 1 h bei 300 mbar und 60 °C im Vakuumtrockenschrank entfernt, ohne die Vernetzungsreaktion zu starten. Dieser Vorgang wird insgesamt zehn Mal wiederholt, bis der lösungsmittelfreie Formkörper eine Dicke von ca. 1 mm erreicht hat. Anschließend wird der gesamte Schichtaufbau über 12 h bei 100 mbar und 60°C im Vakuumtrockenschrank getrocknet, um restliches Lösungsmittel zu entfernen. Die Endaushärtung der Mischungen in der Gießform erfolgt anschließend über 30 h bei 120°C. Man erhält einen transparenten leicht gelblichen Formkörper.

**Beispiel 26: Herstellung Formkörper PR-180111-/PR-180118- x% CeO$_2$ / MPS**

Formkörper mit der Größe von 25 mm x 25 mm x 1 mm (für DE-Spektroskopie) bzw. 20 mm x 10 mm x 1 mm (für DMTA-Messungen) werden in Gießformen aus PTFE hergestellt. Die Gießformen werden jeweils mit den Mischungen aus den Beispielen 17-21 vorsichtig luftblasenfrei gefüllt und das Lösungsmittel 1 h bei 300 mbar und 60 °C im Vakuumtrockenschrank entfernt, ohne die Vernetzungsreaktion zu starten. Dieser Vorgang wird insgesamt zehn Mal wiederholt, bis der lösungsmittelfreie Formkörper eine Dicke von ca. 1 mm erreicht hat. Anschließend wird der gesamte Schichtaufbau über 12 h bei 100 mbar und 60°C im Vakuumtrockenschrank getrocknet, um restliches Lösungsmittel zu entfernen. Die Endaushärtung der Mischungen in der Gießform erfolgt anschließend über 30 h bei 120°C. Man erhält einen transparenten leicht gelblichen Formkörper.

**Beispiel 27: PR-S-180124-bru-1 mit Hydrophobierung am CD, binäres System**

Es wurden 0,104 g PR_bru010* in 0,412 g MPA und 0,821 g Chlorbenzol gelöst und mit 0,308 g Hexylisocyanat Stammlösung (10 Gew.-% in MPA) versetzt, für 22 h bei 120 °C unter Stickstoff gerührt. Die Lösungsmittel wurden im Hochvakuum entfernt. Der Rückstand wurde in 0,329 g MPA gelöst und für 5 min gerührt. Nach Zugabe von 0,142 g Vernetzer Desmodur N 3900 Stammlösung (10 Gew.-% Desmodur N 3900 in MPA) wurde nochmals 5 min durchmischt. Die resultierende Mischung hat einen Feststoffgehalt von 20 Gew.-% und eine Gesamtmasse von 0,57 g. Im Anschluss wird der Lack mit je 0,25 ml mittels spin coating auf einem schwarz lackierten Edelstahlblech oder einem mit Ethanol gereinigten Edelstahl Substrat aufgebracht und bei 120 °C für 3 h im Ofen ausgehärtet. Es bildet sich eine gut haftende, transparente Beschichtung.

**Beispiel 28: PR-S-180206_bru-1 Hydrophobierung am CD mit Methylacrylat, ternäres System**

Es wurden 0,1 g PR_bru008b* in 2,45 g Pyridin (abs.) gelöst, mit 0,0032 g Methacrylsäureanhydrid versetzt und für 24 h bei 60 °C unter Schutzgas gerührt. Die Lösungsmittel wurden über Destillation entfernt. Der Rückstand wurde mit 0,394 g MPA gelöst. Nach 5 min Rühren werden 0,177 g Campherchinon und 0,206 g Ethyl-4-Dimethylaminobenzoat zur Vernetzung (50 mol % zur eingesetzten Methacrylsäure) hinzugegeben und nochmals 5 min durchmischt. Die resultierende Mischung hat einen Feststoffgehalt von 20 Gew.-% und eine Gesamtmasse von 0,51 g. Im Anschluss wird der Lack mit je 0,20 ml mittels spin coating auf einem schwarz lackierten Edelstahlblech oder einem mit Ethanol gereinigten Edelstahl Substrat aufgebracht und für 2 min mit einer Quecksilberdampflampe ausgehärtet. Es bildet sich eine gut haftende, transparente Beschichtung.

**Zeit-Temperatur-Abhängigkeit der Selbstheilung**

Dazu wurde bei unterschiedlichen Temperaturen die Zeit (t) bis zum Verschwinden von Kratzern (Kratzertiefe ca. 0,8 $\mu$m -1,2 $\mu$m (nach Scratchtest mit 50g).

Tabelle 1 zeigt die Ergebnisse für PR modifiziert mit MPS-Hydrolysat (Messung auf Schwarzlack).

Tabelle 2 zeigt die Ergebnisse für PR modifiziert mit $CeO_2$/MPS-Hydrolysat (Messung auf Schwarzlack).

Tabelle 3 zeigt die Ergebnisse für PR modifiziert mit $SiO_2$/GPTES (Messung auf Schwarzlack).

Tabelle 4 zeigt die Ergebnisse für die hydrophobierten Systeme.

Es zeigt sich, dass die Zugabe von Komponente b) die Selbstheilungsfähigkeit des Materials nicht einschränkt und zum Teil sogar verbessert. Dies zeigt sich auch in den in Figur 7 gemessenen Werten.

Tabelle 5 zeigt die Ergebnisse der Messung des Kontaktwinkels (Messung auf Edelstahl) gegen $H_2O$ für PR modifiziert mit $SiO_2$/GPTES ohne und mit Hydrophobisierung an der Polymermatrix.

Von den Proben wurde die Mikrohärte bei 20 °C gemessen (Eindringtiefe: 1 $\mu$m, HM: Martenshärte, $E_{red}$: reduzierter E-Modul, $HU_{pl}$: plastische Härte (= Widerstand gegen plastische Verformung)). Die Tabellen 6, 7 und 8 zeigen die Ergebnisse für PR modifiziert mit MPS-Hydrolysat (Messung auf Edelstahl, Tabelle 6, Figur 13), PR modifiziert mit $CeO_2$/MPS-Hydrolysat (Messung auf Edelstahl, Tabelle 7, Figur 14) und PR modifiziert mit $SiO_2$/GPTES (Messung auf Edelstahl, Tabelle 8, Figur 15).

Figur 7 zeigt $T_g$-Messungen (Maximum tan $\delta$-Signal, oben) und Maximalwert der Dämpfung bei $T_g$ (tan $\delta$ max, unten) für Beschichtungen mit unterschiedlichen Gehalten $SiO_2$ / GPTES und $CeO_2$ / MPS.

Die Figuren 8, 9, 10 und 11 zeigen DE-Spektroskopie für Proben ansteigendem Gehalt an 0 % $SiO_2$ (Figuren 8, 9 und 10) sowie 5 % MPS-Hydrolysat (Figur 11).

Figur 12 zeigt die Ergebnisse der UV-Bewitterung. Die Proben mit Komponente b) zeigten eine sehr gute Stabilität. Dabei steht MOx für den Anteil der Komponente b).

Tabelle 1

| System | MPS / Gew.-% | t / s bei 80 °C | t / s bei 90 °C | t / s bei 100 °C |
|---|---|---|---|---|
| PR-S-171204-bru-1 | 0 | | 480 | 160 |
| PR-S-171204-bru-2 | 1 | | 1200 | 480 |
| PR-S-171204-bru-3 | 5 | | 180 | 60 |
| PR-S-171213-bru-1 | 10 | | 120 | 90 |
| PR-S-171213-bru-2 | 20 | | | 360 |
| PR-S-171213-bru-3 | 30 | | | 480 |

**EP 3 774 998 B1**

Tabelle 2

| System | $CeO_2$ / Gew.-% | t / s bei 80 °C | t / s bei 90 °C | t / s bei 100 °C |
|---|---|---|---|---|
| PR-S-180111-bru-1 | 0 | | 840 | 100 |
| PR-S-180111-bru-2 | 1 | | 420 | 240 |
| PR-S-180111-bru-3 | 5 | | 300 | 60 |
| PR-S-180118-bru-1 | 10 | | 480 | 150 |
| PR-S-180118-bru-2 | 20 | | 720 | 180 |
| PR-S-180118-bru-3 | 30 | | >1800 | 180 |

Tabelle 3

| System | $SiO_2$ / Gew.-% | t / s bei 80 °C | t / s bei 90 °C | t / s bei 100 °C |
|---|---|---|---|---|
| PR-S-171214-bru-1 | 0 | 840 | 70 | 40 |
| PR-S-171121-bru-1 | 1 | 840 | 80 | 70 |
| PR-S-171121-bru-2 | 5 | 1200 | 180 | 100 |
| PR-S-171127-bru-1 | 10 | | 720 | 160 |
| PR-S-171127-bru-2 | 20 | | | 300 |
| PR-S-171127-bru-3 | 30 | | | >1800 |

Tabelle 4

| System | $SiO_2$ / Gew.-% | t / s bei 80 °C | t / s bei 90 °C | t / s bei 100 °C |
|---|---|---|---|---|
| PR-S-171214-bru-1 | 0 | 840 | 70 | 40 |
| PR-S-171127-bru-1 | 10 | | 720 | 160 |
| PR-S-180102-bru-1 Hex | 0 | | | |
| PR-S-18 010 6-bru-1 Hex | 10 | | 300 | 240 |

Tabelle 5

| System | Hydrophobierung | $SiO_2$ / Gew.-% | KW ($H_2O$) / ° |
|---|---|---|---|
| PR-S-171214-bru-1 | - | 0 | 61 ± 3 |
| PR-S-180102-bru-1 | Hexylisocyanat | 0 | 86 ± 1 |
| PR-S-180106-bru-1 | Hexylisocyanat | 10 | 94 ± 2 |

Tabelle 6

| System | MPS / Gew.-% | HM / MPa | $E_{red}$ / MPa | $HU_{pl}$ / MPa |
|---|---|---|---|---|
| PR-S-171204-bru-1 | 0 | 239 ± 22 | 8340 ± 2300 | 308 ± 15 |
| PR-S-171204-bru-2 | 1 | 243 ± 4 | 8180 ± 210 | 314 ± 5 |
| PR-S-171204-bru-3 | 5 | 237 ± 21 | 8700 ± 1870 | 297 ± 14 |
| PR-S-171213-bru-1 | 10 | 169 ± 9 | 9200 ± 410 | 178 ± 15 |
| PR-S-171213-bru-2 | 20 | 96 ± 3 | 18800 ± 3500 | 86 ± 4 |

(fortgesetzt)

| System | MPS / Gew.-% | HM / MPa | $E_{red}$ / MPa | $HU_{pl}$ / MPa |
|---|---|---|---|---|
| PR-S-171213-bru-3 | 30 | 107 $\pm$ 5 | 11850 $\pm$ 1300 | 99 $\pm$ 5 |

Tabelle 7

| System | $CeO_2$ / Gew.-% | HM / MPa | $E_{red}$ / MPa | $HU_{pl}$ / MPa |
|---|---|---|---|---|
| PR-S-180111-bru-1 | 0 | 242 $\pm$ 26 | 9980 $\pm$ 2550 | 285 $\pm$ 18 |
| PR-S-180111-bru-2 | 1 | 266 $\pm$ 22 | 9930 $\pm$ 2120 | 329 $\pm$ 15 |
| PR-S-180111-bru-3 | 5 | 234 $\pm$ 15 | 8490 $\pm$ 1030 | 292 $\pm$ 12 |
| PR-S-180118-bru-1 | 10 | 195 $\pm$ 10 | 9010 $\pm$ 1010 | 217 $\pm$ 10 |
| PR-S-180118-bru-2 | 20 | 74 $\pm$ 27 | n.b. | n.b. |
| PR-S-180118-bru-3 | 30 | 75 $\pm$ 9 | 18500 $\pm$ 3160 | 68 $\pm$ 8 |

Tabelle 8

| System | $SiO_2$ / Gew.-% | HM / MPa | $E_{red}$ / MPa | $HU_{pl}$ / MPa |
|---|---|---|---|---|
| PR-S-171214-bru-1 | 0 | 154 $\pm$ 4 | 5750 $\pm$ 153 | 178 $\pm$ 6 |
| PR-S-171121-bru-1 | 1 | 201 $\pm$ 10 | 6500 $\pm$ 370 | 260 $\pm$ 18 |
| PR-S-171121-bru-2 | 5 | 246 $\pm$ 42 | 9910 $\pm$ 4250 | 304 $\pm$ 47 |
| PR-S-171127-bru-1 | 10 | 287 $\pm$ 57 | 15630 $\pm$ 7280 | 316 $\pm$ 39 |
| PR-S-171127-bru-2 | 20 | 258 $\pm$ 34 | 10540 $\pm$ 2650 | 306 $\pm$ 26 |
| PR-S-171127-bru-3 | 30 | 230 $\pm$ 27 | 9166 $\pm$ 2890 | 273 $\pm$ 19 |

Tabelle 9

| Beispiel Nr. | Komponente b) | Soll-Feststoffgehalt an Komponente b) [Gew. -%] | Feststoffgehalt an Komponente b) [Gew. -%] |
|---|---|---|---|
| 7 | $SiO_2$/GPTES | 1 | 1,11 |
| 8 | $SiO_2$/GPTES | 5 | 5,29 |
| 9 | $SiO_2$/GPTES | 10 | 10,05 |
| 10 | $SiO_2$/GPTES | 20 | 18,25 |
| 11 | $SiO_2$/GPTES | 30 | 25,1 |
| 12 | MPS-Hydrolysat | 1 | 0,99 |
| 13 | MPS-Hydrolysat | 5 | 4,76 |
| 14 | MPS-Hydrolysat | 10 | 9,1 |
| 15 | MPS-Hydrolysat | 20 | 16,66 |
| 16 | MPS-Hydrolysat | 30 | 23,08 |
| 17 | $CeO_2$/MPS | 1 | 1,01 |
| 18 | $CeO_2$/MPS | 5 | 4,95 |
| 19 | $CeO_2$/MPS | 10 | 8,99 |
| 20 | $CeO_2$/MPS | 20 | 16,71 |

(fortgesetzt)

| Beispiel Nr. | Komponente b) | Soll-Feststoffgehalt an Komponente b) [Gew. -%] | Feststoffgehalt an Komponente b) [Gew. -%] |
|---|---|---|---|
| 21 | CeO$_2$/MPS | 30 | 23,11 |

zitierte Literatur

A. Rekondo, R. Martin, A. R. de Luzuriaga, G. Cabañero, H. J. Grande, und I. Odriozola, "Catalyst-free room-temperature self-healing elastomers based on aromatic disulfide metathesis", Mater. Horiz., Bd. 1, Nr. 2, S. 237-240, Feb. 2014.

R. Martin, A. Rekondo, A. R. de Luzuriaga, G. Cabañero, H. J. Grande, und I. Odriozola, "The processability of a poly(urea-urethane) elastomer reversibly crosslinked with aromatic disulfide bridges", J. Mater. Chem. A, Bd. 2, Nr. 16, S. 5710-5715, März 2014.

A. Susa, R. K. Bose, A. M. Grande, S. van der Zwaag, und S. J. Garcia, "Effect of the Dianhydride/Branched Diamine Ratio on the Architecture and Room Temperature Healing Behavior of Polyetherimides", ACS Appl. Mater. Interfaces, Bd. 8, Nr. 49, S. 34068-34079, Dez. 2016.

Y. Amamoto, J. Kamada, H. Otsuka, A. Takahara, und K. Matyjaszewski, "Repeatable Photoinduced Self-Healing of Covalently Cross-Linked Polymers through Reshuffling of Trithiocarbonate Units", Angew. Chem. Int. Ed., Bd. 50, Nr. 7, S. 1660-1663, Feb. 2011.

G. A. Williams, R. Ishige, O. R. Cromwell, J. Chung, A. Takahara, und Z. Guan, "Mechanically Robust and Self-Healable Superlattice Nanocomposites by Self-Assembly of Single-Component "Sticky" Polymer-Grafted Nanoparticles", Adv. Mater., Bd. 27, Nr. 26, S. 3934-3941, Juli 2015.

K. Kato und K. Ito, "Dynamic transition between rubber and sliding states attributed to slidable cross-links", Soft Matter, Bd. 7, Nr. 19, S. 8737-8740, Sep. 2011.

X. Li, H. Kang, J. Shen, L. Zhang, T. Nishi, und K. Ito, "Miscibility, intramolecular specific interactions and mechanical properties of a DGEBA based epoxy resin toughened with a sliding graft copolymer", Chin J Polym Sci, Bd. 33, Nr. 3, S. 433-443, März 2015.

K. Kato, T. Yasuda, und K. Ito, "Peculiar elasticity and strain hardening attributable to counteracting entropy of chain and ring in slide-ring gels", Polymer, Bd. 55, Nr. 10, S. 2614-2619, Mai 2014.

K. Kato, T. Mizusawa, H. Yokoyama, und K. Ito, "Polyrotaxane Glass: Peculiar Mechanics Attributable to the Isolated Dynamics of Different Components", J. Phys. Chem. Lett., Bd. 6, Nr. 20, S. 4043-4048, Okt. 2015.

J. Araki, T. Kataoka, und K. Ito, "Preparation of a "sliding graft copolymer", an organic solvent-soluble polyrotaxane containing mobile side chains, and its application for a cross-linked elastomeric supramolecular film", Soft Matter, Bd. 4, Nr. 2, S. 245-249, Jan. 2008.

EP02123681B1

K. Kato, D. Matsui, K. Mayumi, und K. Ito, "Synthesis, structure, and mechanical properties of silica nanocomposite polyrotaxane qels", Beilstein Journal of Organic Chemistry, Bd. 11, Nr. 1, S. 2194-2201, Nov. 2015.

[L. Jiang, K. Kato, K. Mayumi, H. Yokoyama und K. Ito, "One-Pot Synthesis and Characterization of Polyrotaxane-Silica Hybrid Aerogel", ACS Macro Letters, Bd. 6, Nr. 3, S. 281-286, 6. März 2017.]

[T. Goto, M. Lida, H. Tan, C. Liu, K. Mayumi, R. Maeda, K. Kitahara, K. Hatakeyama, T. Ito, Y. Shimizu, H. Yokoyama, K. Kimura, K. Ito, Y. Hakuta and K. Terashima, " Thermally conductive tough flexible elastomers as composite of slide-ring materials and surface modified boron nitride particles via plasma in solution", APPLIED PHYSICS LETTERS, Bd. 112, Nr. 10, S.1-5, 5. März 2018.]

[K. Soleimani, A. D. Tehrani, M. Adeli, "Preparation of new GO-based slide ring hydrogel through a convenient one-pot approach as methylene blue absorbent", Carbohydrate Polymers, Bd. 187, S. 94-101, 31. Januar 2018.]

EP2397527A1

EP2787010A1

EP2857440A1

EP2949709A1

WO1997009354A1

WO2001038408A2

WO2016202906A1

**Patentansprüche**

1. Zusammensetzung für ein selbstheilendes Kompositmaterial umfassend:

   a) mindestens ein Polyrotaxan umfassend ein Copolymer und darauf aufgefädelte ringförmige Moleküle, wobei mindestens ein ringförmiges Molekül mindestens eine funktionelle Gruppe (A) aufweist, wobei das Polyrotaxan mindestens ein ringförmiges Molekül umfasst, welches auf das Copolymer aufgefädelt ist, wobei das Copolymer ein nicht-ionisches Copolymer ist und mindestens (a) strukturelle Einheiten abgeleitet von einem ersten polymerisierbaren Monomer mit einer Stoppergruppe und mindestens (b) strukturelle Einheiten abgeleitet von einem zweiten polymerisierbaren Monomer, aufweist, wobei die strukturellen Einheiten abgeleitet von dem ersten Monomer mit einer Stoppergruppe mindestens teilweise an den Enden der Polymerkette des Copolymers angeordnet sind, und die Stoppergruppen das ringförmige Molekül davon abhalten, sich vom Copolymer abzulösen;
   b) mindestens ein organisch modifiziertes anorganisches Hybridmaterial, welches funktionelle Gruppen (B) umfasst oder mindestens eine Art von oberflächenmodifizierten anorganischen Partikeln, welche an ihrer Oberfläche funktionelle Gruppen (B) aufweisen;
   wobei mindestens zwei der aufgefädelten ringförmigen Moleküle durch Verknüpfung der funktionellen Gruppen (A) und (B) vernetzt werden können,
   wobei die Zusammensetzung einen Vernetzer umfasst, welcher mindestens zwei funktionelle Gruppen umfasst, welche eine kovalente Bindung zu den ringförmigen Molekülen bilden können.

2. Zusammensetzung nach Anspruch 1, **dadurch gekennzeichnet, dass**
   das ringförmige Molekül Cyclodextrin oder ein Cyclodextrinderivat ist.

3. Zusammensetzung nach einem der Ansprüche 1 oder 2,
   **dadurch gekennzeichnet, dass**
   das organisch modifizierte anorganische Hybridmaterial ein Polyorganosiloxan umfasst.

4. Zusammensetzung nach einem der Ansprüche 1 bis 3, **dadurch gekennzeichnet, dass**
   die Zusammensetzung einen Vernetzer umfasst, welcher mindestens zwei funktionelle Gruppen umfasst, und geeignet ist sowohl mit den funktionellen Gruppen (A) als auch mit den funktionellen Gruppen (B) eine Bindung einzugehen und diese so untereinander und miteinander zu vernetzen.

5. Zusammensetzung nach einem der Ansprüche 1 bis 4, **dadurch gekennzeichnet, dass**
   die anorganischen Partikel keramische Partikel sind.

6. Zusammensetzung nach einem der Ansprüche 1 bis 5, **dadurch gekennzeichnet, dass**

die funktionellen Gruppen (A) ausgewählt sind aus Hydroxylgruppen, Thiolgruppen, Carbonsäuregruppen, Anhydridgruppen, Isocyanatgruppen, Aminogruppen, Monoalkylaminogruppen, Isocyanogruppen, Acrylatgruppen, Methacrylatgruppen, Aldehydgruppen oder Vorstufen davon.

7. Zusammensetzung nach einem der Ansprüche 1 bis 6, **dadurch gekennzeichnet, dass** die funktionellen Gruppen (B) ausgewählt sind aus Hydroxylgruppen, Thiolgruppen, Carbonsäuregruppen, Anhydridgruppen, Isocyanatgruppen, Aminogruppen, Monoalkylaminogruppen, Isocyanogruppen, Acrylatgruppen, Methacrylatgruppen, Aldehydgruppen oder Vorstufen davon.

8. Verfahren zur Herstellung des Kompositmaterial, **dadurch gekennzeichnet, dass**
eine Zusammensetzung nach einem der Ansprüche 1 bis 7 bereitgestellt und gehärtet wird.

9. Kompositmaterial erhalten durch Härtung einer Zusammensetzung nach einem der Ansprüche 1 bis 7.

10. Selbstheilende Oberfläche umfassend ein Kompositmaterial nach Anspruch 9.

11. Formkörper aus einem Kompositmaterial nach Anspruch 9.


**Claims**

1. Composition for a self-healing composite material, comprising:

   a) at least one polyrotaxane comprising a copolymer and ring-shaped molecules threaded thereon, with at least one ring-shaped molecule having at least one functional group (A), where the polyrotaxane comprises at least one ring-shaped molecule threaded onto the copolymer, the copolymer being a nonionic copolymer, and at least comprises (a) structural units derived from a first polymerizable monomer having a stopper group, and at least (b) structural units derived from a second polymerizable monomer, where the structural units derived from the first monomer having a stopper group are disposed at least partly at the ends of the polymer chain of the copolymer, and the stopper groups prevent the ring-shaped molecule from detaching from the copolymer;
   b) at least one organically modified inorganic hybrid material which comprises functional groups (B), or at least one kind of surface-modified inorganic particles which on their surface have functional groups (B); where at least two of the threaded ring-shaped molecules can be crosslinked by linking of the functional groups (A) and (B),

   where the composition comprises a crosslinker which comprises at least two functional groups which are able to form a covalent bond to the ring-shaped molecules.

2. Composition according to Claim 1, **characterized in that**
the ring-shaped molecule is cyclodextrin or a cyclodextrin derivative.

3. Composition according to either of Claims 1 and 2,
**characterized in that**
the organically modified inorganic hybrid material comprises a polyorganosiloxane.

4. Composition according to any of Claims 1 to 3,
**characterized in that**
the composition comprises a crosslinker which comprises at least two functional groups and is suitable for entering into a bond both with the functional groups (A) and with the functional groups (B) and so for crosslinking them with one another and to one another.

5. Composition according to any of Claims 1 to 4,
**characterized in that**
the inorganic particles are ceramic particles.

6. Composition according to any of Claims 1 to 5,
**characterized in that**
the functional groups (A) are selected from hydroxyl groups, thiol groups, carboxylic acid groups, anhydride groups, isocyanate groups, amino groups, monoalkylamino groups, isocyano groups, acrylate groups, methacrylate groups, aldehyde groups, or precursors thereof.

7. Composition according to any of Claims 1 to 6,
**characterized in that**
the functional groups (B) are selected from hydroxyl groups, thiol groups, carboxylic acid groups, anhydride groups, isocyanate groups, amino groups, monoalkylamino groups, isocyano groups, acrylate groups, methacrylate groups, aldehyde groups, or precursors thereof.

8. Method for producing the composite material,
**characterized in that**
a composition according to any of Claims 1 to 7 is provided and cured.

9. Composite material obtained by curing a composition according to any of Claims 1 to 7.

10. Self-healing surface comprising a composite material according to Claim 9.

11. Shaped article composed of a composite material according to Claim 9.


**Revendications**

1. Composition pour un matériau composite autocicatrisant, comprenant :

   a) au moins un polyrotaxane comprenant un copolymère et des molécules annulaires enfilées sur celui-ci, au moins une molécule annulaire présentant au moins un groupe fonctionnel (A), le polyrotaxane comprenant au moins une molécule annulaire, qui est enfilée sur le copolymère, le copolymère étant un copolymère non ionique, et au moins comprend (a) des motifs structuraux dérivés d'un premier monomère polymérisable présentant un groupe d'arrêt et au moins (b) des motifs structuraux dérivés d'un deuxième monomère polymérisable, les motifs structuraux dérivés du premier monomère présentant un groupe d'arrêt étant agencés au moins partiellement au niveau des extrémités de la chaîne polymère du copolymère et les groupes d'arrêt empêchant la molécule annulaire de se détacher du copolymère ;
   b) au moins un matériau hybride inorganique modifié de manière organique, qui comprend des groupes fonctionnels (B) ou au moins un type de particules inorganiques modifiées en surface, qui présentent des groupes fonctionnels (B) en leur surface ;

   au moins deux des molécules annulaires enfilées pouvant être réticulés par liaison des groupes fonctionnels (A) et (B), la composition comprenant un agent de réticulation qui comprend au moins deux groupes fonctionnels qui peuvent former une liaison covalente avec les molécules annulaires.

2. Composition selon la revendication 1, **caractérisée en ce que** la molécule annulaire est une cyclodextrine ou un dérivé de cyclodextrine.

3. Composition selon l'une quelconque des revendications 1 ou 2, **caractérisée en ce que** le matériau hybride inorganique modifié de manière organique comprend un polyorganosiloxane.

4. Composition selon l'une quelconque des revendications 1 à 3, **caractérisée en ce que** la composition comprend un agent de réticulation qui comprend au moins deux groupes fonctionnels et qui convient pour former une liaison, aussi bien avec les groupes fonctionnels (A) qu'avec les groupes fonctionnels (B) et qui les réticule ainsi entre eux.

5. Composition selon l'une quelconque des revendications 1 à 4, **caractérisée en ce que** les particules inorganiques sont des particules céramiques.

6. Composition selon l'une quelconque des revendications 1 à 5, **caractérisée en ce que** les groupes fonctionnels (A) sont choisis parmi les groupes hydroxyle, les groupes thiol, les groupes acide carboxylique, les groupes anhydride, les groupes isocyanate, les groupes amino, les groupes monoalkylamino, les groupes isocyano, les groupes acrylate, les groupes méthacrylate, les groupes aldéhyde ou leurs précurseurs.

7. Composition selon l'une quelconque des revendications 1 à 6, **caractérisée en ce que** les groupes fonctionnels (B) sont choisis parmi les groupes hydroxyle, les groupes thiol, les groupes acide carboxylique, les groupes anhydride, les groupes isocyanate, les groupes amino, les groupes monoalkylamino, les groupes isocyano, les groupes acrylate, les groupes méthacrylate, les groupes aldéhyde ou leurs précurseurs.

**8.** Procédé pour la préparation du matériau composite, **caractérisé en ce qu'**une composition selon l'une quelconque des revendications 1 à 7 est préparée et durcie.

**9.** Matériau composite obtenu par durcissement d'une composition selon l'une quelconque des revendications 1 à 7.

**10.** Surface autocicatrisante comprenant un matériau composite selon la revendication 9.

**11.** Corps moulé constitué par un matériau composite selon la revendication 9.

Fig. 1 (oben)

Fig. 1 (unten)

Fig. 2 (oben)

Fig. 2 (unten)

Fig. 3 (oben)

Fig. 3 (unten)

Fig. 4 (oben)

HFnon-rev [mW]

Nicht reversierender Wärmestrom

Ts [°C]

- PR-171204-bru-1, 0% 008a*
- PR-171204-bru-2, 1% MPS-Hydrolysat
- PR-171204-bru-3, 5% MPS-Hydrolysat
- PR-171213-bru-1, 10% MPS-Hydrolysat
- PR-171213-bru-2, 20% MPS-Hydrolysat
- PR-171213-bru-3, 30% MPS-Hydrolysat

Fig. 4 (unten)

Fig. 5(oben)

Fig. 5 (unten)

Fig. 6 (oben)

Fig. 6 (unten)

Fig. 7 (oben)

Fig. 7 (unten)

Fig. 8 (oben)

Fig. 8 (unten)

Fig. 9 (oben)

Fig. 9 (unten)

Fig. 10 (oben)

Fig. 10 (unten)

Fig. 11 (oben)

Fig. 11 (unten)

| System / Zeit im Suntest | MOx 0 % | MOx 1 % | MOx 5 % | MOx 10 % | MOx 20 % | MOx 30 % |
|---|---|---|---|---|---|---|
| MPS 0h | INM | INM | INM | | | |
| MPS 48h | | | INM | | | |
| CeO$_2$-MPS 0h | INM | INM | INM | INM | INM | INM |
| CeO$_2$-MPS 48h | | | | | | |
| SiO$_2$-GPTES 0h | INM | INM | INM | INM | INM | INM |
| SiO$_2$-GPTES 48h | INM | | INM | | | |

Fig. 12

Fig. 13

Fig. 14

HM [MPa]

SiO$_2$ -Gehalt / Gew.-%

Hupl [MPa]

HM [MPa]

Hupl [MPa]

Fig. 15

Fig. 16

Fig. 17

Fig. 18

ERSATZBLATT (REGEL 26)

Fig. 19

EP 3 774 998 B1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 02123681 B1
- EP 2397527 A1
- EP 2787010 A1
- EP 2857440 A1
- EP 2949709 A1
- WO 1997009354 A1
- WO 2001038408 A2
- WO 2016202906 A1
- EP 16205619
- WO 9321127 A
- WO 9631572 A
- WO 9851747 A
- DE 19746885

### In der Beschreibung aufgeführte Nicht-Patentliteratur

- **A. REKONDO ; R. MARTIN ; A. R. DE LUZURIAGA ; G. CABAÑERO ; H. J. GRANDE ; I. ODRIOZOLA.** Catalyst-free room-temperature self-healing elastomers based on aromatic disulfide metathesis. *Mater. Horiz.,* Februar 2014, vol. 1 (2), 237-240
- **R. MARTIN ; A. REKONDO ; A. R. DE LUZURIAGA ; G. CABAÑERO ; H. J. GRANDE ; I. ODRIOZOLA.** The processability of a poly(urea-urethane) elastomer reversibly crosslinked with aromatic disulfide bridges. *J. Mater. Chem. A,* Marz 2014, vol. 2 (16), 5710-5715
- **A. SUSA ; R. K. BOSE ; A. M. GRANDE ; S. VAN DER ZWAAG ; S. J. GARCIA.** Effect of the Dianhydride/Branched Diamine Ratio on the Architecture and Room Temperature Healing Behavior of Polyetherimides. *ACS Appl. Mater. Interfaces,* Dezember 2016, vol. 8 (49), 34068-34079
- **Y. AMAMOTO ; J. KAMADA ; H. OTSUKA ; A. TAKAHARA ; K. MATYJASZEWSKI.** Repeatable Photoinduced Self-Healing of Covalently Cross-Linked Polymers through Reshuffling of Trithiocarbonate Units. *Angew. Chem. Int. Ed.,* Februar 2011, vol. 50 (7), 1660-1663
- **G. A. WILLIAMS ; R. ISHIGE ; O. R. CROMWELL ; J. CHUNG ; A. TAKAHARA ; Z. GUAN.** Mechanically Robust and Self-Healable Superlattice Nanocomposites by Self-Assembly of Single-Component ''Sticky'' Polymer-Grafted Nanoparticles. *Adv. Mater.,* Juli 2015, vol. 27 (26), 3934-3941
- **K. KATO ; K. ITO.** Dynamic transition between rubber and sliding states attributed to slidable cross-links. *Soft Matter,* September 2011, vol. 7 (19), 8737-8740
- **X. LI ; H. KANG ; J. SHEN ; L. ZHANG ; T. NISHI ; K. ITO.** Miscibility, intramolecular specific interactions and mechanical properties of a DGEBA based epoxy resin toughened with a sliding graft copolymer. *Chin J Polym Sci,* Marz 2015, vol. 33 (3), 433-443
- **K. KATO ; T. YASUDA ; K. ITO.** Peculiar elasticity and strain hardening attributable to counteracting entropy of chain and ring in slide-ring gels. *Polymer,* Mai 2014, vol. 55 (10), 2614-2619
- **K. KATO ; T. MIZUSAWA ; H. YOKOYAMA ; K. ITO.** Polyrotaxane Glass: Peculiar Mechanics Attributable to the Isolated Dynamics of Different Components. *J. Phys. Chem. Lett.,* Oktober 2015, vol. 6 (20), 4043-4048
- **J. ARAKI ; T. KATAOKA ; K. ITO.** Preparation of a ''sliding graft copolymer'', an organic solvent-soluble polyrotaxane containing mobile side chains, and its application for a cross-linked elastomeric supramolecular film. *Soft Matter,* Januar 2008, vol. 4 (2), 245-249
- **K. KATO ; D. MATSUI ; K. MAYUMI ; K. ITO.** Synthesis, structure, and mechanical properties of silica nanocomposite polyrotaxane gels. *Beilstein Journal of Organic Chemistry,* November 2015, vol. 11 (1), 2194-2201
- **L. JIANG ; K. KATO ; K. MAYUMI ; H. YOKOYAMA ; K. ITO.** One-Pot Synthesis and Characterization of Polyrotaxane-Silica Hybrid Aerogel. *ACS Macro Letters,* 06. Marz 2017, vol. 6 (3), 281-286
- **T. GOTO ; M. LIDA ; H. TAN ; C. LIU ; K. MAYUMI ; R. MAEDA ; K. KITAHARA ; K. HATAKEYAMA ; T. ITO ; Y. SHIMIZU.** Thermally conductive tough flexible elastomers as composite of slide-ring materials and surface modified boron nitride particles via plasma in solution. *APPLIED PHYSICS LETTERS,* 05. Marz 2018, vol. 112 (10), 1-5

- **K. SOLEIMANI ; A. D. TEHRANI ; M. ADELI.** Preparation of new GO-based slide ring hydrogel through a convenient one-pot approach as methylene blue absorbent. *Carbohydrate Polymers,* 31. Januar 2018, vol. 187, 94-101
- *CHEMICAL ABSTRACTS,* 128446-36-6
- **G. KALI ; H. EISENBARTH ; G. WENZ.** One Pot Synthesis of a Polyisoprene Polyrotaxane and Conversion to a Slide-Ring Gel. *Macromol. Rapid. Commun.,* 2016, vol. 37, 67-72
- **DA. WICKS ; Z.W. WICKS JR.** *Prog. Org. Coatings,* 1999, vol. 36, 148-172
- **C.J. BRINKER ; G.W. SCHERER.** Sol-Gel Science - The Physics and Chemistry of Sol-Gel-Processing. Academic Press, 1990

- **K. KATO ; D. MATSUI ; K. MAYUMI ; K. ITO.** Synthesis, structure, and mechanical properties of silica nanocomposite polyrotaxane qels. *Beilstein Journal of Organic Chemistry,* November 2015, vol. 11 (1), 2194-2201
- **T. GOTO, M. LIDA, H. TAN, C. LIU, K. MAYUMI, R. MAEDA, K. KITAHARA, K. HATAKEYAMA, T. ITO, Y. SHIMIZU, H. YOKOYAMA, K. KIMURA, K. ITO, Y. HAKUTA AND K. TERASHIMA.** Thermally conductive tough flexible elastomers as composite of slide-ring materials and surface modified boron nitride particles via plasma in solution. *APPLIED PHYSICS LETTERS,* 05. Marz 2018, vol. 112 (10), 1-5